(19) Europäisches Patentamt / European Patent Office / Office européen des brevets

(11) **EP 4 501 439 A1**

(12) **EUROPEAN PATENT APPLICATION**
published in accordance with Art. 153(4) EPC

(43) Date of publication:
**05.02.2025 Bulletin 2025/06**

(21) Application number: **23780779.7**

(22) Date of filing: **29.03.2023**

(51) International Patent Classification (IPC):
**B01D 59/42** $^{(2006.01)}$ **C02F 1/48** $^{(2023.01)}$

(52) Cooperative Patent Classification (CPC):
**B01D 59/42; C02F 1/48**

(86) International application number:
**PCT/JP2023/012998**

(87) International publication number:
**WO 2023/190771 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022061400**

(71) Applicant: HIROSAKI UNIVERSITY
**Hirosaki-shi, Aomori 036-8560 (JP)**

(72) Inventors:
• **SASAKI Kazuya**
  **Hirosaki-shi, Aomori 036-8560 (JP)**
• **SHINMURA Kiyoto**
  **Hirosaki-shi, Aomori 036-8560 (JP)**
• **TOKUYOSHI Ryoya**
  **Hirosaki-shi, Aomori 036-8560 (JP)**

(74) Representative: **Simmons & Simmons LLP (Munich)**
**Lehel Carré**
**Gewürzmühlstraße 11**
**80538 Munich (DE)**

(54) **LITHIUM ISOTOPE CONCENTRATION DEVICE, MULTI-STAGE LITHIUM ISOTOPE CONCENTRATION DEVICE, AND LITHIUM ISOTOPE CONCENTRATION METHOD**

(57) This lithium-isotope enrichment device 1 comprises a treatment tank 7 which is divided into a supply tank 11 and a recovery tank 12 by means of an electrolyte membrane 2 having lithium ion conductivity, and recovers, into the recovery tank 12, an aqueous solution ES for the recovery of $^{6}$Li of which the isotope ratio of $^{6}$Li is high from a Li-containing aqueous solution FS stored in the supply tank 11. While a power supply 51, which is connected between a second electrode 32 of a porous structure provided on a recovery tank 12-side surface of the electrolyte membrane 2 and a third electrode 33 provided to be spaced apart from the electrolyte membrane 2 in the recovery tank 12, applies a voltage V1 with the second electrode 32 being made to be positive, the lithium-isotope enrichment device 1 connects a first electrode 31 provided in the supply tank 11 to the second electrode 32.

**FIG. 2**

EP 4 501 439 A1

## Description

### TECHNICAL FIELD

The present invention relates to a lithium isotope enrichment device, a multi-stage lithium isotope enrichment device, and a lithium isotope enrichment method for separating a lithium isotope.

### BACKGROUND ART

Lithium (Li) has two stable isotopes, $^7$Li and $^6$Li, and the natural abundances of these are 92.41 mol% and 7.59 mol%. The properties of $^7$Li having a mass number of 7 and $^6$Li having a mass number of 6 are largely different. For example, $^7$Li is used for adjustment of pH (concentration of hydrogen ions) of coolants of nuclear reactors. On the other hand, $^6$Li is used for production of tritiated hydrogen (tritium), which is a fuel of fusion reactors. For this reason, techniques for enriching or separating one of $^7$Li and $^6$Li into a state where the content of the other is lower have been developed. The amalgam method, the molten salt method, and the distillation method as well as the adsorption method and the electrodialysis method (for example, Patent Literature 1), which are also methods for selectively recovering lithium ions Li$^+$ from seawater, are known.

In comparison with the amalgam method, which uses a large amount of mercury, and the molten salt method and the distillation method, which heat lithium compounds and the like at high temperatures, the adsorption method and the electrodialysis method are relatively excellent from the viewpoints of environmental loads and the like. Meanwhile, these methods utilize the fact that a large amount of $^6$Li$^+$, which has a smaller mass and thus has a higher moving speed, is recovered. These methods have small isotope separation coefficients, and thus have low productivity as enrichment methods. Therefore, the inventors of the present invention have conducted research to utilize a lithium recovery technology (for example, Patent Literatures 2, 3, and 5) for selectively recovering Li from seawater or the like by electrodialysis using an electrolyte membrane having lithium ion conductivity, for the purpose of enriching lithium isotopes. In such Li recovery, the inventors of the present invention have found that the isotope separation coefficient is large only for a short period of time immediately after the start of operation, and invented a method for enhancing the efficiency by intermittently applying a voltage or alternately applying positive and negative voltages (Patent Literature 4, Non-Patent Literature 1).

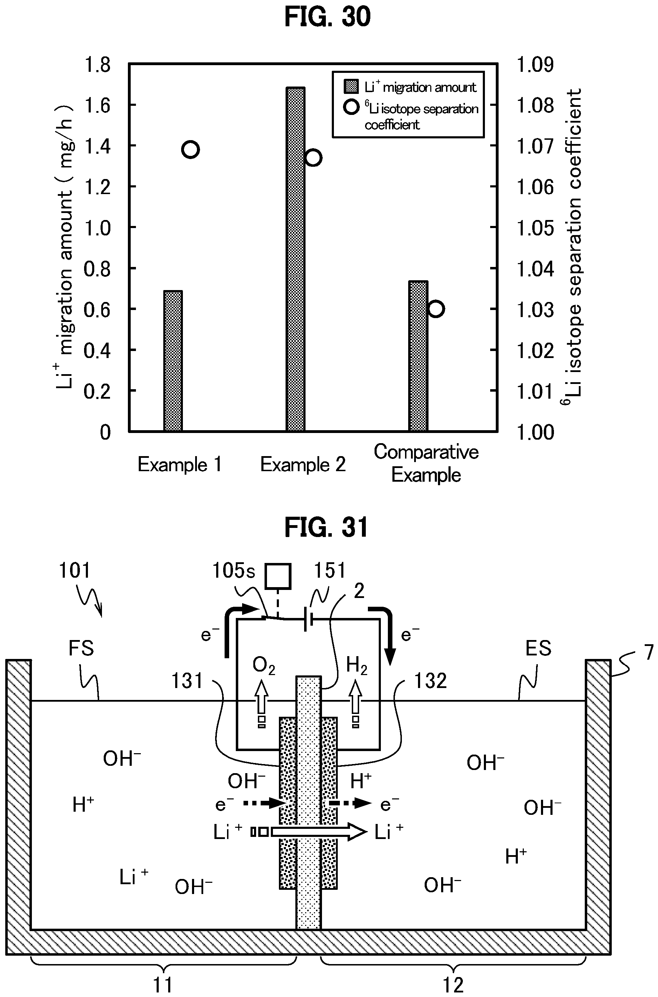

A lithium isotope enrichment method utilizing the lithium recovery technology using electrodialysis will be described with reference to FIG. 31. A lithium isotope enrichment device 101 has a configuration in which a processing tank 7 is partitioned into a supply chamber 11 and a recovery chamber 12 by an electrolyte membrane 2 having electrodes 131 and 132 made of porous membranes attached to both surfaces thereof, and a power supply 151 is connected between the electrodes 131 and 132 with the electrode 131 as a positive electrode. A Li-containing aqueous solution FS such as a lithium hydroxide (LiOH) aqueous solution is fed as a Li source into the supply chamber 11, and a $^6$Li recovery aqueous solution ES such as pure water is fed into the recovery chamber 12.

When a voltage is applied by the power supply 151, the reaction of Formula (1) below occurs near the electrode 131 to generate oxygen (O$_2$) in the Li-containing aqueous solution FS in the supply chamber 11, causing hydroxide ions (OH$^-$) as negative ions to decrease. In the $^6$Li recovery aqueous solution ES in the recovery chamber 12, on the other hand, the reaction of Formula (2) below occurs near the electrode 132 to generate hydrogen (H$_2$), causing OH$^-$ to increase. Then, the reaction of Formula (3) below, where Li$^+$ in the Li-containing aqueous solution FS migrates into the electrolyte membrane 2, and the reaction of Formula (4) below, where Li$^+$ in the electrolyte membrane 2 migrates into the $^6$Li recovery aqueous solution ES, occur to maintain the charge balance in each of the aqueous solutions FS and ES. In each formula, Li$^+$ contained in the electrolyte membrane 2 (electrolyte) is expressed as Li$^+$ (electrolyte).

[Chem. 1]

$$2OH^- \rightarrow H_2O + \frac{1}{2}O_2 \uparrow + 2e^- \quad \cdots (1)$$

$$2H_2O + 2e^- \rightarrow 2OH^- + H_2 \uparrow \quad \cdots (2)$$

$$Li^+ \rightarrow Li^+(electrolyte) \quad \cdots (3)$$

$$Li^+(electrolyte) \rightarrow Li^+ \quad \cdots (4)$$

As described above, the migration amount of $^6$Li$^+$ per hour from the supply chamber 11 side to the recovery chamber 12 side in the electrolyte membrane 2 is greater than that of $^7$Li$^+$. This is particularly noticeable for a short period of time immediately after the start of operation (start of voltage application). Therefore, $^6$Li can be efficiently enriched by connecting a switching element 105s or the like to the power supply 151 to intermittently apply a voltage and alternately repeat short periods of voltage application and application stop (Patent Literature 4, Non-Patent Literature 1).

**CITATION LIST**

**Patent Literature**

    Patent Literature 1: JP5429658
    Patent Literature 2: JP6233877
    Patent Literature 3: JP2019-141807
    Patent Literature 4: JP2019-141808
    Patent Literature 5: WO2023/027190

**Non-Patent Literature**

Non-Patent Literature 1: Shunsuke Honda, Kiyoto Shin-mura, Kazuya Sasaki, "Lithium isotope enrichment by electrochemical pumping using solid lithium electrolytes", Journal of the Ceramic Society of Japan, Volume 126, Issue 5, pp 331-335, May 2018

**SUMMARY OF INVENTION**

**Technical Problem**

The methods described in Patent Literature 4 and the like still have room for further improvement in order to increase the isotope separation coefficient.

The present invention has been made in view of the above-described problems, and an object thereof is to provide a lithium isotope enrichment device, a multi-stage lithium isotope enrichment device, and a lithium isotope enrichment method with higher efficiency by electrodialysis.

**Solution to Problem**

As a result of keen study on the enrichment of lithium isotopes by electrodialysis, the inventors of the present invention have found that the smaller the energy required for Li$^+$ to migrate through the electrolyte decreases, the larger the isotope separation coefficient, and therefore have come up with the idea of minimizing this energy.

Specifically, a lithium isotope enrichment device includes: a lithium ion-conducting electrolyte membrane; a processing tank partitioned by the lithium ion-conducting electrolyte membrane into a first chamber and a second chamber; a first electrode provided in one of the first chamber and the second chamber, and a second electrode with a porous structure provided in contact with a surface of the lithium ion-conducting electrolyte membrane on the other chamber side; a third electrode provided in the other chamber at a distance from the second electrode on the opposite side of the lithium ion-conducting electrolyte membrane; and a power supply that applies the same voltage, with respect to the third electrode, to the first electrode and the second electrode, with the first chamber side being positive, wherein an aqueous solution containing lithium ions having a higher $^6$Li isotope ratio than an aqueous solution containing $^6$Li and $^7$Li in the form of lithium ions in the second chamber from the aqueous solution, which is contained in the first chamber.

A multi-stage lithium isotope enrichment device according to the present invention includes more than or equal to two of the lithium isotope enrichment devices coupled such that the respective processing tanks are integrated, wherein the lithium ion-conducting electrolyte membranes of the lithium isotope enrichment devices are disposed spaced apart from each other so as to partition the integrated processing tank into more than or equal to three chambers, and the second chamber of one of two adjacent lithium isotope enrichment devices also serves as the first chamber of the other.

Another multi-stage lithium isotope enrichment device according to the present invention includes the lithium isotope enrichment device, in which the first electrode is provided in the first chamber, the third electrode is provided in the second chamber, and more than or equal to two of the lithium ion-conducting electrolyte membranes are provided, wherein the processing tank is partitioned into more than or equal to three chambers, the first chamber, more than or equal to one intermediate chamber, and the second chamber in this order, and the second electrode is provided in contact with the lithium ion-conducting electrolyte membrane that separates the first chamber from the adjacent intermediate chamber.

A lithium isotope enrichment method according to the present invention is for recovering, in a processing tank partitioned into a first chamber and a second chamber by a lithium ion-conducting electrolyte membrane, an aqueous solution containing lithium ions having a higher $^6$Li isotope ratio than an aqueous solution containing $^6$Li and $^7$Li in the form of lithium ions in the second chamber from the aqueous solution contained in the first chamber. In the lithium isotope enrichment method, the same voltage is applied, with respect to a third electrode provided in the other chamber so as to be spaced apart from the second electrode on the opposite side of the lithium ion-conducting electrolyte membrane, to a first electrode provided in one of the first and second chambers and a second electrode having a porous structure provided in contact with the surface of the lithium ion-conducting electrolyte membrane on the other chamber side.

**Advantageous Effects of Invention**

The lithium isotope enrichment device and the lithium isotope enrichment method according to the present invention make it possible to safely and productively recover an aqueous solution having a higher isotope ratio of $^6$Li. Furthermore, the multi-stage lithium isotope enrichment device according to the present invention can further increase the isotope ratio of $^6$Li.

**BRIEF DESCRIPTION OF DRAWINGS**

[FIG. 1] FIG. 1 is a schematic diagram showing a configuration of a lithium isotope enrichment device according to a first embodiment of the present invention.
[FIG. 2] FIG. 2 is a schematic diagram of the lithium isotope enrichment device shown in FIG. 1 for explaining electrodialysis of lithium ions in a lithium isotope enrichment method according to the first embodiment of the present invention.
[FIG. 3] FIG. 3 is a circuit diagram of the lithium isotope enrichment device shown in FIG. 1 for explaining the lithium isotope enrichment method according to the first embodiment of the present invention.
[FIG. 4A] FIG. 4A is an enlarged view of a main part of the lithium isotope enrichment device shown in FIG. 1 for explaining a behavior of lithium ions in an initial state in the electrodialysis of the lithium ions.
[FIG. 4B] FIG. 4B is an enlarged view of theA main part of the lithium isotope enrichment device shown in FIG. 1 for explaining a behavior of the lithium ions immediately after start of movement in the electrodialysis of the lithium ions.
[FIG. 4C] FIG. 4C is an enlarged view of the main part of the lithium isotope enrichment device shown in FIG. 1 for explaining a behavior of the lithium ions during movement in the electrodialysis of the lithium ions.
[FIG. 5] FIG. 5 is a model for explaining ion conduction in the electrolyte.
[FIG. 6] FIG. 6 is a graph for explaining a migration amount per hour and applied voltage dependency of an isotope ratio in electrodialysis of lithium ions in a simulation.
[FIG. 7] FIG. 7 is a schematic diagram showing a configuration of a lithium isotope enrichment device and electrodialysis of lithium ions in a lithium isotope enrichment method according to a modification of the first embodiment of the present invention.
[FIG. 8] FIG. 8 is a schematic diagram showing a configuration of a multi-stage lithium isotope enrichment device as the lithium isotope enrichment device according to the modification of the first embodiment of the present invention.
[FIG. 9] FIG. 9 is a schematic diagram showing a configuration of a multi-stage lithium isotope enrichment device according to the first embodiment of the present invention.
[FIG. 10] FIG. 10 is a schematic diagram showing a configuration of a lithium isotope enrichment device according to a second embodiment of the present invention.
[FIG. 11] FIG. 11 is a schematic diagram of the lithium isotope enrichment device shown in FIG. 10 for explaining electrodialysis of lithium ions in a lithium isotope enrichment method.
[FIG. 12] FIG. 12 is a schematic diagram showing a configuration of a lithium isotope enrichment device according to a first modification of the second embodiment of the present invention.
[FIG. 13] FIG. 13 is a schematic diagram of the lithium isotope enrichment device shown in FIG. 12 for explaining electrodialysis of lithium ions in a lithium isotope enrichment method.
[FIG. 14] FIG. 14 is a schematic diagram showing a configuration of a lithium isotope enrichment device according to a second modification of the second embodiment of the present invention.
[FIG. 15] FIG. 15 is a schematic diagram of the lithium isotope enrichment device shown in FIG. 14 for explaining electrodialysis of lithium ions in a lithium isotope enrichment method.
[FIG. 16] FIG. 16 is a schematic diagram showing a configuration of a lithium isotope enrichment device according to a third embodiment of the present invention.
[FIG. 17] FIG. 17 is a time chart showing changes in applied voltage in a lithium isotope enrichment method according to the third embodiment of the present invention.

[FIG. 18] FIG. 18 is a schematic diagram showing a configuration of a multi-stage lithium isotope enrichment device according to the third embodiment of the present invention.

[FIG. 19A] FIG. 19A is a schematic diagram for explaining a lithium isotope enrichment method using the multi-stage lithium isotope enrichment device shown in FIG. 18.

[FIG. 19B] FIG. 19B is a schematic diagram for explaining the lithium isotope enrichment method using the multi-stage lithium isotope enrichment device shown in FIG. 18.

[FIG. 20] FIG. 20 is a schematic diagram showing a configuration of a lithium isotope enrichment device according to a first modification of the third embodiment of the present invention.

[FIG. 21] FIG. 21 is a time chart showing changes in applied voltage in a lithium isotope enrichment method according to the first modification of the third embodiment of the present invention.

[FIG. 22] FIG. 22 is a schematic diagram of the lithium isotope enrichment device shown in FIG. 20 for explaining the lithium isotope enrichment method according to the first modification of the third embodiment of the present invention.

[FIG. 23] FIG. 23 is an enlarged view of a main part of the lithium isotope enrichment device shown in FIG. 20 for explaining a behavior of lithium ions after stop of movement in electrodialysis of the lithium ions.

[FIG. 24] FIG. 24 is a schematic diagram showing another configuration of the lithium isotope enrichment device according to the first modification of the third embodiment of the present invention.

[FIG. 25] FIG. 25 is a time chart showing changes in applied voltage in a lithium isotope enrichment method according to a second modification of the third embodiment of the present invention.

[FIG. 26] FIG. 26 is a schematic diagram showing a configuration of a multi-stage lithium isotope enrichment device according to the first modification of the third embodiment of the present invention.

[FIG. 27A] FIG. 27A is a schematic diagram for explaining a lithium isotope enrichment method using the multi-stage lithium isotope enrichment device shown in FIG. 26.

[FIG. 27B] FIG. 27B is a schematic diagram for explaining the lithium isotope enrichment method using the multi-stage lithium isotope enrichment device shown in FIG. 26.

[FIG. 28] FIG. 28 is a schematic diagram showing a configuration of a multi-stage lithium isotope enrichment device according to the second modification of the second embodiment of the present invention.

[FIG. 29A] FIG. 29A is a schematic diagram for explaining a lithium isotope enrichment method using the multi-stage lithium isotope enrichment device shown in FIG. 28.

[FIG. 29B] FIG. 29B is a schematic diagram for explaining the lithium isotope enrichment method using the multi-stage lithium isotope enrichment device shown in FIG. 28.

[FIG. 29C] FIG. 29C is a schematic diagram for explaining the lithium isotope enrichment method using the multi-stage lithium isotope enrichment device shown in FIG. 28.

[FIG. 30] FIG. 30 is a graph showing lithium ion migration amounts and isotope separation coefficients of lithium according to Example and Comparative Example.

[FIG. 31] FIG. 31 is a schematic diagram of a lithium isotope enrichment device for explaining a lithium isotope enrichment method of the related art using electrodialysis.

## DESCRIPTION OF EMBODIMENTS

Embodiments for implementing a lithium isotope enrichment device, a multi-stage lithium isotope enrichment device, and a lithium isotope enrichment method according to the present invention will be described with reference to the drawings. In the drawings, sizes and the like of specific components may be exaggerated and shapes may be simplified to clarify the description. In the description of each embodiment, the same components as those in the previous embodiment are denoted by the same reference numerals, and descriptions thereof will be omitted as appropriate.

[First Embodiment]

[Lithium Isotope Enrichment device]

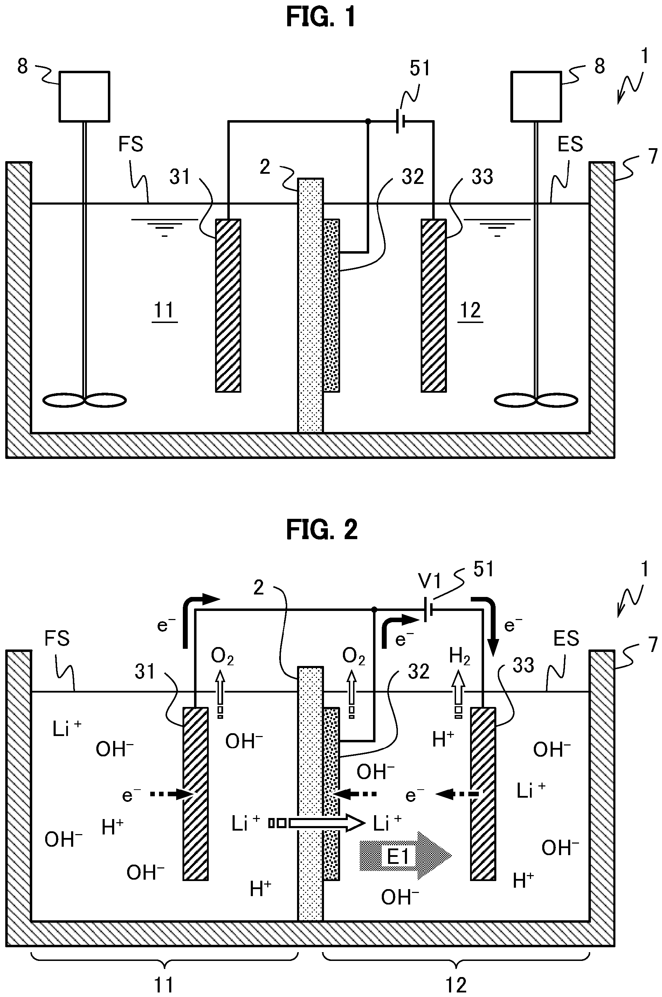

As shown in FIG. 1, a lithium isotope enrichment device 1 according to a first embodiment of the present invention includes a processing tank 7, an electrolyte membrane (lithium ion-conducting electrolyte membrane) 2, a first electrode 31, a second electrode 32, a third electrode 33, a power supply 51, and a stirring device (circulator) 8. The processing tank 7 is partitioned by the electrolyte membrane 2 into a supply chamber (first chamber) 11 which holds a Li-containing aqueous solution FS and a recovery chamber (second chamber) 12 which holds a $^6$Li recovery aqueous solution ES. The first electrode 31 is provided in the supply chamber 11. The second electrode 32 has a porous structure and is applied to a surface of the electrolyte membrane 2 on the recovery chamber 12 side. The third electrode 33 is provided spaced apart from the electrolyte membrane 2 and the second electrode 32 in the recovery chamber 12. The power supply 51 has a positive (+) electrode connected to the first electrode 31 and the second electrode 32, and a negative (-) electrode connected to the third electrode 33. The stirring device 8 circulates the Li-containing aqueous solution FS in the supply chamber 11 and the $^6$Li recovery aqueous solution ES in the recovery chamber 12. Hereinafter, the components included in the lithium isotope enrichment device according to this embodiment will be described.

The processing tank 7 is made of a material that does not undergo deterioration such as corrosion even when coming into contact with the Li-containing aqueous solution FS and the $^6$Li recovery aqueous solution ES. The processing tank 7 only needs to have a volume corresponding to required processing capacity, and its shape and the like are not particularly limited.

The electrolyte membrane 2 is an electrolyte having lithium-ion conductivity, and preferably does not conduct electrons e'. In a case where the Li-containing aqueous solution FS contains metal ions other than Li$^+$, the electrolyte membrane 2 preferably does not conduct these metal ions. The electrolyte membrane 2 is more preferably an electrolyte made of ceramics having these properties, specifically, lithium lanthanum titanium oxide (La$_{2/3-x}$Li$_{3x}$TiO$_3$, also referred to as LLTO) or the like. Such an electrolyte membrane 2 has a certain proportion of lattice defects. Since the size of the lattice defect site is small, the electrolyte membrane 2 does not conduct metal ions having diameters larger than that of Li$^+$. For example, a solid electrolyte having a perovskite (ABO$_3$) structure (A=Li, La, or a void, B=Ti) such as LLTO has voids in part of the A site (A site defects). As described in terms of a lithium isotope enrichment method to be described later, Li$^+$ gets into the A site defects, and Li$^+$ moves between the A site defects in the vicinity. Hereinafter, a site where Li can be present such as the A site is referred to as a Li site, and a Li site having voids is referred to as a Li site defect.

The first electrode 31 and the second electrode 32 are provided to set the same potential between both surfaces of the electrolyte membrane 2 when Li$^+$ moves in the electrolyte membrane 2. The third electrode 33 is an electrode paired up with the first electrode 31 to apply a positive voltage, with respect to the $^6$Li recovery aqueous solution ES, to the Li-containing aqueous solution FS and form a lower potential than the surface (hereinafter referred to as a back surface as appropriate) of the electrolyte membrane 2 in the $^6$Li recovery aqueous solution ES. For this purpose, the first electrode 31 is provided in the supply chamber 11. The second electrode 32 is provided in contact with the surface (back surface) of the electrolyte membrane 2 on the recovery chamber 12 side. The third electrode 33 is disposed in the recovery chamber 12 so as not to come into contact with the electrolyte membrane 2 and the second electrode 32.

The first electrode 31 is provided in the supply chamber 11 and can be disposed spaced apart from the surface of the electrolyte membrane 2 on the supply chamber 11 side (hereinafter referred to as a front surface as appropriate), allowing the Li-containing aqueous solution FS to come into contact with the entire front surface of the electrolyte membrane 2, as shown in FIG. 1 as an example. It is preferable that such a first electrode 31 has a mesh-like shape or the like through which the aqueous solution can pass so as to increase a contact area with the Li-containing aqueous solution FS and to allow the Li-containing aqueous solution FS in contact with the surface of the electrolyte membrane 2 to be constantly replaced in the supply chamber 11. The first electrode 31 is preferably formed of an electrode material that has electron conductivity and is stable even when a voltage is applied in the Li-containing aqueous solution FS, and that also has catalytic activity for the reaction of Formula (1) below. For the first electrode 31, platinum (Pt) is preferable as such an electrode material, or carbon (C) can also be used. The first electrode 31 is, more preferably, made of a material carrying Pt fine particles on the surface thereof, which function as a catalyst.

[Chem. 2]

$$2OH^- \rightarrow H_2O + \frac{1}{2}O_2 \uparrow + 2e^- \quad \cdots (1)$$

The second electrode 32 is provided in contact with the back surface of the electrolyte membrane 2, applies a voltage to a wide area of the electrolyte membrane 2, and has a net-like porous structure that allows the $^6$Li recovery aqueous solution ES to come into contact with a sufficient area of the back surface of the electrolyte membrane 2. The second electrode 32 is preferably formed of an electrode material that has electron conductivity and is stable during the application of a voltage even in the $^6$Li recovery aqueous solution ES that has contained Li$^+$ in the course of the reaction, and that also has catalytic activity for the reaction of Formula (1) below and the reaction of Formula (4) below. The electrode material for the second electrode 32 is more preferably a material that can be easily processed into the shape described above. The second electrode 32 is preferably made of platinum (Pt), for example. In each formula, Li$^+$ contained in the electrolyte membrane 2 (electrolyte) is expressed as Li$^+$ (electrolyte). Formula (4) below shows a reaction where Li$^+$ in the electrolyte membrane 2 migrates into the aqueous solution ($^6$Li recovery aqueous solution ES).

[Chem. 3]

$$2OH^- \rightarrow H_2O + \frac{1}{2}O_2 \uparrow + 2e^- \quad \cdots (1)$$

$$Li^+(electrolyte) \rightarrow Li^+ \cdots \qquad (4)$$

It is preferable that the third electrode 33 is disposed in the recovery chamber 12 so as not to contact the electrolyte membrane 2 and the second electrode 32, and is disposed parallel to the second electrode 32. Further, in order to strengthen an electric field E1 (see FIG. 2) generated in the $^6$Li recovery aqueous solution ES with respect to a voltage V1 applied between the third electrode 31 and the second electrode 32, it is preferable that the third electrode 33 be disposed close to the second electrode 32 to avoid short-circuiting, as will be described later. The third electrode 33 preferably has a mesh-like shape through which the aqueous solution passes, so as to increase the contact area with the $^6$Li recovery aqueous solution ES and so that the $^6$Li recovery aqueous solution ES in contact with the back surface of the electrolyte membrane 2 (second electrode 32) in the recovery chamber 12 is continuously replaced. As with the second electrode 32, the third electrode 33 is preferably formed of an electrode material that has electron conductivity and is stable when a voltage is applied in the $^6$Li recovery aqueous solution ES, and that also has catalytic activity for the reaction of Formula (2) below. Alternatively, the third electrode 33 can be made of carbon (C), copper (Cu), or stainless steel, which is stable at a potential lower than the potential at which the reaction of Formula (2) below occurs. The third electrode 33 is, more preferably, made of a material carrying Pt fine particles on the surface of such materials, which function as a catalyst.
[Chem. 4]

$$2H_2O + 2e^- \rightarrow 2OH^- + H_2 \uparrow \qquad (2)$$

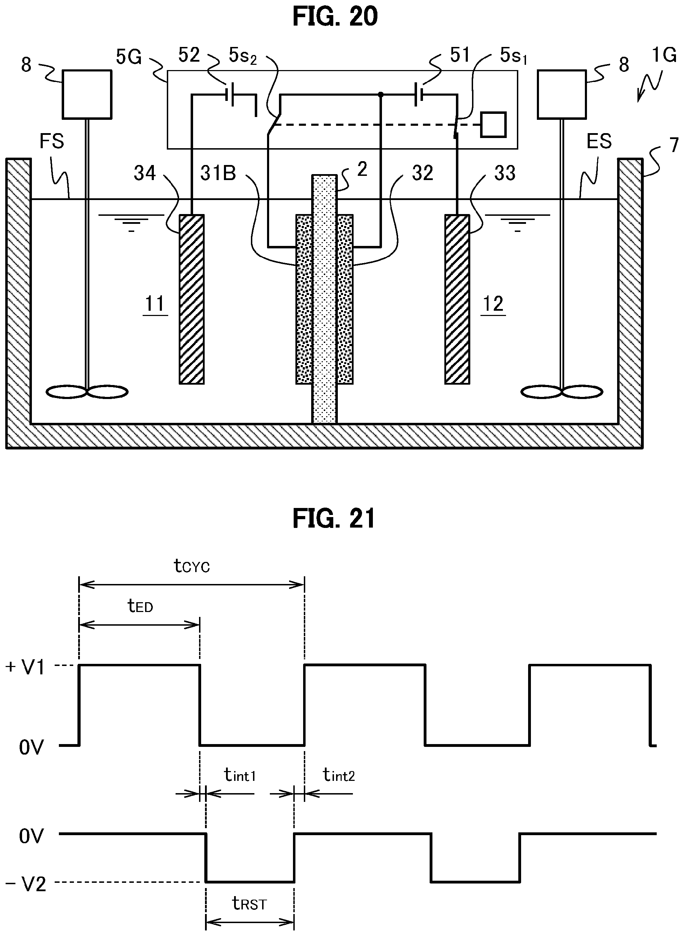

The first electrode 31 may be provided in contact with the front surface of the electrolyte membrane 2 (see a first electrode 31B in a modification of a third embodiment shown in FIG. 20). Such a first electrode 31 applies a voltage to a wide area of the electrolyte membrane 2, and has a net-like porous structure that allows the Li-containing aqueous solution FS to come into contact with a sufficient area of the front surface of the electrolyte membrane 2, as with the second electrode 32. The first electrode 31 is preferably formed of a material that has catalytic activity for the reaction of Formula (3) below, in addition to the reaction of Formula (1) below, and that can be easily processed into the shape described above. Formula (3) below shows a reaction where Li$^+$ in the aqueous solution (Li-containing aqueous solution FS) migrates into the electrolyte membrane 2.
[Chem. 5]

$$Li^+ \rightarrow Li^+(electrolyte) \qquad (3)$$

The power supply 51 is a DC power supply that applies to the first electrode 31 and the second electrode 32 a voltage of the same polarity and magnitude as that of the third electrode 33, with the supply chamber 11 side being positive. In the lithium isotope enrichment device 1 according to this embodiment, the power supply 51 has a positive electrode connected to the first electrode 31 and the second electrode 32, and has a negative electrode connected to the third electrode 33. The power supply 51 applies a positive voltage V1 (voltage +V1), with respect to the third electrode 33, to the first electrode 31 and the second electrode 32.

The stirring device 8 is a device that circulates the Li-containing aqueous solution FS in the supply chamber 11 so that the Li-containing aqueous solution FS in contact with the first electrode 31 and the front surface of the electrolyte membrane 2 is continuously replaced during operation, and that circulates the $^6$Li recovery aqueous solution ES in the recovery chamber 12 so that the $^6$Li recovery aqueous solution ES in contact with the second electrode 32 (the back surface of the electrolyte membrane 2) and the third electrode 33 is continuously replaced during operation. The stirring device 8 may be provided as necessary to circulate only one of the Li-containing aqueous solution FS and the $^6$Li recovery aqueous solution ES. The stirring device 8 can be a known device having a configuration, for example, in which a screw immersed in the aqueous solutions FS and ES is rotated by a motor, as shown in FIG. 1. Alternatively, each of the chambers 11 and 12 may be provided with an inlet and an outlet and connected to a circulation tank installed outside the processing tank 7 to circulate the aqueous solutions FS and ES with a pump.

The Li-containing aqueous solution FS is a Li source to supply Li, which is an aqueous solution containing cations $^7$Li$^+$ and $^6$Li$^+$ of $^7$Li and $^6$Li. The Li-containing aqueous solution FS is, for example, an aqueous solution of lithium hydroxide (LiOH), and contains $^7$Li$^+$ and $^6$Li$^+$ at a natural abundance at least at the start of the operation of the lithium isotope enrichment device 1. The Li-containing aqueous solution FS preferably has a higher Li$^+$ concentration, and more preferably is a saturated aqueous solution or a supersaturated aqueous solution of Li$^+$ at the start of the operation of the lithium isotope enrichment device 1. The $^6$Li recovery aqueous solution ES is an aqueous solution for holding lithium ions Li$^+$, particularly Li$^+$ having a higher $^6$Li isotope ratio than at least the Li-containing aqueous solution FS recovered from the Li-containing aqueous solution FS, and is pure water, for example, at the start of the operation of the lithium isotope enrichment device 1. In the present specification, $^7$Li and $^6$Li ($^7$Li$^+$ and $^6$Li$^+$) are collectively referred to as Li (Li$^+$) unless otherwise distinguished from each other.

The lithium isotope enrichment device 1 may further include a cooling device to bring the electrolyte membrane 2 to a predetermined temperature, and cool the electrolyte membrane 2 through the Li-containing aqueous solution FS or the $^6$Li recovery aqueous solution ES. The cooling device can be a known device that cools a liquid, and preferably has a temperature adjustment function. The cooling device is of a throw-in type (immersion type), for example, and has a pipe (coolant pipe), through which a coolant circulates, immersed and set in the $^6$Li recovery aqueous solution ES in the recovery chamber 12. The cooling device only needs to be able to bring the electrolyte membrane 2 to a predetermined temperature, and does not need to keep the Li-containing aqueous solution FS or the $^6$Li recovery aqueous solution ES at a uniform temperature. However, depending on the volume of the processing tank 7 and the like, a stirring device may be provided. The coolant pipe of the cooling device is made of a material that does not undergo deterioration such as corrosion even when coming into contact with the Li-containing aqueous solution FS or the $^6$Li recovery aqueous solution ES, as with the processing tank 7, and the shape thereof is not particularly limited. For example, in order to efficiently cool the electrolyte membrane 2, the coolant pipe is set in such a manner as to meander in plane in conformity to the dimensions of the plate-like electrolyte membrane 2 and face a wide area of the electrolyte membrane 2 in the vicinity. Such coolant pipes may be installed in both of the supply chamber 11 and the recovery chamber 12, depending on the thickness of the electrolyte membrane 2 or the like. The cooling device may be configured such that the coolant is circulated in the inside (jacket portion) of a double structure (jacket tank) of the processing tank 7. Alternatively, it is also possible to employ a configuration in which the Li-containing aqueous solution FS or the $^6$Li recovery aqueous solution ES is circulated to the outside of the processing tank 7 with a pump and cooled by a heat exchanger.

The temperature of the electrolyte membrane 2, which will be described in detail later, is 30 °C or lower and is 0 °C or higher when the $^6$Li recovery aqueous solution ES is pure water, for example, at the start of operation of the lithium isotope enrichment device 1 (start of electrodialysis), to prevent the aqueous solutions FS and ES from freezing. As for the temperature of the electrolyte membrane 2, the liquid temperature of the Li-containing aqueous solution FS or the $^6$Li recovery aqueous solution ES can be measured alternatively.

The lithium isotope enrichment device 1 may further include a liquid level sensor or the like to sense changes in the amounts of the Li-containing aqueous solution FS and the $^6$Li recovery aqueous solution ES during operation. In order to prevent carbon dioxide ($CO_2$) in the atmosphere from unintentionally dissolving into the aqueous solutions FS and ES, leading to the precipitation of lithium carbonate ($Li_2CO_3$), the lithium isotope enrichment device 1 is preferably configured such that the Li-containing aqueous solution FS and the $^6$Li recovery aqueous solution ES are not exposed to the atmosphere. For safety purposes, the lithium isotope enrichment device 1 preferably further includes exhaust means for exhausting $H_2$ and $O_2$ generated during operation (due to the reactions of Formulas (1) and (2)) so as not to fill the inside.

[Lithium Isotope Enrichment Method]

A lithium isotope enrichment method according to the present invention is a method for recovering, in the processing tank 7 partitioned into the supply chamber 11 and the recovery chamber 12 by the electrolyte membrane 2, the $^6$Li recovery aqueous solution ES in the recovery chamber 12 from the Li-containing aqueous solution FS contained in the supply chamber 11. In a lithium isotope enrichment method according to the first embodiment of the present invention, the positive voltage V1 with respect to the third electrode 33 provided spaced apart from the electrolyte membrane 2 and the second electrode 32 in the recovery chamber 12 is applied to the first electrode 31 provided in the supply chamber 11 and the second electrode 32 provided on the back surface of the electrolyte membrane 2. First, electrodialysis of lithium ions by using the lithium isotope enrichment device according to the first embodiment will be described with reference to FIG. 2. In the lithium isotope enrichment device 1 shown in FIG. 2, the stirring device 8 is omitted.

As shown in FIG. 2, in the lithium isotope enrichment device 1, the power supply 51 applies the positive voltage V1 (voltage +V1), with respect to the third electrode 33, to the first electrode 31 and the second electrode 32, which are short-circuited from each other. Then, the following reaction occurs in the supply chamber 11. In the vicinity of the first electrode 31, hydroxide ions ($OH^-$) in the Li-containing aqueous solution FS cause the reaction of Formula (1) below, releasing electrons $e^-$ to the first electrode 31, where water ($H_2O$) and oxygen ($O_2$) are generated to cause $OH^-$ to decrease. In the Li-containing aqueous solution FS, to compensate for the charge imbalance as $OH^-$ decreases, $Li^+$ migrates to the vicinity of the front surface of the electrolyte membrane 2 so as to cause the reaction of Formula (3) below where $Li^+$ dissolves in the electrolyte membrane 21. As a result, a concentration gradient is generated in which $Li^+$ is more concentrated in the vicinity of the front surface of the electrolyte membrane 2 than in the vicinity of the back surface of the electrolyte membrane 2 in the $^6$Li recovery aqueous solution ES. Due to this concentration gradient, that is, the chemical potential difference of $Li^+$ in the vicinity of the front surface and back surface of the electrolyte membrane 2, and to compensate for the charge imbalance, the reaction of Formula (3) below occurs to increase the $Li^+$ concentration in the front surface side portion (surface layer) of the electrolyte membrane 2.

[Chem. 6]

$$2OH^- \rightarrow H_2O + \frac{1}{2}O_2 \uparrow + 2e^- \quad \cdots (1)$$

$$Li^+ \rightarrow Li^+(electrolyte) \qquad \cdots (3)$$

In the recovery chamber 12, on the other hand, the application of the voltage +V1 generates an electric field E1 (electric field +E1) directed from the second electrode 32 to the third electrode 33 in the $^6$Li recovery aqueous solution ES, as indicated by the thick gray arrow, and the following reaction also occurs. Due to the chemical potential difference of Li+ between the surface layer or the vicinity of the surface of the electrolyte membrane 2 and the vicinity of the back surface, the reaction of the following formula (4) occurs in the vicinity of the back surface of the electrolyte membrane 2, in which Li+ in the electrolyte membrane 2 moves to the $^6$Li recovery aqueous solution ES. Furthermore, in the vicinity of this back surface, i.e., in the vicinity of the second electrode 32, the OH- in the $^6$Li recovery aqueous solution ES undergoes the reaction of the following formula (1), releasing electrons e- to the second electrode 32 and generating H2O and O2. In addition, in the vicinity of the third electrode 33, the H2O in the $^6$Li recovery aqueous solution ES is supplied with electrons e-, causing the reaction of the following formula (2) to occur, generating hydrogen (H2) and OH-. In order to compensate for the charge imbalance caused by the increase in Li+ and the decrease in OH- in the vicinity of the second electrode 32, and the increase in OH- in the vicinity of the third electrode 33, the Li+ in the vicinity of the back surface of the electrolyte membrane 2 moves to the vicinity of the third electrode 33 along the electric field +E1 generated between the second electrode 32, i.e., the back surface of the electrolyte membrane 2, and the third electrode 33. As a result, the Li+ concentration remains low in the vicinity of the back surface of the electrolyte membrane 2, and the chemical potential difference of Li+ with respect to the surface layer or the vicinity of the surface of the electrolyte membrane 2 is maintained.

[Chem. 7]

$$Li^+(electrolyte) \rightarrow Li^+ \qquad \cdots (4)$$

$$2OH^- \rightarrow H_2O + \frac{1}{2}O_2 \uparrow + 2e^- \quad \cdots (1)$$

$$2H_2O + 2e^- \rightarrow 2OH^- + H_2 \uparrow \quad \cdots (2)$$

A series of reactions maintains the charge balance in the Li-containing aqueous solution FS, the $^6$Li recovery aqueous solution ES, and the electrolyte membrane 2. In addition, in this series of reactions, the charge compensation in the entire Li-containing aqueous solution FS and the $^6$Li recovery aqueous solution ES is maintained by the reaction amount of the reaction of Formula (2) (H$_2$ generation) in the vicinity of the third electrode 33 and the reaction amount of the reaction of Formula (1) (O$_2$ generation) in the vicinity of the respective electrodes 31 and 32. The amount of O$_2$ generated in the Li-containing aqueous solution FS (the reaction amount of the reaction of Formula (1) in the vicinity of the first electrode 31) corresponds to the amount of Li$^+$ that has migrated through the electrolyte membrane 2 (the reaction amount of each of the reactions of Formula (3) and Formula (4)). The amount of Li$^+$ that has migrated through the electrolyte membrane 2 (Li$^+$ migration amount) is equal to or less than the amount of O$_2$ generated in the vicinity of the third electrode 33A (Li-containing aqueous solution FS), and corresponds to the difference between the amount of O$_2$ generated and the amount of H$_2$ generated in the vicinity of the second electrode 32A.

As described above, the voltage V1 is set to more than or equal to a voltage at which the electrolysis reaction of water occurs, and is set to more than or equal to +1.229 V (25 °C) when the Li-containing aqueous solution FS and the $^6$Li recovery aqueous solution ES have the same pH (hydrogen ion concentration). In practice, depending on the electrode performance that determines the electrode reaction overvoltage of each of the electrodes 31, 32, and 33, the voltage V1 needs to be set to a value several hundred mV higher than the theoretical voltage of 1.229 V. Note that the higher the pH of the Li-containing aqueous solution FS is relative to the $^6$Li recovery aqueous solution ES, the lower the voltage at which the electrolysis reaction of water occurs. On the other hand, the lower the pH of the Li-containing aqueous solution FS is relative to the $^6$Li recovery aqueous solution ES, the higher the voltage at which the electrolysis reaction of water occurs. Therefore, the voltage V1 needs to be set to a large value.

Furthermore, the stronger the electric field E1 between the second electrode 32 and the third electrode 33, the larger the chemical potential difference between both surfaces of the electrolyte membrane 2 by moving Li$^+$ away from the electrolyte membrane 2 in the $^6$Li recovery aqueous solution ES. If the chemical potential difference between both surfaces of the electrolyte membrane 2 is insufficient, the reaction of Formula (1) does not easily occur near the first electrode 31, that is, in the Li-containing aqueous solution FS, and occurs only near the second electrode 32. Therefore, it is preferable that the third electrode 33 is disposed at a short distance from the second electrode 32 to the extent that they do not short-circuit. It is also preferable that the voltage V1 is somewhat large, as described later.

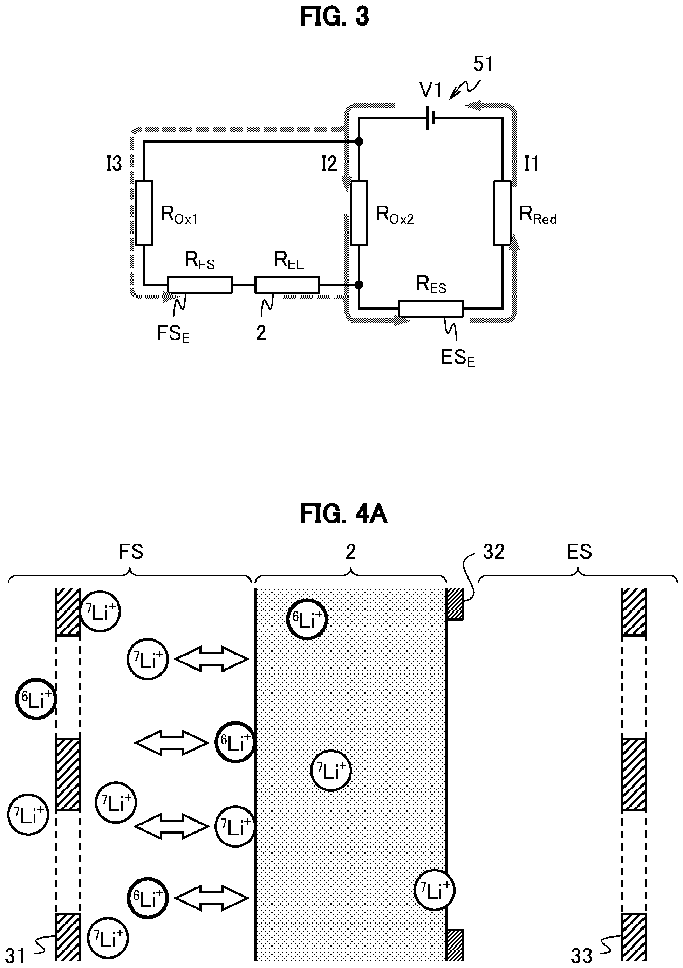

Here, the aqueous solution of the Li-containing aqueous solution FS sandwiched between the first electrode 31 and the electrolyte membrane 2 is denoted by "$FS_E$", and the aqueous solution of the $^6$Li recovery solution ES sandwiched between the second electrode 32 and the third electrode 33 is denoted by "$ES_E$". As shown in FIG. 3, the lithium isotope enrichment device 1 according to this embodiment includes a closed circuit in which the power supply 51 and the $^6$Li recovery aqueous solution $ES_E$ are connected into a loop, and currents I1 and I2 flow counterclockwise from the power supply 51 as indicated by the gray arrows. The lithium isotope enrichment device 1 further includes a closed circuit that branches from the positive electrode of the power supply 51 and is connected in series with the Li-containing aqueous solution $FS_E$ and the electrolyte membrane 2 in this order. A current I3 branched off the current I2 from the current I1 flows as indicated by the gray dashed arrow (I1= I2+I3). $R_{EL}$ represents the resistance of the electrolyte membrane 2 ($Li^+$ migration resistance). $R_{ES}$ represents the resistance of the Li-containing aqueous solution $FS_E$ (resistance between the first electrode 31 and the electrolyte membrane 2). $R_{ES}$ represents the resistance of the $^6$Li recovery aqueous solution $ES_E$ (resistance between the second electrode 32 and the third electrode 33). The lithium isotope enrichment device 1 further includes a reaction resistance $R_{0x1}$ due to the reaction of Formula (1) ($O_2$ generation) at the first electrode 31, a reaction resistance $R_{0x2}$ due to the reaction of Formula (1) ($O_2$ generation) at the second electrode 32, and a reaction resistance $R_{Red}$ due to the reaction of Formula (2) ($H_2$ generation) at the third electrode 33. Then, the circuit constituting the lithium isotope enrichment device 1 is expressed by Formula (5) below. In the electrolyte membrane 2 that does not exhibit electron conductivity, $Li^+$ migrates in the opposite direction (the same direction as the current I3) instead of electrons $e^-$. In the aqueous solutions FS and ES, $OH^-$ migrates in place of some of the electrons $e^-$, and $Li^+$ and $H^+$ migrate in the opposite direction.

$$V1-(R_{ES}+R_{Red})I1= R_{0x2}I2= (R_{0X1}+R_{FS}+R_{EL})I3 \ldots (5)$$

In the lithium isotope enrichment device 1, to increase productivity, it is preferable that the amount of $Li^+$ flowing through the electrolyte membrane 2 per hour ($Li^+$ mobility) is large, that is, the current I3 is large. It is therefore preferable that the resistance $R_{EL}$ of the electrolyte membrane 2 is low. The resistance $R_{EL}$ of the electrolyte membrane 2 depends on the defect concentration of Li sites in equilibrium with the $Li^+$ concentration of the aqueous solutions FS and ES in contact with the electrolyte membrane 2. Therefore, the larger the $Li^+$ concentration gradient between both surfaces of the electrolyte membrane 2, the lower the resistance $R_{EL}$. Hence, it is preferable to strengthen the electric field E1 so as to reduce the $Li^+$ concentration near the back surface of the electrolyte membrane 2. However, if the voltage V1 is increased to strengthen the electric field E1, both the current I1 and the current I2 increase. The larger the current I2, the more $O_2$ is generated near the second electrode 32, resulting in reduced energy efficiency. Therefore, for example, it is preferable to set the voltage V1 so that the power consumption per Li recovery amount is within an allowable range and the $Li^+$ mobility is increased.

Furthermore, to increase the current I3 relative to the magnitude of the voltage V1, it is preferable to design the resistances $R_{FS}$, $R_{ES}$, $R_{0x1}$, and $R_{Red}$ to be low. To this end, it is preferable that the first electrode 31 and the third electrode 33 have a large area immersed in the aqueous solutions FS and ES so that the reaction resistances $R_{0x1}$ and $R_{Red}$ are low. It is preferable to use a material with high catalytic activity for the reaction of Formula (1) and the reaction of Formula (2). As described above, it is preferable that the second electrode 32 and the third electrode 33 are disposed close to each other to the extent that they do not short-circuit, thus strengthening the electric field E1 and lowering the resistance $R_{ES}$. Similarly, it is preferable that the first electrode 31 and the electrolyte membrane 2 are disposed close to each other so that the resistance $R_{FS}$ is low. The first electrode 31 may have a porous structure and be in contact with the surface of the electrolyte membrane 2. The resistance $R_{FS}$ can be minimized (0). However, since the contact area with the Li-containing aqueous solution FS is reduced, the reaction resistance $R_{0x1}$ is increased. Furthermore, since the contact area of the electrolyte membrane 2 with the Li-containing aqueous solution FS on the surface is reduced, the resistance $R_{EL}$ is increased. Therefore, it is preferable that the first electrode 31 is disposed close to the electrolyte membrane 2 to such an extent that the contact of the surface of the electrolyte membrane 2 with the Li-containing aqueous solution FS is not hindered.

A behavior when $Li^+$ passes through the electrolyte membrane 2 will be described in detail with reference to FIGs. 4A to 4C. FIGs. 4A to 4C are each an enlarged cross-sectional view of the vicinity of the electrolyte membrane 2 in the lithium isotope enrichment device 1. The second electrode 32 is partially in contact with the back surface of the electrolyte membrane 2. As for the aqueous solutions FS and ES, only $^7Li^+$ and $^6Li^+$ contained therein are circled and shown.

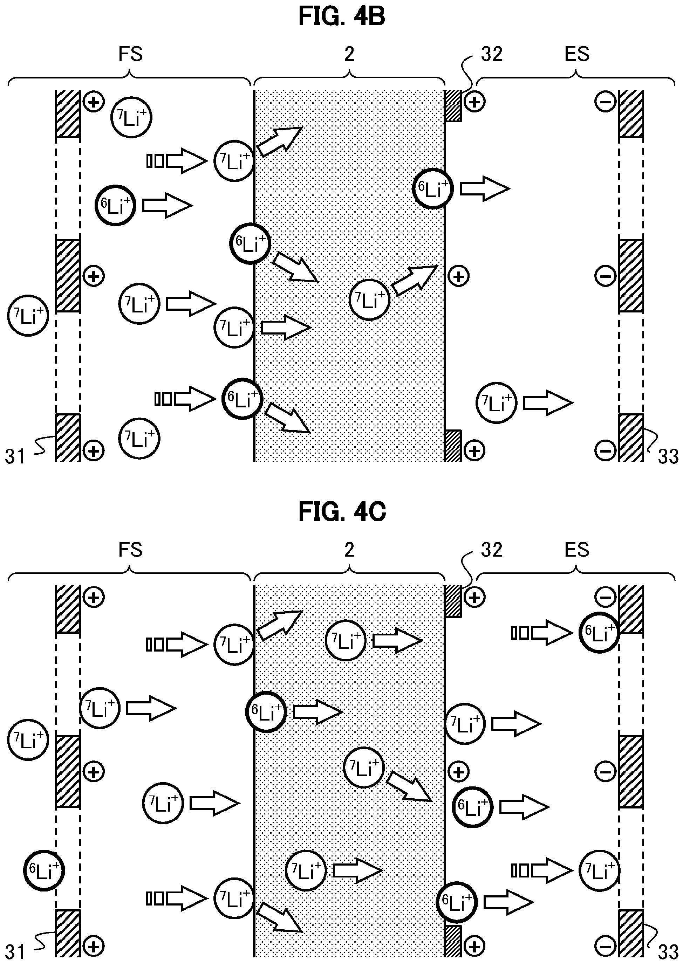

When no voltage is applied, as shown in FIG. 4A, $^7Li^+$ and $^6Li^+$ float in the Li-containing aqueous solution FS, alternately repeat adsorption and desorption into and from the front surface of the electrolyte membrane 2, and are stationary at the Li sites in the electrolyte membrane 2. From this state, as shown in FIG. 4B, a positive voltage V1 (voltage +V1) is applied to the first electrode 31 and the second electrode 32, and a negative voltage is applied to the third electrode 33. In the drawings, positive charges are represented by the circled + and negative charges are represented by the circled -. Then, Li$^+$ ($^7$Li$^+$ and $^6$Li$^+$) in the Li-containing aqueous solution FS starts dissolving in the electrolyte membrane 2 as the reaction of Formula (3) below. In this event, Li$^+$ adsorbed near the Li site defect in the front surface of the electrolyte membrane 2 gets into this Li site defect. As the reaction of Formula (4) below, Li$^+$ in the electrolyte membrane 2 migrates from the Li site on the back surface into the $^6$Li recovery aqueous solution ES. Furthermore, as described above, the application of the voltage V1 between the second electrode 32 and the third electrode 33 causes Li$^+$ near the electrolyte membrane 2 to be separated from the electrolyte membrane 2 and attracted to the third electrode 33 by electrostatic attraction in the $^6$Li recovery aqueous solution ES, as shown in FIG. 4C.

[Chem. 8]

$$Li^+ \rightarrow Li^+(electrolyte) \qquad (3)$$

$$Li^+(electrolyte) \rightarrow Li^+ \qquad (4)$$

Since there is a concentration gradient in which the Li$^+$ concentration is lower in the vicinity of the back surface of the electrolyte membrane 2 in the $^6$Li recovery aqueous solution ES than in the vicinity of the front surface of the electrolyte membrane 2 in the Li-containing aqueous solution FS, that is, the electrolyte membrane 2, Li$^+$ tends to migrate from the front surface side to the back surface side in the electrolyte membrane 2. More specifically, Li$^+$ from the Li site in the vicinity on the deeper side (front surface side) of the electrolyte membrane 2 jumps (hops) to the emptied Li site defect on the back surface of the electrolyte membrane 2 by the reaction of Formula (4). Li$^+$ further jumps from the Li site near the front surface side to the Li site defect emptied by the jumping of Li$^+$. In other words, Li$^+$ which has gotten into the Li site defect on the front surface of the electrolyte membrane 2 from the Li-containing aqueous solution FS jumps to the Li site defect in the vicinity on the deeper side (back surface side), and further jumps from there to the Li site defect near the back surface side. Li$^+$ thus repeatedly migrates from a Li site defect to another Li site defect nearby in the electrolyte membrane 2. Eventually, Li$^+$ migrates from the Li site on the back surface into the $^6$Li recovery aqueous solution ES as the reaction of Formula (4) above, as shown in FIG. 4C.

As described above, on the back surface of the electrolyte membrane 2, the application of the voltage V1 between the second electrode 32 and the third electrode 33 causes Li$^+$ at the Li adsorption site on the back surface to desorb from the second electrode 32, that is, the back surface of the electrolyte membrane 2, by electrostatic repulsion, thereby promoting emptied Li site defects on the back surface. On the front surface of the electrolyte membrane 2, on the other hand, since Li$^+$ which has gotten into or adsorbed near a Li site defect on the front surface has migrated deeper into the electrolyte membrane 2, other Li$^+$ adsorbed nearby migrates and gets into the emptied Li site defect, or new Li$^+$ is adsorbed from inside the Li-containing aqueous solution FS, and these Li$^+$ similarly migrate in the electrolyte membrane 2. Moreover, the migration of Li$^+$ in the electrolyte membrane 2 fills a Li site defect with Li$^+$ or empties the Li site defect again. This enables Li$^+$ adsorbed on the front surface to start migrating to the back surface side through Li site defects newly generated in the front surface of the electrolyte membrane 2.

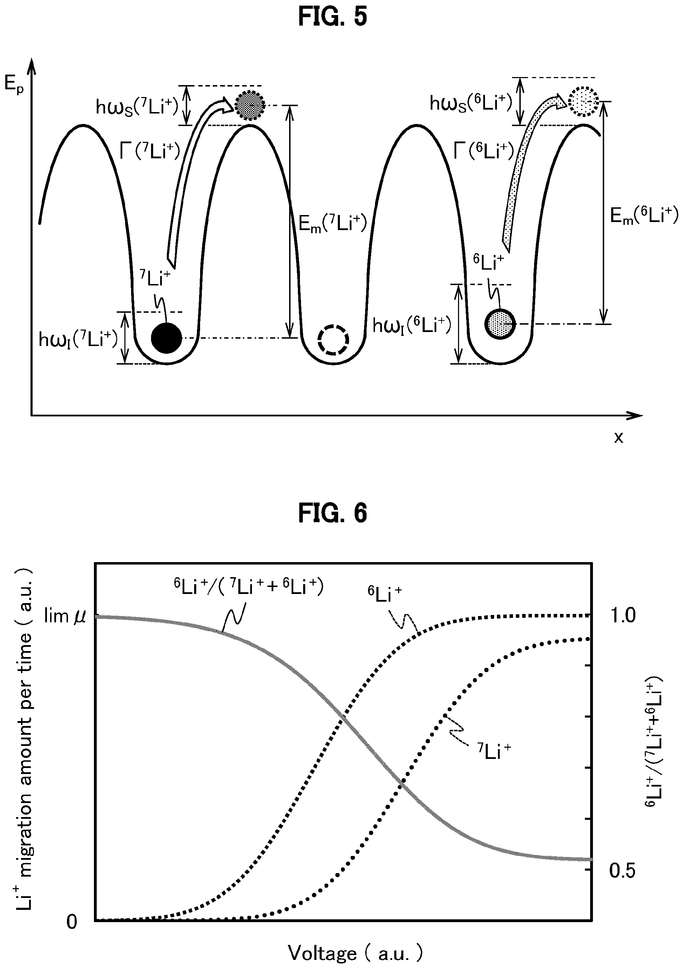

The Li$^+$ migration (hopping) between sites in the electrolyte membrane 2 will be described in more detail with reference to FIG. 5. FIG. 5 is a model for explaining ion conduction in an electrolyte, where x represents a position in the thickness direction of the electrolyte membrane 2 and $E_p$ represents potential energy. In the electrolyte membrane 2, Li$^+$ ($^7$Li$^+$ and $^6$Li$^+$) is stable in a Li site where the potential energy is at its minimum. When a nearby Li site is void (represented by a dashed o) and Li$^+$ receives energy larger than or equal to an activation energy $E_a$, Li$^+$ can jump (hop) across an energy barrier $E_m$ between the sites and migrate to this site defect ($E_a = E_D/2 + E_m$, $E_D$: defect formation energy). In addition, it can be assumed that ions are thermally vibrating at a frequency $\Gamma_0$ at a position with the minimum potential energy, and ions can hop at a frequency (hopping rate $\Gamma$) corresponding to this frequency (frequency factor) $\Gamma_0$. The frequency $\Gamma_0$ is in inverse proportion to the square root of mass of ions. $^6$Li has a small mass that is 6/7 times that of $^7$Li, and thus the frequency $\Gamma_0$ is ($\sqrt{(7/6)}$) times that of $^7$Li. Accordingly, the average migration speed of $^6$Li in the electrolyte membrane 2 is ($\sqrt{(7/6)}$) times faster than that of $^7$Li, which will be described in detail later. For example, in a case where $^7$Li$^+$ and $^6$Li$^+$ are present at two positions in the vicinity of and equidistant from a certain Li site defect in the electrolyte membrane 2, it is surmised that $^6$Li$^+$ preferentially jumps to the Li site defect.

In addition, $^7$Li$^+$ and $^6$Li$^+$ in a Li site of the electrolyte membrane 2, that is, in the ground state, have potential energies higher by the zero-point vibration $h\omega_I$. The zero-point vibration $h\omega_I$ depends on isotopes, and $^6$Li$^+$ has higher zero-point vibration $h\omega_I$ than that of $^7$Li$^+$. Similarly, in the excited state as well, $^6$Li$^+$ has higher zero-point vibration $h\omega_S$. Hence, $^6$Li$^+$, which has a smaller mass than that of $^7$Li$^+$, has higher potential energies in consideration of the zero-point vibrations $h\omega_I$ and $h\omega_S$ in both the ground state and the excited state. However, $^6$Li$^+$ has a smaller energy barrier $E_m$, which is a difference in potential energy between the excited state and the ground state ($E_m(^7Li^+) > E_m(^6Li^+)$), that is, $^6$Li$^+$ has a smaller activation energy $E_a$. As a result, $^6$Li$^+$ can hop even when the received energy is smaller than that for $^7$Li$^+$. As the excess in the received energy relative to the activation energy $E_a$ is more, the mobility $\mu$ increases.

$^6$Li$^+$ has an equivalent excess energy relative to the activation energy $E_a$ with smaller energy than that for $^7$Li$^+$,

and at this time, $^6Li^+$ has a mobility $\mu$ higher by the ratio of the frequency $\Gamma_0$. FIG. 6 shows $^6Li^+$ and $^7Li^+$ migration amounts per hour and the applied voltage dependency of the isotope ratio of mobile $Li^+$ obtained in a simulation where the received energy is used as the voltage applied between both surfaces of the electrolyte membrane 2. In the simulation, the distribution of the activation energy $E_a$ in accordance with the Maxwell-Boltzmann distribution is approximated with normal distribution. Specifically, for each of $^6Li^+$ and $^7Li^+$, the proportion of $Li^+$ which exceeded the activation energy $E_a$ (on the premise of $^6Li^+<^7Li^+$) is calculated for each received energy from the probability density of the normal distribution having the activation energy $E_a$ as an average value, and the accumulated value is multiplied by the ratio of the frequency $\Gamma_0$ to obtain a relative value of the mobility $\mu$. The isotope ratio is calculated on the premise that the abundance ratio of $^7Li^+$ and $^6Li^+$ before migration is 1: 1 for simplifying the simulation.

As shown in FIG. 6, the mobility of each of $^6Li^+$ and $^7Li^+$ increases in S-shaped curve from 0 as the applied voltage increases. $^6Li^+$, which has an activation energy $E_a$ smaller than that of $^7Li^+$, changes while shifting toward the smaller side of the voltage relative to $^7Li^+$, and is higher than $^7Li^+$ by the ratio of the frequency $\Gamma_0$. Note that $\lim\mu$ in FIG. 6 represents the limit of the $^6Li^+$ migration amount per hour. Hence, the smaller the applied voltage, that is, the received energy in the range where $^6Li^+$ migrates in the electrolyte membrane 2 is, the more $^6Li^+$ migrates relative to $^7Li^+$. Then, when the applied voltage increases and the mobilities of $^6Li^+$ and $^7Li^+$ converge, the difference between them decreases, and the isotope ratio converges to $(\sqrt{(7/6)})/(1+\sqrt{(7/6)})$.

The ion mobility $\mu$ is related to the diffusion coefficient D of the ions in Formula (6) below (T: temperature (K) and k: Boltzmann constant). The diffusion coefficient D is in proportion to the hopping rate $\Gamma$ as expressed by Formula (7) below (a: average distance between sites (jump length), $n_c$: carrier density, f: coefficient of correlation effect determined by the ions and their surroundings, d: dimension of the diffusion field). In addition, since the frequency factor $\Gamma_0$ in Formula (7) is in proportion to the temperature T as expressed by Formula (8) below, and $(Z_s^{vib}/Z_l^{vib})$ is in inverse proportion to the square root of the mass number m, the frequency factor $\Gamma_0$ is in inverse proportion to the square root of the mass number m (h: Planck constant, $Z_s^{vib}$: phonon dispersion at the saddle point, $Z_l^{vib}$: phonon dispersion function in the initial state, $C_1$: constant). From Formula (7) and Formula (8), the diffusion coefficient D is expressed by Formula (9) below. Then, from Formula (6) and Formula (9), the ion mobility $\mu$ is expressed by Formula (10) below ($C_2$: constant). As shown by Formula (10), $^6Li^+$ which has a smaller mass number m and activation energy $E_a$ has a higher ion mobility $\mu$ than $^7Li^+$.

[Math. 1]

$$kT\mu = D \qquad \cdots (6)$$

$$D = \frac{a^2 n_c f}{2d}\Gamma = \frac{a^2 n_c f}{2d}\Gamma_0 exp\left(\frac{-E_a}{kT}\right) \qquad \cdots (7)$$

$$\Gamma_0 = \frac{kT}{h}\frac{Z_s^{vib}}{Z_l^{vib}} = \frac{kT}{h}\frac{C_1}{\sqrt{m}} \qquad \cdots (8)$$

$$D = \frac{a^2 n_c f}{2d}\frac{kT}{h}\frac{C_1}{\sqrt{m}} exp\left(\frac{-E_a}{kT}\right) \qquad \cdots (9)$$

$$\mu = \frac{D}{kT} = \frac{a^2 n_c f}{2dh}\frac{C_1}{\sqrt{m}} exp\left(\frac{-E_a}{kT}\right) = \frac{C_2}{\sqrt{m}} exp\left(\frac{-E_a}{kT}\right) \quad \cdots (10)$$

Therefore, in the lithium isotope enrichment method according to the present invention, the $Li^+$ concentration in the vicinity of the back surface of the electrolyte membrane 2 is reduced by the electric field +E1 generated by the applied voltage +V1 between the second electrode 32 and the third electrode 33, thereby forming a $Li^+$ concentration gradient between the back surface and the vicinity of the front surface. In addition, the first electrode 31 is short-circuited with the second electrode 32 to set the potential difference between both surfaces of the electrolyte membrane 2 to 0, and $Li^+$ is moved in the electrolyte membrane 2 only by the chemical potential difference. Therefore, compared to the lithium isotope enrichment method of the related art shown in FIG. 6, in which a voltage is applied between both surfaces of the electrolyte membrane 2 to move $Li^+$ by the electrochemical potential difference, the energy received by $^6Li^+$ and $^7Li^+$ is small, and as a result, the $Li^+$ migration amount per hour is small, but more $^6Li^+$ migrates relative to $^7Li^+$.

In the lithium isotope enrichment method according to the present invention, the higher the $Li^+$ concentration of the Li-containing aqueous solution FS on the upstream side in the $Li^+$ migration, the higher the $Li^+$ mobility, making it possible to increase the $^6Li$ concentration rate. Therefore, the Li-containing aqueous solution FS preferably has a higher $Li^+$ concentration, and is more preferably a saturated aqueous solution or a supersaturated aqueous solution of $Li^+$. However, the $Li^+$ concentration of the Li-containing aqueous solution FS decreases as the operation time elapses. Therefore, it is preferable to replace the Li-containing aqueous solution FS in the supply chamber 11 every time a predetermined operation application time elapses, or when the $Li^+$ concentration of the Li-containing aqueous solution FS decreases and falls below a predetermined value, for example. It is more preferable to constantly circulate the Li-containing aqueous solution FS to and from the processing tank 7 during operation. By thus replacing the Li-containing aqueous solution FS, a decrease in $^6Li$ isotope ratio ($^6Li/(^7Li+^6Li)$) of $Li^+$ remaining in the Li-containing aqueous solution FS due to the $Li^+$ migration is suppressed. This suppresses a decrease in $^6Li$ isotope ratio of newly migrating $Li^+$, thus allowing for more efficient enrichment of $^6Li$. Further, it is possible to compensate for a reduction in the amount of the Li-containing aqueous solution FS due to the reaction of Formula (1).

The lower the $Li^+$ concentration near the back surface of the electrolyte membrane 2 is compared to that near the front surface, the higher the $Li^+$ mobility can be. In the $^6Li$ recovery aqueous solution ES, the electric field $+E1$ between the second electrode 32 and the third electrode 33 causes $Li^+$ to be unevenly distributed near the third electrode 33, making it possible to keep the $Li^+$ concentration low near the back surface of the electrolyte membrane 2. However, in order to ensure that the $Li^+$ concentration near the front surface of the electrolyte membrane 2 is higher than that near the back surface, it is preferable that the $Li^+$ concentration in the entire $^6Li$ recovery aqueous solution ES does not exceed that of the Li-containing aqueous solution FS. In addition, since the amount of the $^6Li$ recovery aqueous solution ES decreases due to the reactions of Formula (1) and Formula (2), it is preferable to add water ($H_2O$) or the like to the recovery chamber 12 as necessary. In the lithium isotope enrichment device 1, it is preferable that the liquid levels of the supply chamber 11 and the recovery chamber 12 are the same during operation.

As shown in Formula (10) above, the ion mobility $\mu$ also depends on the temperature T, and the degree of this dependence is influenced by the activation energy $E_a$. Although the mobility of each of $^7Li^+$ and $^6Li^+$ exponentially increases as the temperature increases, $^7Li^+$ having a larger activation energy $E_a$ has larger temperature dependency. Hence, as the temperature increases, the ratio between $^7Li^+$ having a low mobility and $^6Li^+$ having a high mobility becomes smaller. Therefore, the lower the temperature where the $Li^+$ mobility is low, the higher the $^6Li$ isotope ratio of migrating $Li^+$. The temperature range which can be employed in this embodiment is equal to or more than the coagulation points and less than the boiling points of the aqueous solutions FS and ES, and is 0 to 100 °C in the case where the $^6Li$ recovery aqueous solution ES is pure water at the time of starting the electrodialysis. Accordingly, the temperature of the electrolyte membrane 2 is preferably 20 °C or less, more preferably 15 °C or less, further preferably 10 °C or less, and still further preferably 5 °C or less.

The aqueous solutions FS and ES, particularly the $^6Li$ recovery aqueous solution ES may contain a solute that does not pass through the electrolyte membrane 2 so that the coagulation point is lowered to below 0 °C. Such a solute should be one that does not corrode the electrolyte membrane 2, the electrodes 31, 32, and 33 or the like when contained in the aqueous solutions FS and ES. Specifically, such a solute includes salts such as sodium chloride (NaCl, common salt), magnesium chloride ($MgCl_2$), calcium chloride ($CaCl_2$), and potassium chloride (KCl) or organic solvents such as ethylene glycol, which are used as antifreeze agents. Sodium chloride is particularly preferable, which does not generate precipitates (carbonates) other than lithium carbonate even when carbon dioxide is dissolved therein and significantly lowers the coagulation point. Such methods make it possible to efficiently enrich $^6Li$ while further increasing the isotope ratio of $^6Li$ by cooling the electrolyte membrane 2 to 0 °C or lower, more preferably lower than 0 °C.

In the lithium isotope enrichment device 1 according to this embodiment, an aqueous solution containing Li with a higher $^6Li$ isotope ratio ($^6Li$ recovery aqueous solution ES) than that of the Li-containing aqueous solution FS in the supply chamber 11 is obtained in the recovery chamber 12. When a desired $^6Li$ isotope ratio is not satisfied, the $^6Li$ recovery aqueous solution ES after Li recovery is fed into the emptied supply chamber 11, while the $^6Li$ recovery aqueous solution ES is replaced with pure water in the recovery chamber 12 for operation. This allows an aqueous solution containing Li with a higher $^6Li$ isotope ratio to be obtained in the recovery chamber 12. Before feeding the $^6Li$ recovery aqueous solution ES after Li recovery into the supply chamber 11, water may be evaporated as necessary to enrich Li. The series of operations is repeated until the $^6Li$ recovery aqueous solution ES with a desired $^6Li$ isotope ratio is obtained.

For the $^6Li$ recovery aqueous solution ES after the completion of $^6Li$ enrichment, for example, $^6Li$ can be recovered by evaporating the water content as necessary to enrich Li, and then generating lithium carbonate ($Li_2CO_3$) by carbon dioxide gas ($CO_2$) bubbling or the like, followed by precipitation. Alternatively, $^6Li$ can be recovered by cooling the $^6Li$ recovery aqueous solution ES after the completion of $^6Li$ enrichment or evaporating the water content to generate lithium hydroxide (LiOH) in an oversaturated state, followed by precipitation.

As for the $^6Li$ recovery aqueous solution ES, in the case where salts other than sodium chloride, such as magnesium chloride, are added to lower the coagulation point, it is preferable to conduct bubbling after evaporating the water content before bubbling carbon dioxide gas and removing salts precipitated by reduction of the water content by using a general method such as filtration. Alternatively, Li may be selectively recovered into pure water or the like by conducting normal electrodialysis or the like (see, for example, Patent Literature 3) at 0 °C or higher, for example, a temperature higher than or equal to room temperature before bubbling of carbon dioxide gas.

(Modification)

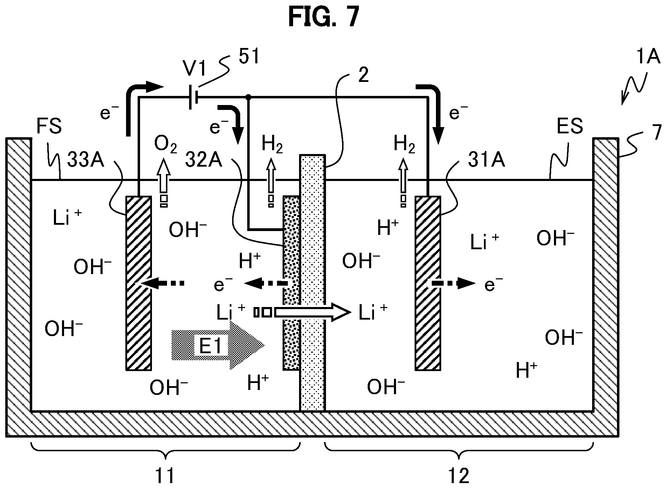

In the lithium isotope enrichment device according to the present invention, the first electrode and the second electrode provided to set the same potential between both surfaces of the lithium ion-conducting electrolyte membrane may be connected to the negative electrode of the power supply. In this case, the third electrode is connected to the positive electrode of the power supply and provided in the supply chamber. Specifically, as shown in FIG. 7, a lithium isotope enrichment device 1A according to a modification of the first embodiment of the present invention includes a processing tank 7, an electrolyte membrane (lithium ion-conducting electrolyte membrane) 2, a first electrode 31A, a second electrode 32A, a third electrode 33A, and a power supply 51. The processing tank 7 is partitioned by the electrolyte membrane 2 into two chambers: a supply chamber (first chamber) 11 that stores a Li-containing aqueous solution FS and a recovery chamber (second chamber) 12 that stores a $^6$Li recovery aqueous solution ES. The second electrode 32A has a porous structure and is applied to the surface of the electrolyte membrane 2 on the supply chamber 11 side. The third electrode 33A is provided spaced apart from the electrolyte membrane 2 and the second electrode 32A in the supply chamber 11. The power supply 51 has a positive (+) electrode connected to the third electrode 33A and a negative (-) electrode connected to the first electrode 31A and the second electrode 32A. The lithium isotope enrichment device 1A differs from the lithium isotope enrichment device 1 according to the first embodiment (see FIG. 1) in switching the positions of the first electrode 31A and the second electrode 32A with the position of the third electrode 33A. The other configuration of the lithium isotope enrichment device 1A is the same as that of the lithium isotope enrichment device 1 according to the first embodiment. The lithium isotope enrichment device 1A may also include a stirring device (circulator) 8, a cooling device, a liquid level sensor, exhaust means, and the like, as necessary.

As with the first electrode 31 and the second electrode 32 according to the first embodiment, the first electrode 31A and the second electrode 32A are provided to set the same potential between both surfaces of the electrolyte membrane 2. The third electrode 33A is an electrode paired up with the first electrode 31A to apply a positive voltage, with respect to the $^6$Li recovery aqueous solution ES, to the Li-containing aqueous solution FS. In the lithium isotope enrichment device 1A according to this modification, the first electrode 31A is provided in the recovery chamber 12. The second electrode 32A is provided in contact with the surface (front surface) of the electrolyte membrane 2 on the supply chamber 11 side. The third electrode 33A is disposed in the supply chamber 11 so as not to come into contact with the electrolyte membrane 2 and the second electrode 32A.

The first electrode 31A is provided in the recovery chamber 12 and can be disposed spaced apart from the back surface of the electrolyte membrane 2 as shown in FIG. 7 as an example. Hence, the first electrode 31A can have the same configuration as that of the third electrode 33 according to the first embodiment, and is preferably formed of a material having catalytic activity for the reaction of Formula (2) below. Alternatively, the first electrode 31A may be provided in contact with the back surface of the electrolyte membrane 2. The second electrode 32A is provided in contact with the front surface of the electrolyte membrane 2. The second electrode 32A has a net-like porous structure as with the second electrode 32 according to the first embodiment. As with the first electrode 31 according to the first embodiment, the second electrode 32A is preferably formed of an electrode material that is stable even when a voltage is applied in the Li-containing aqueous solution FS, and that also has catalytic activity for the reaction of Formula (2) below and the reaction of Formula (3) below. It is preferable that the third electrode 33A is disposed in the supply chamber 11 so as not to contact the electrolyte membrane 2 and the second electrode 32A, and is disposed parallel to the second electrode 32A. Hence, as with the second electrode 32A, the third electrode 33A is preferably formed of an electrode material that is stable even when a voltage is applied in the Li-containing aqueous solution FS, and that also has catalytic activity for the reaction of Formula (1) below. Therefore, the third electrode 33A can have the same configuration as that of the first electrode 31 according to the first embodiment.

[Chem. 9]

$$2H_2O + 2e^- \rightarrow 2OH^- + H_2 \uparrow \quad \cdots (2)$$

$$Li^+ \rightarrow Li^+ (electrolyte) \quad \cdots (3)$$

$$2OH^- \rightarrow H_2O + \frac{1}{2}O_2 \uparrow + 2e^- \quad \cdots (1)$$

In the lithium isotope enrichment device 1A according to this modification, the power supply 51 applies the negative voltage V1, with respect to the third electrode 33A, to the first electrode 31A and the second electrode 32A. To this end, the power supply 51 has a positive electrode connected to the third electrode 33A and a negative electrode connected to the first electrode 31A and the second electrode 32A.

In a lithium isotope enrichment method according to the modification of the first embodiment of the present invention, the negative voltage V1 with respect to the third electrode 33 provided spaced apart from the electrolyte membrane 2 and the second electrode 32 in the supply chamber 11 is applied to the first electrode 31A provided in the recovery chamber 12 and the second electrode 32A provided on the front surface of the electrolyte membrane 2. In other words, the positive voltage V1 (voltage +V1) with respect to the first electrode 31A and the second electrode 32A is applied to the third electrode 33A. Hereinafter, electrodialysis of lithium ions by using the lithium isotope enrichment device according to the modification of the first embodiment will be described with reference to FIG. 7.

As shown in FIG. 7, in the lithium isotope enrichment device 1A, the power supply 51 applies the positive voltage V1 (voltage +V1), with respect to the first electrode 31 and the second electrode 32, which are short-circuited from each other, to the third electrode 33A. Then, in the supply chamber 11, an electric field E1 (electric field +E1) directed from the third electrode 33A to the second electrode 32A is generated in the Li-containing aqueous solution FS, as indicated by the thick gray arrow, and the following reaction also occurs. In the vicinity of the third electrode 33A, OH⁻ in the Li-containing aqueous solution FS causes the reaction of Formula (1) below, releasing electrons e⁻ to the first electrode 31, where $H_2O$ and $O_2$ are generated to cause OH⁻ to decrease. In addition, in the vicinity of the second electrode 32A, $H^2O$ in the Li-containing aqueous solution FS is supplied with electrons e⁻, causing the reaction of Formula (2) below to generate $H_2$ and OH⁻. Li⁺ in the Li-containing aqueous solution FS migrates to the vicinity of the second electrode 32A, that is, the front surface of the electrolyte membrane 2 along the electric field +E1. As a result, a concentration gradient is generated in which Li⁺ is more concentrated in the vicinity of the front surface of the electrolyte membrane 2 than in the vicinity of the back surface of the electrolyte membrane 2 in the ⁶Li recovery aqueous solution ES. Due to this concentration gradient, that is, the chemical potential difference of Li⁺ in the vicinity of the front surface and back surface of the electrolyte membrane 2, the reaction of Formula (3) below occurs to increase the Li⁺ concentration in the front surface side portion (surface layer) of the electrolyte membrane 2. In addition, the reduction in Li⁺ in the Li-containing aqueous solution FS by the reaction of Formula (3) below compensates for the charge imbalance resulting from the combination of the increase in OH⁻ in the vicinity of the second electrode 32A and the decrease in OH⁻ in the vicinity of the third electrode 33A.

[Chem. 10]

$$2OH^- \rightarrow H_2O + \frac{1}{2}O_2 \uparrow + 2e^- \ \cdots \ (1)$$

$$2H_2O + 2e^- \rightarrow 2OH^- + H_2 \uparrow \ \cdots (2)$$

$$Li^+ \rightarrow Li^+(electrolyte) \qquad \cdots (3)$$

In the recovery chamber 12, on the other hand, the following reaction occurs. In the vicinity of the first electrode 31A, $H_2O$ in the ⁶Li recovery aqueous solution ES is supplied with electrons e⁻, causing the reaction of Formula (2) below to generate $H_2$ and OH⁻. To compensate for the charge imbalance caused by the increase in OH⁻ and due to the chemical potential difference of Li⁺ in the vicinity of the front surface and back surface of the electrolyte membrane 2, the reaction of Formula (4) below where Li⁺ in the electrolyte membrane 2 migrates to the Li recovery aqueous solution ES occurs in the vicinity of the back surface of the electrolyte membrane 2.

[Chem. 11]

$$2H_2O + 2e^- \rightarrow 2OH^- + H_2 \uparrow \cdots \qquad (2)$$

$$Li^+(electrolyte) \rightarrow Li^+ \cdots \qquad (4)$$

A series of reactions maintain the charge balance in the Li-containing aqueous solution FS, the ⁶Li recovery aqueous solution ES, and the electrolyte membrane 2. In addition, in this series of reactions, the charge compensation in the entire Li-containing aqueous solution FS and the ⁶Li recovery aqueous solution ES is maintained by the reaction amount of the reaction of Formula (1) ($O_2$ generation) in the vicinity of the third electrode 33A and the reaction amount of the reaction of Formula (2) ($H_2$ generation) in the vicinity of the respective electrodes 31A and 32A. The amount of $H_2$ generated in the ⁶Li recovery aqueous solution ES (the reaction amount of the reaction of Formula (2) in the vicinity of the first electrode 31A) corresponds to the amount of Li⁺ that has migrated through the electrolyte membrane 2 (the reaction amount of each of the reactions of Formula (3) and Formula (4)). The amount of Li⁺ that has migrated through the electrolyte membrane 2 (Li⁺ migration amount) is equal to or less than the amount of $O_2$ generated in the vicinity of the third electrode 33A (Li-containing aqueous solution FS), and corresponds to the difference between the amount of $O_2$ generated and the amount of $H_2$ generated in the vicinity of the second electrode 32A.

As with the first embodiment, the voltage V1 is set to more than or equal to a voltage at which the electrolysis reaction of water occurs. Even when the positions of the first electrode 31A and the second electrode 32A are switched with the position of the third electrode 33A, the application of the voltage that is positive on the supply chamber 11 side causes $Li^+$ in the Li-containing aqueous solution FS to migrate through the electrolyte membrane 2 and reach the $^6Li$ recovery aqueous solution ES. In this event, only the chemical potential difference of $Li^+$ causes the migration in the electrolyte membrane 2, thus obtaining a high $^6Li$ enrichment effect, as with the first embodiment.

In the lithium isotope enrichment method according to the first embodiment (see FIG. 2), the electric field +E1 is generated in the $^6Li$ recovery aqueous solution ES, making it possible to keep $Li^+$ away from the electrolyte membrane 2 and increase the chemical potential difference between both surfaces of the electrolyte membrane 2. It is also possible to employ a configuration in which no electrode (first electrode 31) is provided on the surface (front surface) of the electrolyte membrane 2 on the supply chamber 11 side. This allows the Li-containing aqueous solution FS to come into contact with the entire surface of the electrolyte membrane 2, and more $Li^+$ to be adsorbed thereon. Therefore, the first embodiment can achieve a higher $Li^+$ mobility.

In the lithium isotope enrichment device 1 according to the first embodiment (see FIG. 1), the recovery chamber 12 can be further partitioned into two or more chambers by one or more electrolyte membranes 2 to form a cascade structure between the second electrode 32 and the third electrode 33. A lithium isotope enrichment device (multi-stage lithium isotope enrichment device) 1B according to another modification of the first embodiment of the present invention includes: a processing tank 7A; four electrolyte membranes (lithium ion-conducting electrolyte membranes) 22, 23, 24, and 25 disposed parallel to each other at intervals so as to partition the processing tank 7A into five chambers 11, 12, 13, 14, and 15 in one direction; a first electrode 31 disposed in the chamber 11; a second electrode 32 applied to a back surface of the electrolyte membrane 22; a third electrode 33 disposed in the chamber 15; and a power supply 51. The lithium isotope enrichment device 1B further includes the third electrode 33 in each of the chambers 12, 13, and 14, and also includes a stirring device (circulator) 8 in each of the chambers 11, 12, 13, 14, and 15.

The lithium isotope enrichment device 1B has a structure in which the recovery chamber 12 in the lithium isotope enrichment device 1 according to the embodiment is partitioned into four chambers 12, 13, 14, and 15 by three electrolyte membranes 23, 24, and 25. That is, the electrolyte membrane 22 corresponds to the electrolyte membrane 2 in the lithium isotope enrichment device 1 according to the embodiment. The electrolyte membranes 22, 23, 24, and 25 may have the same configuration as that of the electrolyte membrane 2 in the lithium isotope enrichment device 1 according to the embodiment, and are referred to as the electrolyte membrane 2 as appropriate unless particularly distinguished from each other.

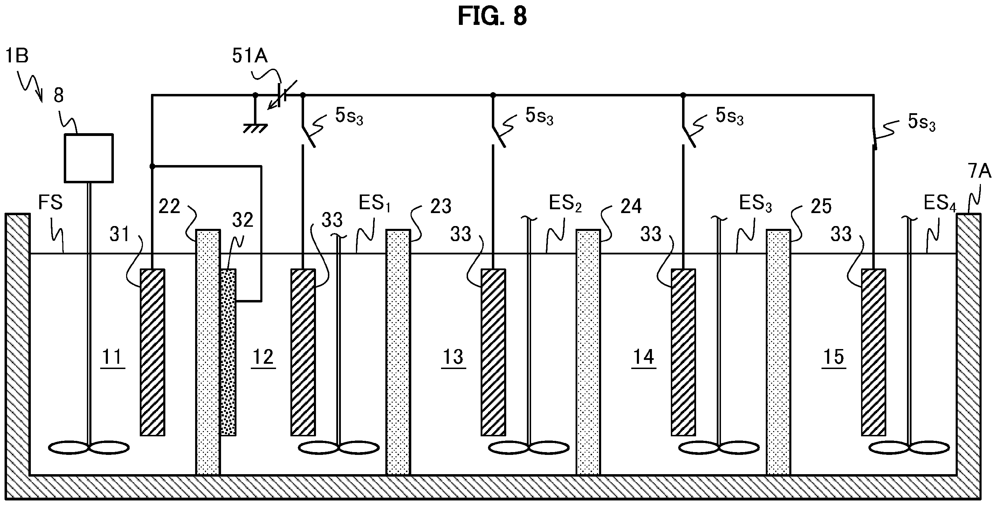

The supply chamber 11 at the left end in FIG. 8 stores the Li-containing aqueous solution FS as with the embodiment. The chambers 12, 13, 14, and 15 other than the supply chamber 11 contain $^6Li$ recovery aqueous solutions $ES_1$, $ES_2$, $ES_3$, and $ES_4$, respectively. The $^6Li$ recovery aqueous solutions $ES_1$, $ES_2$, $ES_3$, and $ES_4$ are aqueous solutions for storing lithium ions $Li^+$ recovered from the Li-containing aqueous solution FS, as with the $^6Li$ recovery aqueous solution ES in the lithium isotope enrichment device 1. The $^6Li$ recovery aqueous solutions $ES_1$, $ES_2$, $ES_3$, and $ES_4$ are pure water, for example, when the lithium isotope enrichment device 1B starts its operation. In the lithium isotope enrichment device 1B, the chamber 15 at the end opposite to the supply chamber 11 serves as a recovery chamber. The processing tank 7A only needs to have a shape having a volume corresponding to required processing capacity, and otherwise may have the same configuration as that of the processing tank 7 in the lithium isotope enrichment device 1 according to the embodiment.

In the lithium isotope enrichment device 1B, it is preferable that the resistance between the second electrode 32 and the third electrode 33 disposed in the recovery chamber 15, that is, the sum of the resistances of the electrolyte membranes 23, 24, and 25, the $^6Li$ recovery aqueous solutions $ES_1$, $ES_2$, and $ES_3$, and the $^6Li$ recovery aqueous solution $ES_4$ between the electrolyte membrane 25 and the third electrode 33 is low. To suppress the resistance, it is preferable that the electrolyte membranes 22 and 23 are disposed close to each other to the extent that the third electrode 33 disposed in the chamber 12 and the second electrode 32 do not short-circuit. It is more preferable that the third electrode 33 does not contact the electrolyte membrane 23. It is preferable that the electrolyte membranes 23, 24, and 25 are disposed close to each other to the extent that they do not contact the third electrode 33 disposed in each of the chambers 13 and 14. Therefore, it is preferable that the chambers 12, 13, and 14 are short in the partition direction of the processing tank 7A (the left-right direction in FIG. 8).

As with the power supply 51 in the above embodiment, the power supply 51A has a positive electrode connected to the first electrode 31 and the second electrode 32 and a negative electrode connected to the third electrode 33. In the lithium isotope enrichment device 1B according to this modification, the third electrode 33 is provided in each of the chambers 12, 13, 14, and 15, and any one of the third electrodes 33 is connected to the negative electrode of the power supply 51A. For this purpose, the lithium isotope enrichment device 1B further includes a switching element $5s_3$ that connects the negative electrode of the power supply 51A to any one of the third electrodes 33. Therefore, since the resistance between the second electrode 32 and the third electrode 33 changes depending on the third electrode 33 to be connected, the power supply 51A is preferably a variable power supply that changes the applied voltage stepwise.

The stirring device 8 circulates the aqueous solutions FS, $ES_1$, $ES_2$, $ES_3$, and $ES_4$ in the chambers 11, 12, 13, 14, and 15, respectively. The lithium isotope enrichment device 1B may further include a cooling device to cool the electrolyte membranes 22, 23, 24, and 25, if necessary (not shown). Since the chambers 12, 13, and 14 are narrow as described above, the cooling device is preferably configured such that a coolant is circulated in the inside of a double structure (jacket tank) of the processing tank 7A. Other components are as described in the configuration of the lithium isotope enrichment device 1.

A lithium isotope enrichment method using the lithium isotope enrichment device 1B according to this modification is the same as the method using the lithium isotope enrichment device 1. The supply chamber 11 is filled with a Li-containing aqueous solution FS containing $^7$Li and $^6$Li in their natural abundance ratio. The other chambers 12, 13, 14, and 15 are filled with pure water, respectively. As described above, the Li$^+$ mobility in the electrolyte membrane 2 increases as the Li$^+$ concentration of the aqueous solution on the upstream side (supply side) increases. Therefore, immediately after the start of operation, Li$^+$ migrates from the Li-containing aqueous solution FS in the supply chamber 11 to the aqueous solution $ES_1$, which is pure water, in the chamber 12. In other words, in terms of energy efficiency, it is preferable to increase the Li$^+$ concentration of the aqueous solution $ES_1$ by the Li$^+$ migration only in the electrolyte membrane 22. For this purpose, the power supply 51A has the negative electrode connected to the third electrode 33 in the chamber 12 to apply the voltage V1. When the aqueous solution $ES_1$ reaches a predetermined Li$^+$ concentration, the connection destination of the negative electrode of the power supply 51A is switched to the third electrode 33 in the chamber 13. Then, the electric field generated between the second electrode 32 and the third electrode 33 in the chamber 13 causes Li$^+$ to continue to migrate from the Li-containing aqueous solution FS to the aqueous solution $ES_1$ in the chamber 12, and also to start to migrate from the aqueous solution $ES_1$ to the aqueous solution $ES_2$ in the chamber 13. In this event, it is preferable to increase the voltage of the power supply 51A to maintain the electric field E1 generated in the aqueous solutions $ES_1$ and $ES_2$ between the second electrode 32 and the newly connected third electrode 33.

Then, the Li$^+$ migration from the Li-containing aqueous solution FS to the aqueous solution $ES_1$ and the Li$^+$ migration from the aqueous solution $ES_1$ to the aqueous solution $ES_2$ proceed concurrently. Once the aqueous solution $ES_2$ reaches a predetermined Li$^+$ concentration, the connection destination of the negative electrode of the power supply 51A is switched to the third electrode 33 in the chamber 14, and the voltage of the power supply 51A is further increased to start Li$^+$ migration from the aqueous solution $ES_2$ to the aqueous solution $ES_3$ in the chamber 14. This is repeated and finally the negative electrode of the power supply 51A is connected to the third electrode 33 in the chamber 15, causing Li$^+$ to migrate from left to right in FIG. 8. As a result, the aqueous solutions $ES_1$, $ES_2$, $ES_3$, and $ES_4$ in each of the chambers 12, 13, 14, and 15 turn from pure water at the start of operation to LiOH aqueous solutions containing Li with different $^6$Li isotope ratios at different concentrations. The $^6$Li isotope ratio increases in the order of FS < $ES_1$ < $ES_2$ < $ES_3$ < $ES_4$. Therefore, even when the isotope separation coefficient due to the Li$^+$ migration in one electrolyte membrane 2 is not high, Li with a high $^6$Li isotope ratio can be recovered from the recovery chamber 15.

In the lithium isotope enrichment device 1B, the number of electrolyte membranes 2 is not particularly specified. With more electrolyte membranes, Li with a higher $^6$Li isotope ratio can be recovered from the chamber at the end on the recovery side. In FIG. 8, all adjacent electrolyte membranes 2 and 2 are disposed facing each other. For example, adjacent electrolyte membranes 2 and 2 may be disposed perpendicularly to each other by coupling the devices with one or two 90° bends. In a chamber at the bend partitioned by electrolyte membranes 2 and 2 disposed perpendicularly to each other, the third electrode 33 is disposed parallel to the electrolyte membrane 2 on the supply side.

In the lithium isotope enrichment method using the lithium isotope enrichment device 1B, in order to keep the Li$^+$ concentration high in the Li-containing aqueous solution FS and to suppress a decrease in the $^6$Li isotope ratio, it is preferable to replace the Li-containing aqueous solution FS in the supply chamber 11 or circulate it to the outside of the processing tank 7A during operation. It is also preferable to add water ($H_2O$) or the like to the chambers 12, 13, 14, and 15 as necessary during operation so that the liquid levels of the chambers 11, 12, 13, 14, and 15 are the same. The Li-containing aqueous solution FS and the $^6$Li recovery aqueous solutions $ES_1$, $ES_2$, $ES_3$, and $ES_4$ may contain a solute that lowers the coagulation point to below 0 °C, and the electrolyte membranes 22, 23, 24, and 25 may be cooled to below 0 °C and above the coagulation point by a cooling device.

(Multi-Stage Lithium Isotope Enrichment Device)

As described above, in the lithium isotope enrichment device 1 (see FIG. 1) according to the first embodiment, a Li-containing aqueous solution with a higher isotope ratio of $^6$Li can be obtained by feeding the $^6$Li recovery aqueous solution ES after the recovery of Li obtained in the recovery chamber 12 into an emptied supply chamber 11 for operation. A multi-stage lithium isotope enrichment device that enriches $^6$Li stepwise can be obtained by employing a configuration in which the recovery chamber 12 of the lithium isotope enrichment device 1 is coupled to a supply chamber 11 of a different lithium isotope enrichment device 1 by a channel such as a pipe to supply the $^6$Li recovery aqueous solution ES in the recovery chamber 12 to this supply chamber 11. The $^6$Li recovery aqueous solution ES in the recovery chamber 12 may be pumped out by a pump or the like, for example, or may be circulated by installing the lithium isotope enrichment device 1 on the upstream side (supply side) at a relatively high position with an inclined pipe. The movement of the aqueous solution between the lithium isotope enrichment devices 1, 1 may be performed constantly at a predetermined flow rate, or may be performed at regular intervals.

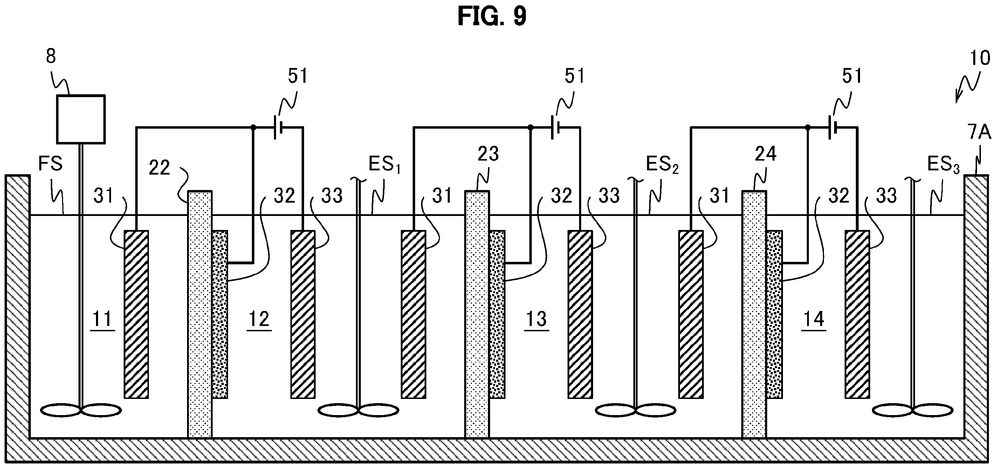

A downsized multi-stage lithium isotope enrichment device can be obtained by employing a cascade structure in which the recovery chamber 12 of the lithium isotope enrichment device 1 is coupled to a supply chamber 11 of a different lithium isotope enrichment device 1 in an integrating manner. A multi-stage lithium isotope enrichment device according to the first embodiment of the present invention will be described below with reference to FIG. 9.

A multi-stage lithium isotope enrichment device 10 according to the first embodiment of the present invention includes: a processing tank 7A; three electrolyte membranes (lithium ion-conducting electrolyte membranes) 22, 23, and 24 disposed parallel to each other at intervals so as to partition the processing tank 7A into four chambers 11, 12, 13, and 14 in one direction; first electrodes 31 disposed facing front surfaces (left side surfaces in FIG. 9) of the electrolyte membranes 22, 23, and 24; second electrodes 32 applied to back surfaces of the electrolyte membranes 22, 23, and 24; third electrodes 33 disposed facing the second electrodes 32; and three power supplies 51. The multi-stage lithium isotope enrichment device 10 further includes a stirring device (circulator) 8 in each of the chambers 11, 12, 13, and 14. The multi-stage lithium isotope enrichment device 10 has a structure in which three of the lithium isotope enrichment devices 1 are coupled to each other such that the respective processing tanks 7 are integrated into the processing tank 7A. The recovery chamber 12 of one of neighboring two of the lithium isotope enrichment devices 1, 1 also serves as the supply chamber 11 of the other. Hence, in the multi-stage lithium isotope enrichment device 10, the third electrode 33 and the first electrode 31 are disposed in each of the chambers 12 and 13, except for the chambers 11 and 14 at both ends. Note that the electrolyte membranes 22, 23, and 24 are referred to as the electrolyte membrane 2 as appropriate unless particularly distinguished from each other.

The chamber 11 at the end of the supply chamber 11 side (the left side in FIG. 9; hereinafter referred to as the supply side) of the lithium isotope enrichment device 1 is the supply chamber 11, as with the lithium isotope enrichment device 1, and stores the Li-containing aqueous solution FS. The chambers 12, 13, and 14 contain $^6$Li recovery aqueous solutions $ES_1$, $ES_2$, and $ES_3$, respectively. The $^6$Li recovery aqueous solutions $ES_1$, $ES_2$, and $ES_3$ are aqueous solutions for storing lithium ions $Li^+$ recovered from the Li-containing aqueous solution FS, as with the $^6$Li recovery aqueous solution ES in the lithium isotope enrichment device 1. The $^6$Li recovery aqueous solutions $ES_1$, $ES_2$, and $ES_3$ are pure water, for example, when the multi-stage lithium isotope enrichment device 20 starts its operation. Note that the side of the recovery chamber 12 of the lithium isotope enrichment device 1 (the right side in FIG. 9) is referred to as the recovery side. In the multi-stage lithium isotope enrichment device 10, the chamber 14 at the end on the recovery side serves as a recovery chamber.

In the multi-stage lithium isotope enrichment device 10, the second electrode 32, the third electrode 33, and the first electrode 31 are disposed in this order from the supply side in each of the chambers 12 and 13, except for the chambers 11 and 14 at both ends. The third electrode 33 and the first electrode 31 in the chambers 12 and 13 are disposed with a sufficient distance from each other. Therefore, the chambers 12 and 13 are each designed to have a sufficient length in the partition direction of the processing tank 7A (the coupling direction of the lithium isotope enrichment devices 10, the left-right direction in FIG. 9). Specifically, the resistance between the third electrode 33 and the first electrode 31 (the resistance of the portion of the $^6$Li recovery aqueous solutions $ES_1$ and $ES_2$ sandwiched between the third electrode 33 and the first electrode 31) $R_{ES'}$ is designed to be higher than the resistance $R_{ES}$ between the second electrode 32 and the third electrode 33 and the resistance $(R_{FS}+R_{EL})$ between the first electrode 31 and the second electrode 32 sandwiching the electrolyte membranes 23 and 24 (see FIG. 3), preferably by a larger difference. Note that, as with the lithium isotope enrichment device 1, the first electrode 31 may have a porous structure and may be provided in contact with the front surfaces of the electrolyte membranes 22, 23, and 24.

The power supply 51 is as described in the configuration of the lithium isotope enrichment device 1. In the multi-stage lithium isotope enrichment device 10, it is preferable that the three power supplies 51 are connected (driven) independently to the electrodes 31, 32, and 33. It is preferable that the power supplies 51 are not grounded, or that only one of the power supplies 51 is grounded in the multi-stage lithium isotope enrichment device 10. In FIG. 9, the positive electrode of the first power supply 51 from the supply side is grounded so that the Li-containing aqueous solution FS in the supply chamber 11 is grounded to the reference potential. However, when the resistance $R_{ES'}$ between the third electrode 33 and the first electrode 31 in each of the chambers 12 and 13 is sufficiently high, two or more of the power supplies 51 may be grounded.

The stirring device 8 circulates the aqueous solutions $ES_1$, $ES_2$, and $ES_3$ in the chambers 11, 12, 13, and 14, respectively. The multi-stage lithium isotope enrichment device 10 may further include a cooling device to cool the electrolyte membranes 22, 23, and 24, if necessary (not shown). Other components are as described in the configuration of the lithium isotope enrichment devices 1 and 1B.

(Lithium Isotope Enrichment Method Using Multi-Stage Lithium Isotope Enrichment device)

A lithium isotope enrichment method using the multi-stage lithium isotope enrichment device 10 is the same as the method using the lithium isotope enrichment devices 1 and 1B. In FIG. 9, the supply chamber 11 at the left end is filled with a Li-containing aqueous solution FS containing $^7$Li and $^6$Li in their natural abundance ratio. The other chambers 12, 13, and 14 are filled with pure water. As with the lithium isotope enrichment method using the lithium isotope enrichment device 1B (see FIG. 8), immediately after the start of operation, Li$^+$ migrates from the Li-containing aqueous solution FS in the supply chamber 11 to the aqueous solution ES$_1$, which is pure water, in the chamber 12. In other words, it is preferable to increase the Li$^+$ concentration of the aqueous solution ES$_1$ by the Li$^+$ migration only in the electrolyte membrane 22. For this purpose, only the first power supply 51 on the supply side is driven. Then, when the aqueous solution ES$_1$ reaches a predetermined Li$^+$ concentration, the second power supply 51 on the supply side is further driven to start Li$^+$ migration from the aqueous solution ES$_1$ to the aqueous solution ES$_2$ in the chamber 13.

Then, the Li$^+$ migration from the Li-containing aqueous solution FS to the aqueous solution ES$_1$ and the Li$^+$ migration from the aqueous solution ES$_1$ to the aqueous solution ES$_2$ proceed concurrently. Once the aqueous solution ES$_2$ reaches a predetermined Li$^+$ concentration, the third power supply 51 on the supply side is further driven to start Li$^+$ migration from the aqueous solution ES$_2$ to the aqueous solution ES$_3$ in the chamber 14. Eventually, all the power supplies 51A in the multi-stage lithium isotope enrichment device 10 are thus driven, causing Li$^+$ to migrate from left to right in FIG. 9. As a result, the aqueous solutions ES$_1$, ES$_2$, and ES$_3$ in each of the chambers 12, 13, and 14 turn from pure water at the start of operation to LiOH aqueous solutions containing Li with different $^6$Li isotope ratios at different concentrations. The $^6$Li isotope ratio increases in the order of FS < ES$_1$ < ES$_2$ < ES$_3$. Therefore, even when the isotope separation coefficient due to the Li$^+$ migration in one electrolyte membrane 2 is not high, Li with a high $^6$Li isotope ratio can be recovered from the recovery chamber 14.

The multi-stage lithium isotope enrichment device 10 is designed such that substantially no electric field is generated between the third electrode 33 and the first electrode 31 in the chambers 12 and 13. Even if an electric field is generated, the multi-stage lithium isotope enrichment device 10 is designed to sufficiently weaken the electric field compared to the electric field +E1 (see FIG. 2) generated between the second electrode 32 and the third electrode 33 in the same chamber. To this end, as described above, the spacing between the third electrode 33 and the first electrode 31 is set to be sufficiently wide. With such a configuration, two or more adjacent power supplies 51 can be driven simultaneously.

In the lithium isotope enrichment method using the multi-stage lithium isotope enrichment device 10, in order to keep the Li$^+$ concentration high in the Li-containing aqueous solution FS and to suppress a decrease in the $^6$Li isotope ratio, it is preferable to replace the Li-containing aqueous solution FS in the supply chamber 11 or circulate it to the outside of the processing tank 7A during operation. It is also preferable to add water ($H_2O$) or the like to the chambers 12, 13, and 14 as necessary during operation so that the liquid levels of the chambers 11, 12, 13, and 14 are the same.

In the multi-stage lithium isotope enrichment device 10, the number of the electrolyte membranes 2 and the number of the electrodes 31, 32, and 33 provided for each electrolyte membrane 2 are not particularly specified. With more electrolyte membranes and electrodes, that is, more lithium isotope enrichment devices 1 coupled, Li with a higher $^6$Li isotope ratio can be recovered from the chamber on the recovery side. In FIG. 9, all adjacent electrolyte membranes 2 and 2 are disposed facing each other in the structure where the lithium isotope enrichment devices 1 are coupled in one direction. For example, adjacent electrolyte membranes 2 and 2 may be disposed perpendicularly to each other by coupling the devices with one or two 90° bends. In a chamber at the bend partitioned by electrolyte membranes 2 and 2 disposed perpendicularly to each other, the third electrode 33 and the first electrode 31 are also disposed perpendicularly to each other. Therefore, it is preferable that the electrodes are disposed so that the spacing therebetween at the shortest portion on the inside of the bend is sufficiently long.

As for the lithium isotope enrichment devices 1A (see FIG. 7) according to the modification of the first embodiment, again, two or more of them can be coupled by integrating their respective processing tanks 7 to obtain a multi-stage lithium isotope enrichment device. Alternatively, one or more of each of the lithium isotope enrichment device 1 and the lithium isotope enrichment device 1A can be coupled to obtain a multi-stage lithium isotope enrichment device.

[Second Embodiment]

As described in the first embodiment, it is preferable that the Li$^+$ concentration of the Li-containing aqueous solution FS is maintained high during operation. Therefore, in addition to replacing the Li-containing aqueous solution FS in the supply chamber 11 or circulating it to the outside of the processing tank 7, the following configuration is employed to maintain the Li$^+$ concentration of the Li-containing aqueous solution FS with good workability and without significantly increasing the device size. A lithium isotope enrichment device according to a second embodiment of the present invention will be described below.

(Lithium Isotope Enrichment device)

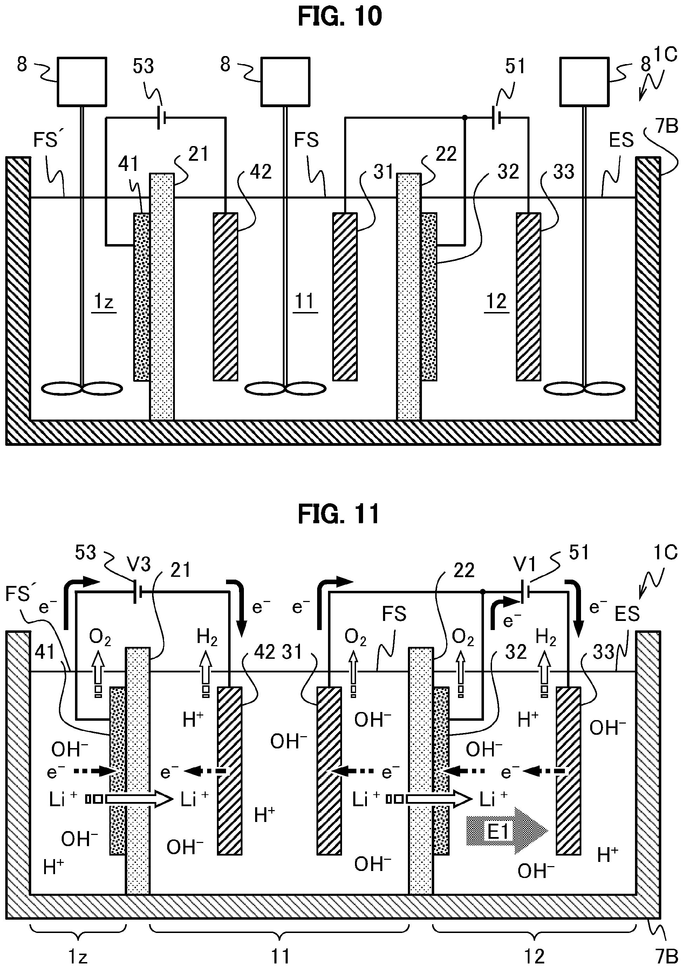

As shown in FIG. 10, a lithium isotope enrichment device 10C according to the second embodiment of the present invention includes: a processing tank 7B; an electrolyte membrane (lithium ion-conducting electrolyte membrane for lithium replenishment) 21; an electrolyte membrane (lithium ion-conducting electrolyte membrane) 22; a first electrode 31; a second electrode 32; a third electrode 33; a fourth electrode 41; a fifth electrode 42; a power supply 51; a power supply (lithium replenishment power supply) 53; and a stirring device (circulator) 8. The processing tank 7B is partitioned by the electrolyte membranes 21 and 22 into three chambers: a replenishment chamber (lithium replenishment chamber) 1z that stores a Li-containing aqueous solution FS', a supply chamber (first chamber) 11 that stores a Li-containing aqueous solution FS, and a recovery chamber (second chamber) 12 that stores a $^6$Li recovery aqueous solution ES. The lithium isotope enrichment device 1C differs from the lithium isotope enrichment device 1 according to the first embodiment (see FIG. 1) in further including the electrolyte membrane 21 that partitions the processing tank 7B on the supply chamber 11 side of the electrolyte membrane 22, the electrodes 41 and 42 provided in each of the replenishment chamber 1z, which is separated from the supply chamber 11 by the electrolyte membrane 21, and the supply chamber 11, and the power supply 53 connected between the electrodes 41 and 42. The other configuration is the same as that of the lithium isotope enrichment device 1 according to the first embodiment. The lithium isotope enrichment device 1C may also include a cooling device, a liquid level sensor, exhaust means, and the like, as necessary.

As with the lithium isotope enrichment device 1, the portion of the lithium isotope enrichment device 1C, including the replenishment chamber 1z, the supply chamber 11, the electrolyte membrane 21 that partitions these chambers, the electrodes 41 and 42, and the power supply 53 is a lithium recovery device using a lithium recovery method using a lithium ion-conducting electrolyte membrane (for example, Patent Literatures 2 and 3). This lithium recovery device allows lithium ions to migrate from the Li-containing aqueous solution FS' accommodated in the replenishment chamber 1z to the Li-containing aqueous solution FS accommodated in the supply chamber 11. That is, the lithium isotope enrichment device 1C according to this embodiment is a cascade-structured device in which the lithium recovery device and the lithium isotope enrichment device 1 according to the first embodiment are coupled by integrating their respective processing tanks with the supply chamber 11.

The electrolyte membrane 22 has the same configuration as the electrolyte membrane 2 in the lithium isotope enrichment device 1 according to the above embodiment. The electrolyte membrane 21 can also have the same configuration as the electrolyte membrane 22.

The fourth electrode 41 and the fifth electrode 42 are electrodes paired up to apply a voltage between both surfaces of the electrolyte membrane 21. The fourth electrode 41 is provided in the replenishment chamber 1z in contact with or facing the electrolyte membrane 21. The fifth electrode 42 is provided in the supply chamber 11 in contact with or facing the electrolyte membrane 21. It is preferable that one or both of the fourth electrode 41 and the fifth electrode 42 have a porous structure and are in contact with the electrolyte membrane 21. It is more preferable that one of the fourth electrode 41 and the fifth electrode 42 is in contact with the electrolyte membrane 21. It is further preferable that the fourth electrode 41 is in contact with the electrolyte membrane 21 as shown in FIG. 10 (see Patent Literature 3). At least one of the electrodes 41 and 42 being in contact with the electrolyte membrane 21 enables a voltage to be applied to a wide range of the electrolyte membrane 21. Since one of the electrodes 41 and 42 is in contact with the electrolyte membrane 21 and the other is separated, even if a voltage V3 applied by the power supply 53 connected between the electrodes 41 and 42 is somewhat large, a potential difference between both surfaces of the electrolyte membrane 21 is suppressed. This makes it possible to suppress a decrease in energy efficiency of Li$^+$ migration in the electrolyte membrane 21, as will be described later.

As described above, the fourth electrode 41 is provided in contact with the surface (front surface) of the electrolyte membrane 21 on the replenishment chamber 1z side, and applies a voltage to a wide range of the electrolyte membrane 21. The fourth electrode 41 has a porous structure such as a net, as with the second electrode 32, so that the Li-containing aqueous solution FS' comes into contact with a sufficient area of the front surface of the electrolyte membrane 21. The fourth electrode 41 is formed of an electrode material that has electron conductivity and is stable even when a voltage is applied in the Li-containing aqueous solution FS', and that also has catalytic activity for the reaction of Formula (1) below and the reaction of Formula (3) below. The electrode material for the fourth electrode 41 is preferably a material that can be easily processed into the shape described above. The fourth electrode 41 is preferably made of platinum (Pt), for example.

[Chem. 12]

$$2OH^- \rightarrow H_2O + \frac{1}{2}O_2 \uparrow + 2e^- \quad \cdots (1)$$

$$Li^+ \rightarrow Li^+(electrolyte) \qquad \cdots (3)$$

The fifth electrode 42 is disposed in the supply chamber 11 so as not to come into contact with the electrolyte membrane 21. The fifth electrode 42 is preferably at a short distance from the electrolyte membrane 21, on the other hand, and is preferably disposed parallel to the electrolyte membrane 21. As with the first electrode 31, the fifth electrode 42 preferably has a shape such as a net, through which the aqueous solution passes, so that the contact area with the Li-containing aqueous solution FS is increased and the Li-containing aqueous solution FS in contact with the front surface of the electrolyte membrane 2in the supply chamber 11 is continuously replaced. The fifth electrode 42 is preferably formed of an electrode material that has electron conductivity and is stable even when a voltage is applied in the Li-containing aqueous solution FS, and that has catalytic activity for the reaction of Formula (2) below. Such an electrode material is preferably platinum (Pt), for example. Alternatively, the fifth electrode 42 can be made of carbon (C), copper (Cu), or stainless steel, which is stable at a potential lower than the potential at which the reaction of Formula (2) below occurs. The fifth electrode 42 is, more preferably, made of a material carrying Pt fine particles on the surface of such materials, which function as a catalyst. As with the fourth electrode 41, the fifth electrode 42 may have a porous structure and be provided in contact with the electrolyte membrane 21.

[Chem. 13]

$$2H_2O + 2e^- \rightarrow 2OH^- + H_2 \uparrow \qquad (2)$$

Furthermore, in the lithium isotope enrichment device 1C, the fifth electrode 42 and the first electrode 31 are disposed in one supply chamber 11. The supply chamber 11 is designed to have a sufficient length in the partition direction (between the electrolyte membranes 21 and 22) so that the fifth electrode 42 and the first electrode 31 are disposed with a sufficient distance from each other. Specifically, even if the first electrode 31 is connected to the power supply 51 and the fifth electrode 42 is connected to the power supply 53, respectively, an electric field is substantially prevented from being generated between the fifth electrode 42 and the first electrode 31. Even if an electric field is generated, the lithium isotope enrichment device 1C is designed to sufficiently weaken the electric field so as not to inhibit the reaction in the vicinity of the fifth electrode 42 and the first electrode 31.

The power supply 53 is a DC power supply, as with the power supply 51, and has a positive electrode connected to the fourth electrode 41 and a negative electrode connected to the fifth electrode 42 to apply a positive voltage V3 (voltage +V3), with respect to the fifth electrode 42, to the fourth electrode 41. The power supply 53 may be a variable power supply so that $Li^+$ mobility in the electrolyte membrane 21 can be adjusted.

The Li-containing aqueous solution FS' is a Li source that supplies Li to the Li-containing aqueous solution FS to maintain its $Li^+$ concentration high during operation of the lithium isotope enrichment device 1C. The Li-containing aqueous solution FS' is an aqueous solution containing $^7Li$ and $^6Li$ cations $^7Li^+$ and $^6Li^+$ in their natural abundance ratios. As with the Li-containing aqueous solution FS, the Li-containing aqueous solution FS' is a lithium hydroxide (LiOH) aqueous solution, for example. Since a low $Li^+$ concentration reduces the $Li^+$ mobility in the electrolyte membrane 21, the Li-containing aqueous solution FS' preferably has a higher $Li^+$ concentration at the start of operation of the lithium isotope enrichment device 1C. The Li-containing aqueous solution FS' is more preferably a saturated aqueous solution or a supersaturated aqueous solution of $Li^+$. As in the first embodiment, the Li-containing aqueous solution FS and the $^6Li$ recovery aqueous solution ES are, for example, a LiOH saturated aqueous solution or supersaturated aqueous solution, and pure water at the start of operation of the lithium isotope enrichment device 1C.

(Lithium Isotope Enrichment method)

A lithium isotope enrichment method using the lithium isotope enrichment device according to the second embodiment of the present invention will be described with reference to FIG. 11. In the lithium isotope enrichment device 1C according to this embodiment, the $Li^+$ migration from the Li-containing aqueous solution FS in the supply chamber 11 to the $^6Li$ recovery aqueous solution ES in the recovery chamber 12 is the same as in the first embodiment (see FIGs. 2 and 4A to 4C). Here, the $Li^+$ migration from the Li-containing aqueous solution FS' in the replenishment chamber 1z to the Li-containing aqueous solution FS in the supply chamber 11 will be described. FIG. 11 omits the stirring device 8.

As shown in FIG. 11, in the lithium isotope enrichment device 1C, the power supply 53 applies a positive voltage V3 (voltage +V3), with respect to the fifth electrode 42, to the fourth electrode 41. Then, the following reaction occurs in the replenishment chamber 1z. In the vicinity of the fourth electrode 41, hydroxide ions ($OH^-$) in the Li-containing aqueous solution FS' causes the reaction of Formula (1) below, releasing electrons $e^-$ to the fourth electrode 41 to generate water ($H_2O$) and oxygen ($O_2$) and causing $OH^-$ to decrease. In the Li-containing aqueous solution FS', to compensate for the charge imbalance as $OH^-$ decreases, the reaction of Formula (3) below where $Li^+$ dissolves in the electrolyte membrane 21 occurs in the vicinity of the front surface of the electrolyte membrane 21, that is, the fourth electrode 41.

[Chem. 14]

$$2OH^- \rightarrow H_2O + \frac{1}{2}O_2 \uparrow + 2e^- \quad \cdots (1)$$

$$Li^+ \rightarrow Li^+(electrolyte) \qquad \cdots (3)$$

On the other hand, the application of the voltage +V3 causes the following reaction in the supply chamber 11. In the vicinity of the fifth electrode 42, $H_2O$ in the Li-containing aqueous solution FS is supplied with electrons $e^-$ to cause the reaction of Formula (2) below and generate $H_2$ and $OH^-$. Then, as $OH^-$ increases, the reaction of Formula (4) below occurs in the vicinity of the back surface of the electrolyte membrane 21, where $Li^+$ in the electrolyte membrane 21 migrates to maintain charge balance. As a result, $Li^+$ in the Li-containing aqueous solution FS', the electrolyte membrane 21, and the vicinity of the electrolyte membrane 21 in the Li-containing aqueous solution FS passes through the electrolyte membrane 2 and migrates into the Li-containing aqueous solution FS from the Li-containing aqueous solution FS' due to differences in electrochemical potential of $Li^+$.

[Chem. 15]

$$2H_2O + 2e^- \rightarrow 2OH^- + H_2 \uparrow \qquad (2)$$

$$Li^+(electrolyte) \rightarrow Li^+ \qquad (4)$$

From the reaction of Formula (3) to the reaction of Formula (4), that is, infiltration of $Li^+$ in the Li-containing aqueous solution FS' from the surface of the electrolyte membrane 21, $Li^+$ migration in the electrolyte membrane 21, and the migration of $Li^+$ in the electrolyte membrane 21 to the Li-containing aqueous solution FS are the same as the migration of $Li^+$ in the Li-containing aqueous solution FS to the Li-containing aqueous solution FS through the electrolyte membrane 22 (electrolyte membrane 2), and are as described in the first embodiment. However, in the electrolyte membrane 21, the application of the voltage +V3 causes a potential gradient in which the potential on the supply chamber 11 side is low. Therefore, regardless of the $Li^+$ concentration gradient, that is, even if the $Li^+$ concentration on the supply chamber 11 side is high between both surfaces of the electrolyte membrane 21, $Li^+$ migrates through the electrolyte membrane 21 from the replenishment chamber 1z side to the supply chamber 11 side.

Since the larger the voltage V3, the higher the $Li^+$ mobility in the electrolyte membrane 21 (see FIG. 6), it is preferable to set the voltage V3 according to the $Li^+$ mobility in the electrolyte membrane 22. The $Li^+$ mobility in the electrolyte membrane 21 due to the electrochemical potential difference of $Li^+$ can be set higher than the $Li^+$ mobility in the electrolyte membrane 22 due to the chemical potential difference only. As shown in FIG. 11, while the lithium isotope enrichment device 1C is in operation (while the power supply 51 is driven), the power supply 53 may be constantly driven to continuously replenish the Li-containing aqueous solution FS with $Li^+$. Alternatively, the power supply 53 may be driven for a short time every fixed period. By applying a large voltage V3, $Li^+$ can rapidly migrate to the Li-containing aqueous solution FS.

Here, when the voltage V3 is large and the potential difference between both surfaces is larger than or equal to a voltage that causes some of the transition metal ions in the electrolyte membrane 21 to be reduced (for example, when the electrolyte membrane 21 is LLTO, $Ti^{4+}+e^- \rightarrow Ti^{3+}$), the electrolyte membrane 21 exhibits electron conductivity. Then, the electrons $e^-$ conducting through the electrolyte membrane 21 generate Joule heat, rapidly reducing the energy efficiency in $Li^+$ migration. Even when the voltage V3 is further increased, the $Li^+$ mobility does not increase by the amount of increase. Specifically, depending on the electron conductivity of the electrolyte membrane 21 and the electrode performance that determines the electrode reaction overvoltage, when a voltage of more than 2.0 V is applied with a potential difference between both surfaces, the electrolyte membrane 21 can exhibit the electron conductivity. In the lithium isotope enrichment device 1C, one of the electrodes 41 and 42 sandwiching the electrolyte membrane 21 from both sides is disposed apart from the electrolyte membrane 21. Therefore, even if the voltage V3 is increased to a certain level, the potential difference between both surfaces of the electrolyte membrane 21 does not easily reach the above voltage. However, the potential difference reaches the above voltage when the voltage V3 is further increased. It is thus preferable to set the voltage V3 to such a voltage or less.

With the lithium isotope enrichment device 1C according to this embodiment, the Li-containing aqueous solution FS is constantly or periodically replenished with $Li^+$ whose $^6Li$ isotope ratio is the natural ratio. This makes it possible to maintain high $Li^+$ concentration of the Li-containing aqueous solution FS and reduce the rate of decrease in the $^6Li$ isotope ratio. Thus, long-term continuous operation is possible without circulating the Li-containing aqueous solution FS with the outside. However, when the operation is extended to a certain period or more, the large amount of $^7Li^+$ remaining in the Li-containing aqueous solution FS significantly reduces the $^6Li$ isotope ratio, compared to the natural ratio, and also reduces the Li$^+$ concentration in the Li-containing aqueous solution FS'. As a result, the Li$^+$ mobility in the electrolyte membrane 21 relative to the voltage V3 decreases, resulting in reduced energy efficiency. Therefore, it is preferable to replace the Li-containing aqueous solutions FS' and FS in the replenishment chamber 1z and the supply chamber 11.

(First Modification)

The lithium isotope enrichment device 1C according to this embodiment replenishes the Li-containing aqueous solution FS with Li$^+$ using a known lithium recovery method. Therefore, Li$^+$ to be replenished to the Li-containing aqueous solution FS can also be recovered from seawater or the like. However, in an aqueous solution with a low Li$^+$ concentration such as seawater, Li$^+$ mobility is rate-limited by the diffusion of Li$^+$ to the surface of the electrolyte membrane 21, making it difficult to increase with respect to the voltage V3, and resulting in low energy efficiency. Furthermore, chloride ions contained in seawater deteriorate the catalytic activity of the fourth electrode 41 and are also adsorbed on the surface of the electrolyte membrane 21, resulting in a decrease in Li$^+$ mobility. Therefore, to efficiently replenish Li$^+$ from an aqueous solution containing Li$^+$ at low concentration, the following configuration is employed.

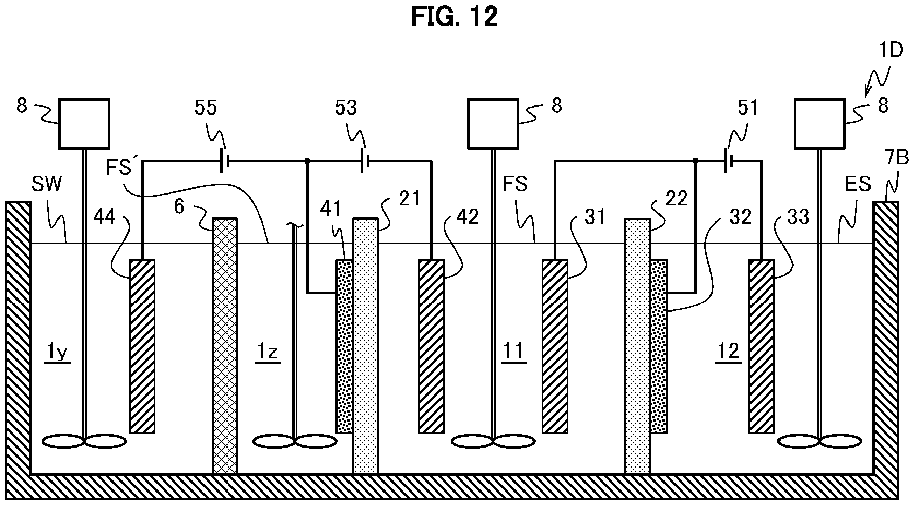

As shown in FIG. 12, a lithium isotope enrichment device 1D according to the first modification of the second embodiment of the present invention includes: a processing tank 7B; an electrolyte membrane (lithium ion-conducting electrolyte membrane for lithium replenishment) 21; an electrolyte membrane (lithium ion-conducting electrolyte membrane) 22; a first electrode 31; a second electrode 32; a third electrode 33; a fourth electrode 41; a fifth electrode 42; a sixth electrode 44; a power supply 51; a power supply (lithium replenishment power supply) 53; a power supply 55; an ion exchange membrane 6; and a stirring device (circulator) 8. The processing tank 7B is partitioned by the ion exchange membrane 6 and the electrolyte membranes 21 and 22 into four chambers: a raw material chamber 1y that stores a Li-containing aqueous solution SW, a replenishment chamber (lithium replenishment chamber) 1z that stores a Li-containing aqueous solution FS', a supply chamber (first chamber) 11 that stores a Li-containing aqueous solution FS, and a recovery chamber (second chamber) 12 that stores a $^6$Li recovery aqueous solution ES. The lithium isotope enrichment device 1D differs from the lithium isotope enrichment device 1C according to the second embodiment (see FIG. 10) in further including the ion exchange membrane 6 that partitions the processing tank 7B on the replenishment chamber 1z side of the electrolyte membrane 21, the sixth electrode 44 provided in the raw material chamber 1y separated from the replenishment chamber 1z by the ion exchange membrane 6, and the power supply 55 connected between the electrodes 44 and 41. In the lithium isotope enrichment device 1D, the fourth electrode 41 is provided in contact with the surface of the electrolyte membrane 21 on the replenishment chamber 1z side. The other configuration is the same as that of the lithium isotope enrichment device 1C according to the above embodiment. The lithium isotope enrichment device 1D may also include a cooling device, a liquid level sensor, exhaust means, and the like, as necessary.

The ion exchange membrane 6 conducts cations including at least Li$^+$. This prevents the Li-containing aqueous solution FS' in the replenishment chamber 1z from containing halide ions such as Cl$^-$. The ion exchange membrane 6 can be a cation exchange membrane that passes cations and blocks anions, a monovalent cation permselective ion exchange membrane that passes monovalent cations only, such as Li$^+$, K$^+$, and Na$^+$, a bipolar monovalent ion permselective ion exchange membrane that passes monovalent ions, or the like. Known ion exchange membranes can be used. For example, SELEMION (registered trademark) CMV (manufactured by AGC Engineering Co., Ltd.) or NEOSEPTA CSE (manufactured by Astom Co., Ltd.) can be used as the cation exchange membrane. SELEMION (registered trademark) CSO (manufactured by AGC Engineering Co., Ltd.) can be used as the monovalent cation permselective ion exchange membrane. NEOSEPTA CIMS (manufactured by Astom Co., Ltd.) can be used as the bipolar monovalent ion permselective ion exchange membrane. In the lithium isotope enrichment device 1D, the distance between the sixth electrode 44 and the fourth electrode 41 is preferably short, and thus the ion exchange membrane 6 is preferably disposed at a short distance from the electrolyte membrane 21 (fourth electrode 41). Therefore, the replenishment chamber 1z is preferably short in the partition direction of the processing tank 7B.

The sixth electrode 44 is an electrode that is paired with the fourth electrode 41 to allow cations including Li$^+$ in the Li-containing aqueous solution SW to migrate to the Li-containing aqueous solution FS', and that also sets the surface of the electrolyte membrane 21 to have a relatively low potential in the Li-containing aqueous solution FS'. The sixth electrode 44 is preferably disposed parallel to the fourth electrode 41 in the raw material chamber 1y, and is preferably disposed at a short distance from the fourth electrode 41 across the ion exchange membrane 6. Moreover, the sixth electrode 44 preferably has a shape such as a net so as to increase the contact area with the Li-containing aqueous solution SW. The sixth electrode 44 is preferably formed of an electrode material that has electron conductivity and is stable even when a voltage is applied to the Li-containing aqueous solution SW, and that also has a catalytic activity for the reaction of Formula (1) below. When the Li-containing aqueous solution SW contains halide ions, the sixth electrode 44 is preferably made of a material that has catalytic activity for the oxidation reaction, for example, the reaction of Formula (11) below in the case of chloride ions (Cl$^-$). Such an electrode material for the sixth electrode 44 is preferably, for example, carbon (C), platinum (Pt), or carbon carrying platinum fine particles as a catalyst.

[Chem. 16]

$$2OH^- \rightarrow H_2O + \frac{1}{2}O_2 \uparrow + 2e^- \quad \cdots (1)$$

$$2Cl^- \rightarrow Cl_2 \uparrow + 2e^- \quad \cdots (11)$$

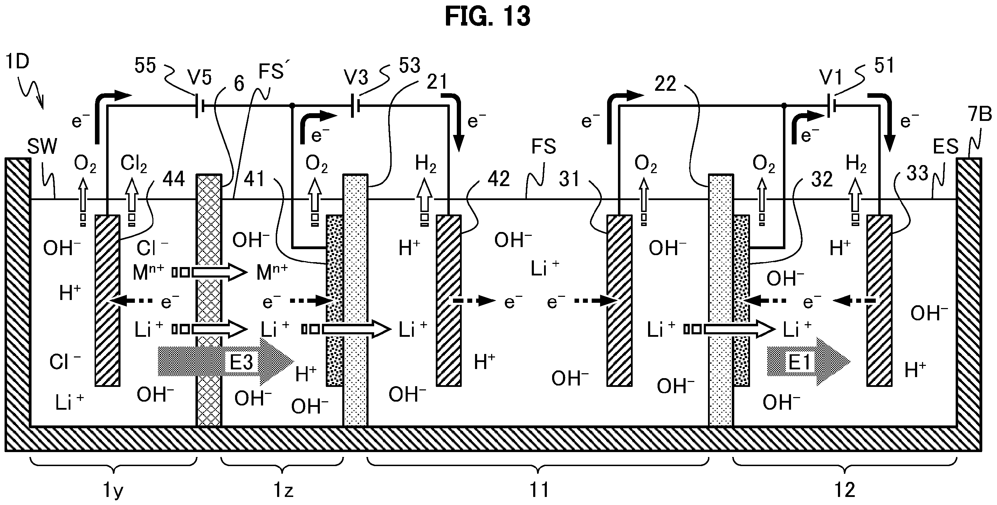

The power supply 55 is a DC power supply, as with the power supply 53, and has a positive electrode connected to the sixth electrode 44 and a negative electrode connected to the fourth electrode 41. That is, the power supply 55 is connected in series to the positive electrode of the power supply 53. The power supply 55 applies a voltage V5 to generate an electric field E3 (see FIG. 13) in the Li-containing aqueous solutions SW and FS'. This causes cations including Li$^+$ in the Li-containing aqueous solution SW to migrate to the Li-containing aqueous solution FS'. Furthermore, the surface of the electrolyte membrane 21 is set to a relatively low potential in the Li-containing aqueous solution FS', and Li$^+$ is unevenly distributed by electrostatic attraction. The power supply 53 and the power supply 55 are preferably configured to be turned on and off independently of each other.

The Li-containing aqueous solution SW is a Li source that supplies Li to the Li-containing aqueous solution FS through the Li-containing aqueous solution FS', in order to maintain its Li$^+$ concentration high during operation of the lithium isotope enrichment device 1D. The Li-containing aqueous solution SW is an aqueous solution containing other metal ions M$^{n+}$ such as K$^+$, Na$^+$, and Ca$^{2+}$, in addition to lithium ions Li$^+$. Examples of such aqueous solutions include seawater, waste brine after extracting salt from seawater, groundwater such as hot spring water, and an aqueous solution prepared by crushing a used lithium-ion secondary battery, dissolving it in acid, and then adjusting the pH. The Li-containing aqueous solution FS' is an aqueous solution containing $^7$Li and $^6$Li cations $^7$Li$^+$ and $^6$Li$^+$ in their natural abundance ratios, and is a lithium hydroxide (LiOH) aqueous solution, for example, as in the above embodiment. In this modification, the Li-containing aqueous solution FS' may be pure water before the start of operation (isotope enrichment) of the lithium isotope enrichment device 1D. As in the first embodiment, the Li-containing aqueous solution FS and the $^6$Li recovery aqueous solution ES are, for example, a LiOH saturated aqueous solution or supersaturated aqueous solution, and pure water at the start of operation of the lithium isotope enrichment device 1D.

A lithium isotope enrichment method using the lithium isotope enrichment device according to the first modification of the second embodiment of the present invention will be described with reference to FIG. 13. In the lithium isotope enrichment device 1D according to this modification, the replenishment chamber 1z stores pure water as the Li-containing aqueous solution FS'. It is preferable that the power supply 55 is first driven to move the cations including Li$^+$ from the Li-containing aqueous solution SW stored in the raw material chamber 1y, and once the concentration of Li$^+$ in the Li-containing aqueous solution FS' reaches a certain level, the power supply 53 is further driven. Hereinafter, the Li$^+$ migration from the Li-containing aqueous solution FS' in the replenishment chamber 1z to the Li-containing aqueous solution FS in the supply chamber 11 will be described. FIG. 13 omits the stirring device 8.

In the lithium isotope enrichment device 1D, the power supplies 55 and 53 connected in series can be considered as one power supply (referred to as the power supply 55-53). The power supply 55-53 applies a positive voltage (V5+V3), with respect to the fifth electrode 42, to the sixth electrode 44. At the same time, the power supply 53 applies a positive voltage V3, with respect to the fifth electrode 42, to the fourth electrode 41. Then, the following reactions occur in the raw material chamber 1y and the replenishment chamber 1z. In the vicinity of the sixth electrode 44 and the fourth electrode 41, OH$^-$ in the Li-containing aqueous solutions SW and FS' causes the reaction of Formula (1) below to release electrons e$^-$ to the sixth electrode 44 and the fourth electrode 41, such as releasing electrons e$^-$ to generate H$_2$O and O$_2$. When the Li-containing aqueous solution SW contains Cl$^-$, the reaction of Formula (11) below further occurs near the sixth electrode 44, releasing electrons e$^-$ to generate Cl$_2$. In the Li-containing aqueous solution SW, as OH$^-$ and other anions decrease, Li$^+$ and M$^{n+}$ as cations migrate to the Li-containing aqueous solution FS' to maintain charge balance. In the Li-containing aqueous solution FS' as well, as OH$^-$ decreases, the reaction of Formula (3) below, where Li$^+$ migrates into the electrolyte membrane 21, occurs on the surface of the electrolyte membrane 21, that is, near the fourth electrode 41, to maintain charge balance.

[Chem. 17]

$$2OH^- \rightarrow H_2O + \frac{1}{2}O_2 \uparrow + 2e^- \quad \cdots (1)$$

$$2Cl^- \rightarrow Cl_2 \uparrow + 2e^- \quad \cdots (11)$$

$$Li^+ \rightarrow Li^+(electrolyte) \quad \cdots (3)$$

An electric field E3 is generated between the electrodes 44 and 41 in the Li-containing aqueous solutions SW and FS' by the application of the voltage V5 by the power supply 55. A potential gradient is thus formed in the sixth electrode 44, which is higher than the surface of the electrolyte membrane 21 on which the fourth electrode 41 is provided. Therefore, OH$^-$ and Cl$^-$ in the Li-containing aqueous solution SW are attracted to the sixth electrode 44 by electrostatic attraction. On the other hand, cations including Li$^+$ in the Li-containing aqueous solution SW are attracted to the surface of the electrolyte membrane 21 through the ion exchange membrane 6.

In the supply chamber 11, on the other hand, the following reaction occurs as in the above embodiment. In the vicinity of the fifth electrode 42, $H_2O$ in the Li-containing aqueous solution FS is supplied with electrons e$^-$ to cause the reaction of Formula (2) below and generate $H_2$ and OH$^-$. Then, as OH$^-$ increases, the reaction of Formula (4) below occurs in the vicinity of the electrolyte membrane 21, where Li$^+$ in the electrolyte membrane 21 migrates to maintain charge balance.

[Chem. 18]

$$2H_2O + 2e^- \rightarrow 2OH^- + H_2 \uparrow \quad (2)$$

$$Li^+(electrolyte) \rightarrow Li^+ \quad (4)$$

In the lithium isotope enrichment device 1D according to this modification, as described above, a potential gradient is formed in the Li-containing aqueous solution FS' by the power supply 55 applying the voltage V5. Li$^+$ as cations is thus attracted to the surface (fourth electrode 41) of the electrolyte membrane 21 by electrostatic attraction, resulting in a relatively high concentration in this vicinity. Therefore, even with a low Li$^+$ concentration in the Li-containing aqueous solution FS', Li$^+$ can sufficiently diffuse to the surface of the electrolyte membrane 21, thus preventing a decrease in the Li$^+$ mobility in the electrolyte membrane 21.

The stronger the electric field E3, the more Li$^+$ is attracted to the surface of the electrolyte membrane 21 and the higher the Li$^+$ mobility in the electrolyte membrane 21. However, when the voltage V5 is increased to strengthen the electric field E3 and reaches the voltage at which electrolysis of water occurs (+1.229 V vs. SHE, 25 °C), the reaction of Formula (2) occurs in the vicinity of the fourth electrode 41 in the Li-containing aqueous solution FS', thus generating $H_2$. Since this reaction receives electrons e$^-$, the migration of electrons e$^-$ is in the opposite direction to the reaction of Formula (1) above in the vicinity of the fourth electrode 41. When the vicinity of the fourth electrode 41, that is, the surface of the electrolyte membrane 21 on the replenishment chamber 1z side reaches the potential of $H_2$ generation, a potential is reached at which some of the transition metal ions constituting the electrolyte membrane 21 is reduced (for example, when the electrolyte membrane 21 is LLTO, $Ti^{4+}+e^- \rightarrow Ti^{3+}$) regardless of a potential difference between both surfaces of the electrolyte membrane 21. The electrolyte membrane 21 thus exhibits electron conductivity. As a result, as described above, the energy efficiency in the Li$^+$ migration in the electrolyte membrane 21 rapidly decreases. Therefore, the voltage V5 is set less than the voltage at which $H_2$ is generated near the fourth electrode 41. In practice, the voltage at which $H_2$ is generated is approximately the theoretical voltage for electrolysis of water under standard conditions or several hundred mV higher, depending on the electrode performance that determines the electrode reaction overvoltage of each of the electrodes (electrodes 44 and 41 for the voltage V5) and the pH of the solution near the electrodes. Furthermore, in this modification, even if the voltage V5 is equal to or higher than the above value, when the voltage V3 is somewhat higher than the voltage V5, the potential of the surface of the electrolyte membrane 21 on the raw material chamber 1y side (high potential side) does not drop below the $H_2$ generation potential, generating no $H_2$.

When the voltage V5 exceeds a certain level with respect to the potential difference between both surfaces of the electrolyte membrane 21, a current flows from the fourth electrode 41 to the negative electrode of the power supply 55, that is, the fourth electrode 41 receives electrons e$^-$, causing the reaction of Formula (2) nearby to generate $H_2$. As a result, the electrolyte membrane 21 exhibits electron conductivity. Therefore, the voltage V5 is preferably large enough to prevent a current from flowing from the fourth electrode 41 toward the negative electrode of the power supply 55. To this end, the voltages V3 and V5 may be applied while measuring the current by connecting an ammeter in series to the fourth electrode 41 (connecting the ammeter between the connection between the power supplies 55 and 53 and the fourth electrode 41), for example (see Patent Literature 5).

In the lithium isotope enrichment device 1D according to this modification, the raw material chamber 1y may be open to underwater or the like through a filter or the like. The lithium isotope enrichment device 1D may include no ion exchange membrane 6, and may have the processing tank 7B partitioned into three parts, as in the lithium isotope enrichment device 1C according to the above embodiment. The replenishment chamber 1z can store seawater or the like as the Li-containing aqueous solution FS'. The application of the voltage V5 moves anions such as $Cl^-$ in the Li-containing aqueous solution FS' away from the fourth electrode 41 and the electrolyte membrane 21. Therefore, $Cl^-$ is hardly adsorbed to the surface of the electrolyte membrane 21 even without the ion exchange membrane 6, and the fourth electrode 41 is hardly deteriorated by $Cl^-$, thus preventing a decrease in the $Li^+$ mobility in the electrolyte membrane 21. $Li^+$ in the Li-containing aqueous solution FS' is attracted to the fourth electrode 41, that is, the surface of the electrolyte membrane 21, and thus the $Li^+$ mobility can be increased in the electrolyte membrane 21. Since there is no ion exchange membrane 6, the electric field E3 can be strengthened with respect to the voltage V5.

With the lithium isotope enrichment device 1D according to this modification, the Li-containing aqueous solution FS can be replenished with $Li^+$ from the Li-containing aqueous solution SW such as seawater. Therefore, as for the Li-containing aqueous solution FS, pure water can be stored in the supply chamber 11 before the start of operation (isotope enrichment) of the lithium isotope enrichment device 1D, and $Li^+$ can be recovered in the Li-containing aqueous solution FS from the Li-containing aqueous solution SW through the Li-containing aqueous solution FS'. That is, the lithium isotope enrichment device 1D can be a cascade-structured lithium recovery and isotope enrichment composite device having the processing tanks of the lithium recovery device and the lithium isotope enrichment device 1 integrated. In this case, the power supplies 53 and 55 are driven first to convert the Li-containing aqueous solution FS into a LiOH aqueous solution (for example, a LiOH saturated aqueous solution) with a target $Li^+$ concentration, and then the power supply 51 is driven to start isotope enrichment.

(Second Modification)

The lithium isotope enrichment device 1D according to the modification can be a lithium recovery and isotope concentration composite device. However, to obtain a highly concentrated $Li^+$ aqueous solution such as a LiOH saturated aqueous solution from pure water, it is necessary to move a large amount of $Li^+$, and it takes time to start isotope enrichment. Therefore, the following configuration is employed to increase the $Li^+$ mobility without causing the electrolyte membrane 21 to exhibit electron conductivity.

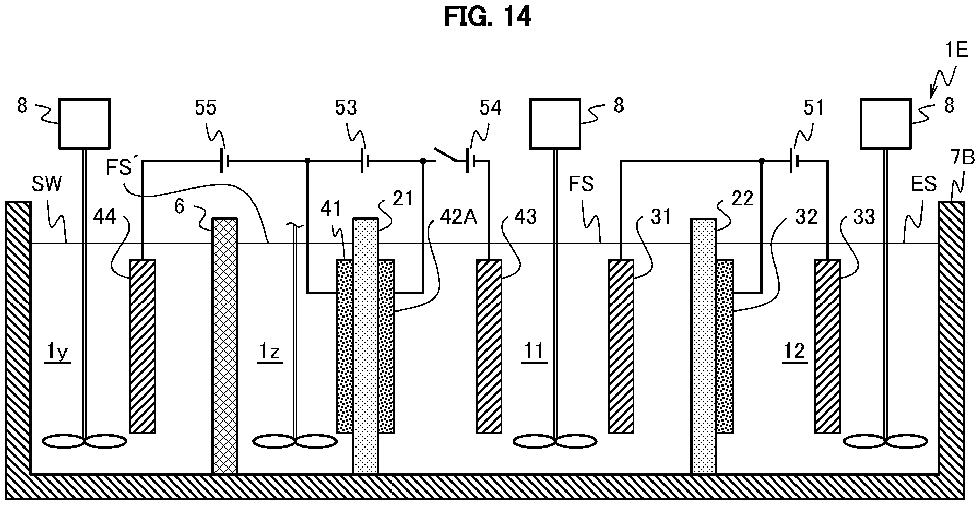

As shown in FIG. 14, a lithium isotope enrichment device 1E according to a second modification of the second embodiment of the present invention includes: a processing tank 7B; an electrolyte membrane (lithium ion-conducting electrolyte membrane for lithium replenishment) 21; an electrolyte membrane (lithium ion-conducting electrolyte membrane) 22; a first electrode 31; a second electrode 32; a third electrode 33; a fourth electrode 41; a fifth electrode 42A; a sub-electrode 43; a sixth electrode 44; the sub-electrode 43, a power supply 51; a power supply (lithium replenishment power supply) 53; a power supply 54; a power supply 55; an ion exchange membrane 6; and a stirring device (circulator) 8. The processing tank 7B is partitioned by the ion exchange membrane 6 and the electrolyte membranes 21 and 22 into four chambers: a raw material chamber 1y that stores a Li-containing aqueous solution SW, a replenishment chamber (lithium replenishment chamber) 1z that stores a Li-containing aqueous solution FS', a supply chamber (first chamber) 11 that stores a Li-containing aqueous solution FS, and a recovery chamber (second chamber) 12 that stores a $^6Li$ recovery aqueous solution ES. The lithium isotope enrichment device 1E differs from the lithium isotope enrichment device 1D according to the first modification of the second embodiment (see FIG. 12) in further including the sub-electrode 43 as a porous structure, as with the fifth electrode 42A and the fourth electrode 41, which is provided in contact with the electrolyte membrane 21 and so as to be separated from the electrolyte membrane 21 and the fifth electrode 42A while facing the fifth electrode 42A in the supply chamber 11, and the power supply 54 connected between the electrodes 42A and 43. The other configuration is the same as that of the lithium isotope enrichment device 1D according to the above modification. The lithium isotope enrichment device 1E may also include a cooling device, a liquid level sensor, exhaust means, and the like, as necessary.

The fifth electrode 42A is an electrode paired up with the fourth electrode 41 to apply a voltage between both surfaces of the electrolyte membrane 21, and also relatively increase the potential of the surface (back surface) of the electrolyte membrane 21 on the supply chamber 11 side in the Li-containing aqueous solution FS. To this end, the fifth electrode 42A has a porous structure and is provided in contact with the surface of the electrolyte membrane 21 on the supply chamber 11 side. The fifth electrode 42A is formed of an electrode material that has electron conductivity and is stable even when a voltage is applied in the Li-containing aqueous solution FS. Such an electrode material is preferably a material that has catalytic activity for the reaction of Formula (1) below and the reaction of Formula (4) below, and that can be easily processed into the shape described above. Such an electrode material for the fifth electrode 42A is preferably platinum (Pt), for example.

[Chem. 19]

$$2OH^- \rightarrow H_2O + \frac{1}{2}O_2 \uparrow + 2e^- \quad \cdots (1)$$

$$Li^+(electrolyte) \rightarrow Li^+ \qquad \cdots (4)$$

The sub-electrode 43 is an electrode for forming a potential lower than that of the back surface of the electrolyte membrane 2 in the Li-containing aqueous solution FS, and is paired up with the fourth electrode 41 to apply a voltage. Therefore, it is preferable that the sub-electrode 43 is disposed in the supply chamber 11 so as not to contact the electrolyte membrane 21 and the fifth electrode 42A, and is disposed parallel to and facing the fifth electrode 42A. The sub-electrode 43 is preferably disposed close to the fifth electrode 42A to the extent that it does not short-circuit, as will be described later. It is also preferable that the sub-electrode 43 has a shape such as a mesh so as to increase the contact area with the Li-containing aqueous solution FS. The sub-electrode 43 is formed of an electrode material that has electron conductivity and is stable even when a voltage is applied in the Li-containing aqueous solution FS. Such an electrode material is preferably a material that has catalytic activity for the reaction of Formula (2) below. The electrode material for the sub-electrode 43 is preferably platinum (Pt), for example. Alternatively, the sub-electrode 43 can be made of carbon (C), copper (Cu) or stainless steel, which is stable at a potential lower than the potential at which the reaction of Formula (2) below occurs. The sub-electrode 43 can be, more preferably, made of a material carrying Pt fine particles on the surface of such materials, which function as a catalyst.

[Chem. 20]

$$2H_2O + 2e^- \rightarrow 2OH^- + H_2 \uparrow \qquad (2)$$

The power supply 54 is a DC power supply, as with the power supply 53, and has a positive electrode connected to the fifth electrode 42A and a negative electrode connected to the sub-electrode 43. That is, the power supply 54 is connected in series to the negative electrode of the power supply 53. The power supply 54 applies a voltage V4 to form a potential lower than that of the back surface of the electrolyte membrane 21 in the Li-containing aqueous solution FS, thus preventing the electrolyte membrane 21 from exhibiting electron conductivity.

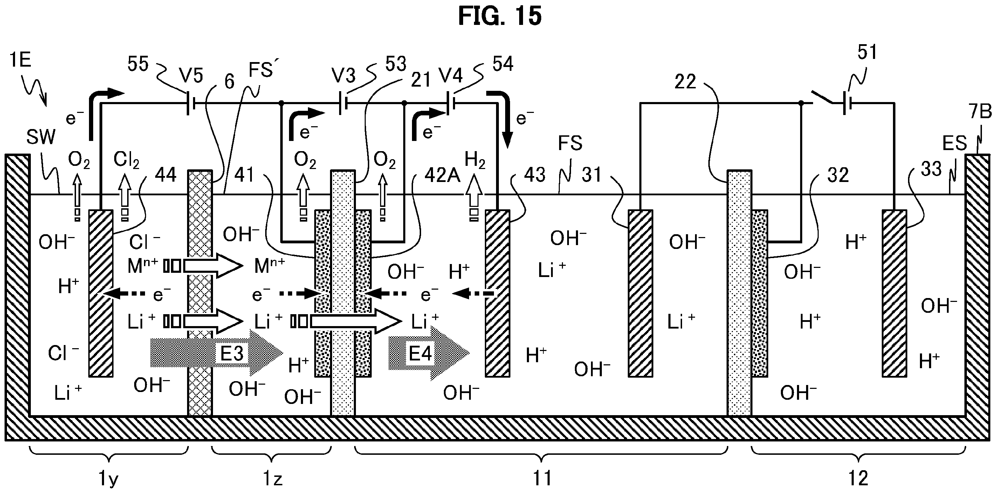

A lithium isotope enrichment method using the lithium isotope enrichment device according to the second modification of the second embodiment of the present invention will be described with reference to FIG. 15. In the lithium isotope enrichment device 1E according to this modification, the replenishment chamber 1z and the supply chamber 11 store pure water as the Li-containing aqueous solutions FS' and FS. As in the lithium isotope enrichment device 1D according to the first modification (see FIG. 13), the power supply 55 is first driven to move cations including Li+ from the Li-containing aqueous solution SW accommodated in the raw material chamber 1y. Once the concentration of Li+ in the Li-containing aqueous solution FS' reaches a certain level, it is preferable to further start driving the power supplies 53 and 54. Hereinafter, the Li+ migration from the Li-containing aqueous solution FS' in the replenishment chamber 1z to the Li-containing aqueous solution FS in the supply chamber 11 will be described. FIG. 15 omits the stirring device 8.

In the lithium isotope enrichment device 1E, the power supply 55, power supply 53, and power supply 54 connected in series can be considered as one power supply (referred to as the power supply 55-53-54). Similarly, the power supply 53 and the power supply 54 can be considered as one power supply (referred to as the power supply 53-54). The power supply 55-53-54 applies a positive voltage (V5+V3+V4), with respect to the sub-electrode 43, to the sixth electrode 44. At the same time, the power supply 53-54 applies a positive voltage (V3+V4), with respect to the sub-electrode 43, to the fourth electrode 41. Then, in the raw material chamber 1y and the replenishment chamber 1z, as in the case of the lithium isotope enrichment device 1D, the reaction of Formula (1) below occurs near the sixth electrode 44 and the fourth electrode 41, and the reaction of Formula (11) below occurs near the sixth electrode 44. Accordingly, the reaction of Formula (3) below occurs near the fourth electrode 41, where Li+ in the Li-containing aqueous solution FS' migrates into the electrolyte membrane 21.

[Chem. 21]

$$2OH^- \rightarrow H_2O + \frac{1}{2}O_2 \uparrow + 2e^- \cdots (1)$$

$$2Cl^- \rightarrow Cl_2 \uparrow + 2e^- \qquad \cdots (11)$$

$$Li^+ \rightarrow Li^+(electrolyte) \qquad \cdots (3)$$

On the other hand, the following reaction occurs in the supply chamber 11. In the vicinity of the sub-electrode 43, the application of the voltage (V3+V4) by the power supply 53-54 supplies $H_2O$ in the Li-containing aqueous solution FS with electrons $e^-$, thus causing the reaction of Formula (2) below to generate $H_2$ and $OH^-$. Then, since $H^+$ decreases near the sub-electrode 43, the reaction of Formula (4) below occurs, where $Li^+$ in the electrolyte membrane 21 migrates to the Li-containing aqueous solution FS, on the back surface of the electrolyte membrane 21, that is, near the fifth electrode 42A. At the same time, the power supply 54 applies a positive voltage V4 of a predetermined magnitude based on the voltages V3 and V5, with respect to the sub-electrode 43, to the fifth electrode 42A. Then, in the vicinity of the fifth electrode 42A, $OH^-$ in the Li-containing aqueous solution FS causes the reaction of Formula (1) below, releasing electrons $e^-$ to the fifth electrode 42A to generate $H_2O$ and $O_2$. As a result, in the vicinity of the fifth electrode 42A, excess cations due to the reaction of Formula (1) below and the reaction of Formula (4) below cause charge imbalance. However, to compensate for the lack of cations near the sub-electrode 43 due to the reaction of Formula (2) below, $Li^+$ quickly migrates to the vicinity of the sub-electrode 43 from the vicinity of the fifth electrode 42A. As a result, the charge imbalance in the Li-containing aqueous solution FS is eliminated. The relative relationship in magnitude between the voltage V3 and the voltage V4 will be described later.

[Chem. 22]

$$2H_2O + 2e^- \rightarrow 2OH^- + H_2 \uparrow \cdots (2)$$

$$Li^+(electrolyte) \rightarrow Li^+ \qquad \cdots (4)$$

$$2OH^- \rightarrow H_2O + \frac{1}{2}O_2 \uparrow + 2e^- \cdots (1)$$

In the lithium isotope enrichment device 1E according to this modification, the effect of applying the voltage V5 is the same as that of the lithium isotope enrichment device 1D according to the first modification. In this modification, the application of the voltage V4 also causes an appropriate potential difference in the Li-containing aqueous solution FS with the fifth electrode 42A being positive. Then, the electrons $e^-$ supplied from the sub-electrode 43 to the Li-containing aqueous solution FS migrate from the fifth electrode 42A on the back surface of the electrolyte membrane 21 to the positive electrode of the power supply 54, thus maintaining the potential of the fifth electrode 42A as high as about the $O_2$ generation potential. Since the $O_2$ generation potential is higher than the reduction potential of transition metal ions constituting the electrolyte membrane 21, the electrolyte membrane 21 does not conduct electrons $e^-$ regardless of the potential difference between both surfaces. Therefore, the voltage V3 can be set to a voltage greater than or equal to the applied voltage that causes the electrolyte membrane 21 to reach the reduction potential of at least one type of transition metal ion constituting the electrolyte membrane 21. In other words, when such a large voltage V3 is applied without applying the voltage V4, electrons $e^-$ are taken in from the surface of the electrolyte membrane 21 on the negative electrode side (supply chamber 11 side), resulting in reduction of the transition metal ions. However, in this modification, as described above, the application of the voltage V4 prevents the electrolyte membrane 21 from reaching the reduction potential of transition metal ions, and the electrolyte membrane 21 does not conduct electrons $e^-$.

When the voltage V4 is not large enough with respect to the potential difference between both surfaces of the electrolyte membrane 21, that is, the voltage V3, a current flows from the fifth electrode 42A to the negative electrode of the power supply 53. That is, the fifth electrode 42A receives electrons $e^-$ and causes the reaction of Formula (2) nearby to generate $H_2$. As a result, the electrolyte membrane 21 exhibits electron conductivity. Therefore, the voltage V4 is set to a magnitude that does not cause a current to flow from the fifth electrode 42A toward the negative electrode of the power supply 53. However, as the voltage V4 becomes larger within such a magnitude range, the current flowing from the power supply 54 to the fifth electrode 42A increases. This causes $O_2$ generation (reaction of Formula (1)) near the fifth electrode 42A and $H_2$ generation (reaction of Formula (2)) near the sub-electrode 43 to increase more than the increase in the migration amount of $Li^+$, resulting in reduced energy efficiency. Moreover, the voltage V5 is set to be less than the voltage at

which $H_2$ is generated near the fourth electrode 41 or the fifth electrode 42A. The larger the voltage V5 is within this range, the faster the $Li^+$ migration to the Li-containing aqueous solution FS can be. In this modification, even if the voltage V5 is equal to or greater than the theoretical voltage of water electrolysis taking into account the electrode performance of the electrodes 44 and 41 as described in the first modification, when the voltage V4 is somewhat greater than the voltages V3 and V5, the potentials of both surfaces of the electrolyte membrane 21 do not drop below the $H_2$ generation potential. Therefore, the voltages V3 and V5 can be set to even greater values. However, as described above, the energy efficiency decreases when the voltage V4 is excessively large. To prevent this, the voltages V3, V5, and V4 may be applied while measuring the current by connecting an ammeter in series to the fourth electrode 41 as in the first modification, and by further connecting an ammeter in series to the fifth electrode 42A (connecting the ammeter between the connection between the power supplies 53 and 54 and the fifth electrode 42A) (see Patent Literature 5).

Once the Li-containing aqueous solution FS turns into a saturated LiOH aqueous solution, for example, with a target $Li^+$ concentration, the power supply 51 is driven to start isotope enrichment. As described in the above embodiment, the $Li^+$ mobility in the electrolyte membrane 21 due to the electrochemical potential difference of $Li^+$ can be set higher than the $Li^+$ mobility in the electrolyte membrane 22 due to the chemical potential difference only. Therefore, the power supply 54 can be stopped by lowering the voltage V3 and further lowering the voltage V5 if necessary (see FIGs. 14 and 13).

The lithium isotope enrichment devices 1C, 1D, and 1E according to the second embodiment and its modifications can also be configured to be coupled to the supply chamber 11 of the lithium isotope enrichment device 1A according to the modification of the first embodiment (see FIG. 7). Similarly, the lithium isotope enrichment devices 1C, 1D, and 1E can also be configured to be coupled to the supply chamber 11 of the lithium isotope enrichment device 1B (see FIG. 8) or the multi-stage lithium isotope enrichment devices 10 (see FIG. 9).

[Third Embodiment]

According to the first embodiment, immediately after the start of voltage application shown in FIG. 4B, $^7Li^+$ and $^6Li^+$ in $Li^+$ adsorbed on the surface of the electrolyte membrane 2 have the same isotope ratio as $Li^+$ in the Li-containing aqueous solution FS. However, due to the difference in migration speed between $^7Li^+$ and $^6Li^+$, more $^6Li^+$ migrates to the Li site defect of the electrolyte membrane 2 than the $^6Li$ isotope ratio ($^6Li/(^7Li+^6Li)$) of the Li-containing aqueous solution FS. $^6Li^+$ also migrates faster between Li site defects in the electrolyte membrane 2 and further into the $^6Li$ recovery aqueous solution ES. As a result, $^6Li^+$ of the $Li^+$ adsorbed on the surface of the electrolyte membrane 2 is reduced to a greater extent. Then, new $^7Li^+$ and $^6Li^+$ from the Li-containing aqueous solution FS are adsorbed at the empty spots on the surface at the same isotope ratio. By repeating this behavior, the $^6Li$ isotope ratio of the $Li^+$ adsorbed on the surface of the electrolyte membrane 2 gradually decreases. Furthermore, the $^6Li$ isotope ratio of the $Li^+$ remaining in the Li-containing aqueous solution FS decreases, and thus the $^6Li$ isotope ratio of the $Li^+$ newly adsorbed on the surface of the electrolyte membrane 2 decreases. As a result, the $^6Li$ isotope ratio of the $Li^+$ migrating in the electrolyte membrane 2 significantly decreases. Specifically, the $^6Li$ isotope ratio of migrating $Li^+$ is at its maximum immediately after the start of application of the voltage +V1, and then decreases exponentially as the application time elapses (see Patent Literature 4). Furthermore, the migration amount per hour of the total $Li^+$ ($^7Li^++^6Li^+$) decreases as the isotope ratio of slow $^7Li$ among the migrating $Li^+$.

Therefore, the following configuration is employed to extract the state immediately after the start of voltage application. A lithium isotope enrichment device according to a third embodiment of the present invention will be described below.

(Lithium Isotope Enrichment device)

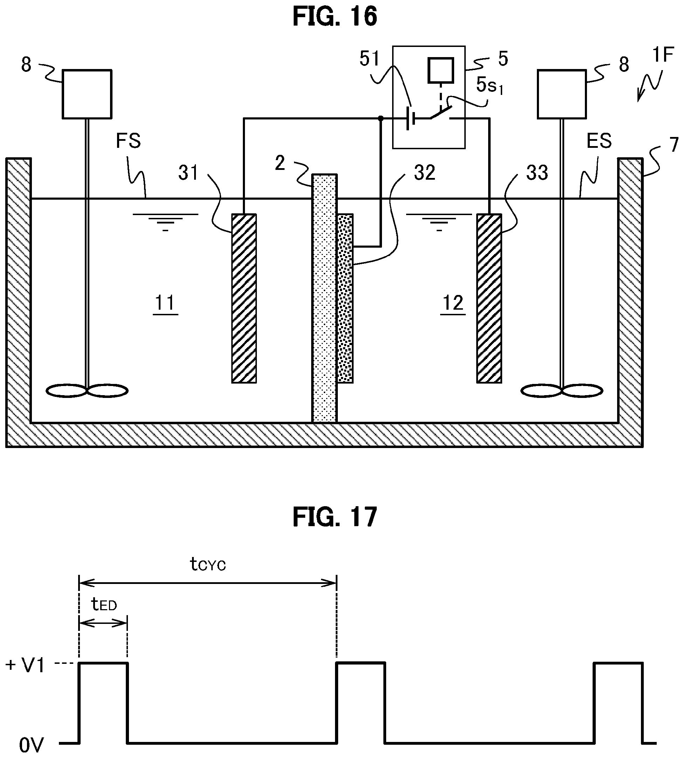

As shown in FIG. 16, a lithium isotope enrichment device 1F according to the third embodiment of the present invention includes: a processing tank 7; an electrolyte membrane (lithium ion-conducting electrolyte membrane) 2; a first electrode 31; a second electrode 32; a third electrode 33; a power supply unit 5 including a power supply 51; and a stirring device (circulator) 8. The processing tank 7 is partitioned by the electrolyte membrane 2 into two chambers: a supply chamber (first chamber) 11 that stores a Li-containing aqueous solution FS and a recovery chamber (second chamber) 12 that stores a $^6Li$ recovery aqueous solution ES. The lithium isotope enrichment device 1F differs from the lithium isotope enrichment device 1 according to the first embodiment (see FIG. 1) in that a switching element 5si is connected to the power supply 51 and short periods of voltage application and application stop are repeated. The configuration of the lithium isotope enrichment device 1F other than the power supply unit 5 is the same as that of the lithium isotope enrichment device 1 according to the first embodiment. The lithium isotope enrichment device 1F may also include a cooling device, a liquid level sensor, exhaust means, and the like, as necessary.

The power supply unit 5 includes the power supply 51, the switching element 5si connected to the power supply 51, and a drive circuit of the switching element 5si. The power supply unit 5 is configured to intermittently apply a DC voltage from the power supply 51. The switching element $5S_1$ switches between ON and OFF of the power supply 51, that is, connection and disconnection of the electrodes 32 and 33. In FIG. 16, the negative electrode of the power supply 51 is connected to the third electrode 33. It is preferable that the power supply 51 of the power supply unit 5 ideally has a built-in capacitor or the like and has high time responsiveness so as to output a rectangular wave as shown in FIG. 17.

(Lithium Isotope Enrichment Method)

In the lithium isotope enrichment method according to the third embodiment of the present invention, a positive voltage V1 (voltage +V1), with respect to the third electrode 33, is applied to the first electrode 31 and the second electrode 32, as in the first embodiment. However, the voltage +V1 is applied only for a short period of time, and then the voltage application is stopped once. Thereafter, short application of the voltage +V1 is repeated. A small amount of $Li^+$ is thus moved by the short application of the voltage +V1, and then the application is stopped to return to the state before the start of voltage application or a state close to that (initialization). At the point when the $Li^+$ migration has progressed to a certain extent after the application of the voltage +V1 is started, as described above, the $Li^+$ adsorbed on the surface of the electrolyte membrane 2 has preferentially moved into the electrolyte membrane 2. Therefore, the $Li^+$ is considered to have a lower $^6Li$ isotope ratio than the $Li^+$ remaining in the Li-containing aqueous solution FS at this point (see FIG. 4C). When the application of the voltage +V1 is stopped to create a non-applied state, the reaction of Formula (1) in the vicinity of the first electrode 31 in the Li-containing aqueous solution FS and the reactions of Formulas (1) and (2) in the vicinity of the electrodes 32 and 33 in the $^6Li$ recovery aqueous solution ES stop, and the migration of $Li^+$ in the electrolyte membrane 2 to compensate for the charge imbalance is stopped. As a result, the $Li^+$ in the Li-containing aqueous solution FS and the $^6Li$ recovery aqueous solution ES floats through the aqueous solutions FS and ES, respectively, and repeatedly adsorbs and desorbs on the front and back surfaces of the electrolyte membrane 2 (see FIG. 4A).

When the application of the voltage +V1 is started again from this state, $Li^+$ is newly adsorbed on the front surface of the electrolyte membrane 2 as shown in FIG. 4B. This $Li^+$ adsorbed on the front surface of the electrolyte membrane 2 has the same isotope ratio as that of the $Li^+$ in the Li-containing aqueous solution FS at this point. Therefore, the $^6Li^+$ isotope ratio is higher than that of the $Li^+$ adsorbed on the front surface of the electrolyte membrane 2 immediately before the previous application of the voltage +V1 is stopped (see FIG. 4C). This makes it possible to recover Li with a high $^6Li$ isotope ratio even with the short application of the voltage +V1 this time. By thus repeating the short application of the voltage +V1, Li with a higher $^6Li$ isotope ratio can be recovered compared with the case where the voltage +V1 is continuously applied as in the first embodiment. The amount of Li recovered per energization time can also be increased.

The continuous application time (electrodialysis period) $t_{ED}$ for one continuous application of the voltage +V1 and the application stop time ($t_{CYC}-t_{ED}$, $t_{CYC}$: cycle) are not particularly specified (see FIG. 17), but are preferably set to achieve sufficiently high recovery efficiency of $^6Li$. The shorter the electrodialysis period $t_{ED}$, the higher the $^6Li$ isotope ratio of Li to be recovered. Specifically, the electrodialysis period $t_{ED}$ is preferably less than or equal to 1 second, and more preferably about 0.5 seconds. If the application stop time ($t_{CYC}-t_{ED}$) is short, the $Li^+$ with a high $^7Li$ isotope ratio adsorbed on the surface of the electrolyte membrane 2 by the previous application of the voltage +V1 does not sufficiently desorb and remains thereon, resulting in the failure to sufficiently achieve the effect of intermittent voltage application. If the application stop time is excessively long, on the other hand, the ratio of the electrodialysis period $t_{ED}$ to the period $t_{CYC}$ decreases, resulting in reduced time efficiency (productivity).

The lithium isotope enrichment device 1F shown in FIG. 16 has a configuration in which the first electrode 31 and the second electrode 32 are always connected, but may be configured to disconnect the first electrode 31 and the second electrode 32 when the power supply 51 is OFF. However, it is preferable to configure the device so as to prevent a situation where the first electrode 31 and the second electrode 32 are not connected when the power supply 51 is ON, that is, a situation where only one of the first electrode 31 and the second electrode 32 is connected to the power supply 51. When a voltage is applied between the third electrode 33 and one of the first electrode 31 and the second electrode 32, even if the electrolysis reaction of water occurs, $Li^+$ does not migrate through the electrolyte membrane 2, or the isotope separation coefficient due to the migration through the electrolyte membrane 2 is small, resulting in a decrease in energy efficiency.

As with the lithium isotope enrichment device 1 according to the first embodiment, the lithium isotope enrichment device 1F according to this embodiment can repeat its operation until the $^6Li$ recovery aqueous solution ES with a desired $^6Li$ isotope ratio is obtained by feeding the $^6Li$ recovery aqueous solution ES after Li recovery in the recovery chamber 12 into the supply chamber 11 and replacing with a new $^6Li$ recovery aqueous solution ES (pure water). In addition, as with the lithium isotope enrichment device 1B (see FIG. 8) according to the modification of the first embodiment, the lithium isotope enrichment device 1F can also have a cascade structure in which the recovery chamber 12 is further partitioned into two or more chambers by one or more electrolyte membranes 2 between the second electrode 32 and the third electrode 33.

(Multi-Stage Lithium Isotope Enrichment Device)

As with the lithium isotope enrichment device 1 according to the first embodiment, the lithium isotope enrichment device 1F according to this embodiment can be a multi-stage lithium isotope enrichment device configured to enrich $^6Li$ stepwise by coupling the recovery chamber 12 and a supply chamber 11 of a different lithium isotope enrichment device 1F with a pipe or the like. By employing a cascade structure in which the recovery chamber 12 of the lithium isotope enrichment device 1F is coupled to a supply chamber 11 of a different lithium isotope enrichment device 1F in an integrating manner, a multi-stage lithium isotope enrichment device can be formed, such as the multi-stage lithium isotope enrichment device 10 according to the first embodiment (see FIG. 9). In such a multi-stage lithium isotope enrichment device, a plurality of power supply units 5 may be synchronized or not synchronized, and the cycle $t_{CYC}$ or the electrodialysis period $t_{ED}$ may be different. Alternatively, a power supply unit 5 (power supply 51) for continuous application and a power supply unit 5 for intermittent application may be mixed.

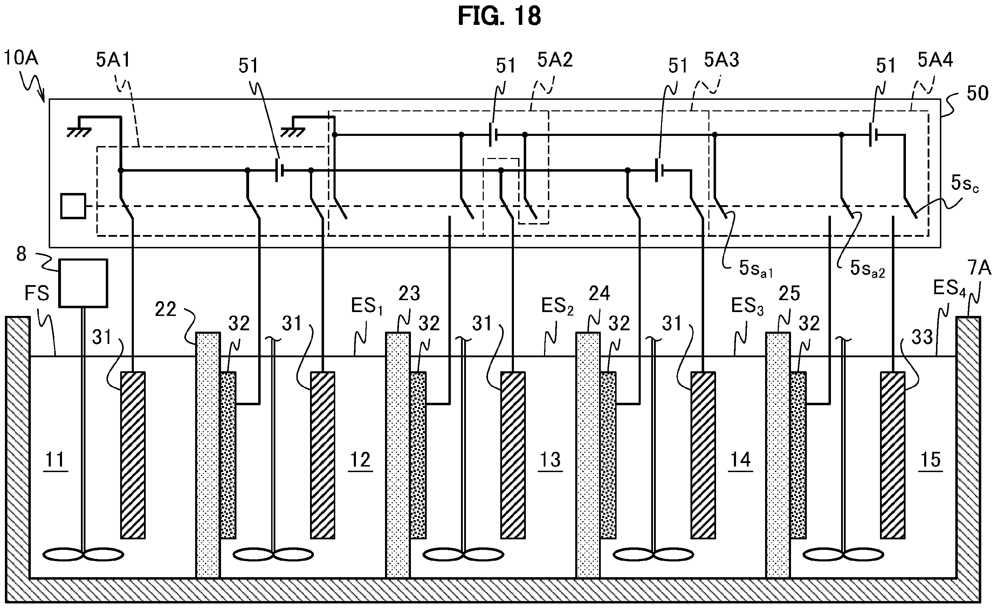

The multi-stage lithium isotope enrichment device according to this embodiment can integrate the third electrode 33 and the first electrode 31 disposed in each of the integrated recovery chamber 12 and supply chamber 11 by aligning the periods so that neighboring power supply units do not apply voltages at the same time. Specifically, as shown in FIG. 18, a multi-stage lithium isotope enrichment device 10A according to the third embodiment of the present invention includes: a processing tank 7A; four electrolyte membranes (lithium ion-conducting electrolyte membranes) 22, 23, 24, and 25 disposed parallel to each other at intervals so as to partition the processing tank 7A into five chambers 11, 12, 13, 14, and 15 in one direction; first electrodes 31 disposed facing front surfaces (left side surfaces in FIG. 18) of the electrolyte membranes 22, 23, 24, and 25; second electrodes 32 applied to back surfaces of the electrolyte membranes 22, 23, 24, and 25; a third electrode 33 disposed facing the second electrode 32 in the chamber 15 at the end on the recovery side; and a power supply unit 50 including four power supplies 51. The multi-stage lithium isotope enrichment device 10A further includes a stirring device (circulator) 8 in each of the chambers 11, 12, 13, 14, and 15.

The multi-stage lithium isotope enrichment device 10A has a structure in which four of the lithium isotope enrichment devices 1F are coupled to each other such that the respective processing tanks 7 are integrated into the processing tank 7A. The recovery chamber 12 of one of neighboring two of the lithium isotope enrichment devices 1, 1 also serves as the supply chamber 11 of the other. Furthermore, the first electrode 31 disposed in the supply chamber 11 of the other also serves as the third electrode 33 in this recovery chamber 12. Specifically, the first electrode 31 in each of the chambers 12, 13, and 14 also serves as the third electrode 33. Hence, these first electrodes 31 are preferably formed of a material having catalytic activity for the reaction of Formula (1) below and the reaction of Formula (2) below. Moreover, in each of the chambers 12, 13, and 14, it is preferable that the first electrode 31 is disposed close to the second electrode 32 facing the first electrode 31 on the supply side to the extent that they do not short-circuit, so that the resistance between the first electrode 31 and the second electrode 32 is sufficiently low as the resistance $R_{ES}$ (see FIG. 3) between the second electrode 32 and the third electrode 33. To this end, it is preferable that the chambers, except for the chambers 11 and 15 at both ends, are short in the partition direction of the processing tank 7A (the coupling direction of the lithium isotope enrichment devices 1F). With such a configuration, the multi-stage lithium isotope enrichment device 10A according to this embodiment can be reduced in size in the coupling direction while reducing the number of parts. Note that, as with the lithium isotope enrichment device 1, the first electrode 31 may have a porous structure and may be provided in contact with the electrolyte membranes 22, 23, 24, and 25.

[Chem. 23]

$$2OH^- \rightarrow H_2O + \frac{1}{2}O_2 \uparrow + 2e^- \cdots (1)$$

$$2H_2O + 2e^- \rightarrow 2OH^- + H_2 \uparrow \cdots (2)$$

The power supply unit 50 includes four power supply units 5A1, 5A2, 5A3, and 5A4, each including the power supply 51, from the supply chamber side. The power supply units 5A1, 5A2, 5A3, and 5A4 each correspond to the power supply unit 5 in the lithium isotope enrichment device 1F, and are referred to as the power supply unit 5A as appropriate unless particularly distinguished from each other. The power supply unit 5A further includes switching elements $5s_{a1}$, $5s_{a2}$, and $5s_c$ (collectively referred to as the switching elements 5s as appropriate) constituting a three-pole switch to simultaneously switch between connection and disconnection, in order to intermittently apply a DC voltage, as with the power supply unit 5. The switching elements $5s_{a1}$ and $5s_{a2}$ connect the first electrode 31 and the second electrode 32, which face each other with one electrolyte membrane 2 sandwiched therebetween, to the positive electrode of the power supply 51. The switching element $5s_c$ connects the negative electrode of the power supply 51 to the third electrode 33 or the first electrode 31, which is disposed in the same chamber as the second electrode 32 connected to the positive electrode of the power supply 51.

The power supply unit 50 is further configured so that the power supply units 5A of neighboring lithium isotope enrichment devices 1F do not connect their power supplies 51 to the electrodes 31, 32, and 33, that is, do not connect the switching elements 5s at the same time. For this purpose, the power supply units 5A of neighboring two to three or more lithium isotope enrichment devices 1F are set as a group, and one power supply unit from each group alternately connects the switching element 5s. Here, the power supply units 5A of neighboring two lithium isotope enrichment devices 1 are set as a group, and the power supply units 5A1 and 5A3 are synchronized and driven, and the power supply units 5A2 and 5A4 are synchronized and driven. In FIG. 18, in the power supply unit 50, the power supplies 51 of the synchronized power supply units 5A are connected in series. The negative electrode of the power supply 51 of the power supply unit SA1 is connected to the positive electrode of the power supply 51 of the power supply unit 5A3. The negative electrode of the power supply 51 of the power supply unit 5A2 is connected to the positive electrode of the power supply 51 of the power supply unit 5A4. Furthermore, the positive electrodes of the power supplies 51 of the power supply units 5A1 and 5A2 are grounded to a reference potential. Alternatively, the power supplies 51 of the power supply unit 50 do not have to be connected to each other. In this case, it is preferable that the power supplies 51 of any of the power supply units 5A are not grounded, or only one of the synchronized power supply units 5A is grounded. The power supply unit 50 may also have a configuration in which the synchronized power supply units 5A1 and 5A3 include one power supply 51 and the synchronized power supply units 5A2 and 5A4 include one power supply 51. The power supply unit 50 only needs to be able to connect the power supply 51 and to short-circuit the first electrode 31 and the second electrode 32 facing each other across the electrolyte membrane 2 when the power supply 51 is connected, so that a voltage +V1 is not applied between two electrodes in one chamber of neighboring two of the chambers 12, 13, 14, and 15. The circuit configuration shown in FIG. 18 is just an example.

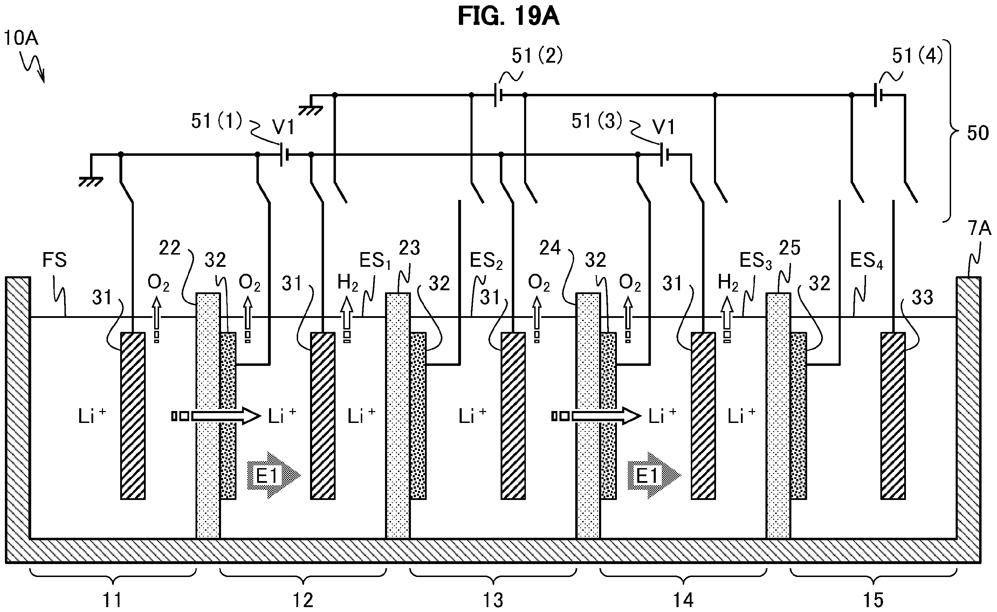

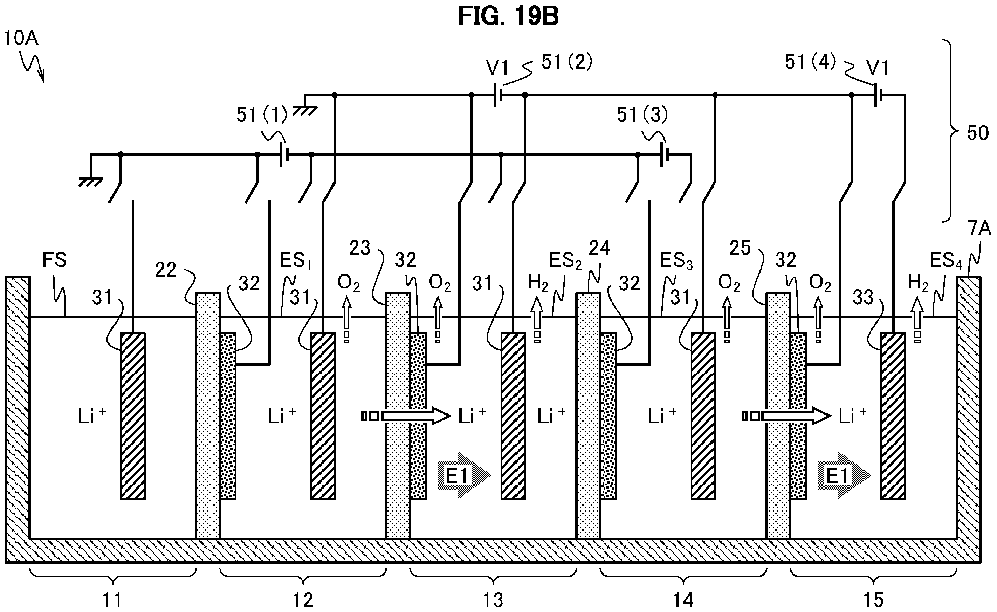

Therefore, in the multi-stage lithium isotope enrichment device 10A, the power supply units are driven such that the power supply units 5A1 and 5A3 are synchronized and the power supply units 5A2 and 5A4 are synchronized, and such that the power supply unit 5A does not apply the voltage +V1 to the neighboring lithium isotope enrichment devices 1F at the same time. To this end, all the power supply units 5A are set to have the same cycle $t_{CYC}$, and the electrodialysis period $t_{ED}$ is set to less than half the cycle $t_{CYC}$ ($t_{ED} < t_{CYC}/2$). The power supply units 5A1 and 5A3 and the power supply units 5A2 and 5A4 are driven so that their electrodialysis periods $t_{ED}$ do not overlap. A lithium isotope enrichment method using the multi-stage lithium isotope enrichment device 10A will be described with reference to FIGs. 19A and 19B. In FIGs. 19A and 19B, the power supplies 51 of the power supply units 5A1, 5A2, 5A3, and 5A4 are referred to as 51(1), 51(2), 51(3), and 51(4), respectively. The multi-stage lithium isotope enrichment device 10A shown in FIGs. 19A and 19B omits the stirring device 8.

As shown in FIG. 19A, when the power supply units SA1 and 5A3 connect the power supplies 51(1) and 51(3) with the switching element 5s to apply the voltage +V1, the power supply units 5A2 and 5A4 disconnect the switching element 5s. As a result, the first electrode 31 and the second electrode 32, which face each other across the electrolyte membranes 22 and 24, are short-circuited and connected to the positive electrodes of the power supplies 51(1) and 51(3), respectively. The first electrodes 31 in the same chambers 12 and 14 as the second electrode 32 are connected to the negative electrodes thereof, while the second electrode 32 in the chamber 13 and the second electrode 32 and the third electrode 33 in the chamber 15 are in an open state. In this event, in the chambers 12 and 14, the first electrode 31 is connected to the negative electrodes of the power supplies 51(1) and 51(3) to function as the third electrode 33, and an electric field +E1 is generated between the second electrode 32 and the first electrode 31. Then, Li$^+$ migrates from the Li-containing aqueous solution FS in the supply chamber 11 through the electrolyte membrane 22 to the aqueous solution $ES_1$ in the chamber 12, and from the aqueous solution $ES_2$ in the chamber 13 through the electrolyte membrane 24 to the aqueous solution $ES_3$ in the chamber 14. Since there is no potential difference between the second electrodes 32 on the back surfaces of the electrolyte membranes 22 and 24 and the aqueous solutions FS and $ES_2$ on the front surface side (supply side), the Li$^+$ migration is caused by the chemical potential difference only. On the other hand, Li$^+$ does not migrate in the electrolyte membrane 23 (between the aqueous solution $ES_1$ and the aqueous solution $ES_2$) and the electrolyte membrane 25 (between the aqueous solution $ES_3$ and the aqueous solution $ES_4$).

Next, as shown in FIG. 19B, when the power supply units 5A2 and 5A4 connect the power supplies 51(2) and 51(4) with the switching element 5s to apply the voltage +V1, the power supply units 5A1 and 5A3 disconnect the switching element 5s. As a result, the first electrode 31 and the second electrode 32, which face each other across the electrolyte membranes 23 and 25, are short-circuited and connected to the positive electrodes of the power supplies 51(2) and 51(4), respectively. The first electrodes 31 in the same chamber 13 as the second electrode 32 and the third electrode 33 in the chamber 14 are connected to the negative electrode, while the second electrodes 32 in the chambers 12 and 14 are in an open state. In this event, the first electrode 31 in the chamber 13 is connected to the negative electrode of the power supply 51(2) to function as the third electrode 33, and an electric field +E1 is generated between the second electrode 32 and the first electrode 31 (third electrode 33) in the chambers 13 and 15. Then, Li$^+$ migrates from the aqueous solution $ES_1$ in the chamber 12 through the electrolyte membrane 23 to the aqueous solution $ES_2$ in the chamber 13, and from the aqueous solution $ES_3$ in the chamber 14 through the electrolyte membrane 25 to the aqueous solution $ES_4$ in the chamber 15. Since there is no potential difference between the second electrodes 32 on the back surfaces of the electrolyte membranes 23 and 25 and the aqueous solutions $ES_1$ and $ES_3$ on the front surface side (supply side), the Li$^+$ migration is caused by the chemical potential difference only. On the other hand, Li$^+$ does not migrate in the electrolyte membrane 22 (between the aqueous solution FS and the aqueous solution $ES_1$) and the electrolyte membrane 24 (between the aqueous solution $ES_2$ and the aqueous solution $ES_3$).

Since no electric field is generated between the first electrode 31 in the chamber 11 on the supply side of the electrolyte membrane 22 and the aqueous solution $ES_1$ on the recovery side, $Li^+$ adsorbed on the front surface of the electrolyte membrane 22 due to the previous migration in the electrolyte membrane 22 shown in FIG. 19A desorbs and floats in the aqueous solution FS. Similarly, since no electric field is generated between the first electrode 31 in the chamber 13 on the supply side of the electrolyte membrane 24 and the aqueous solution $ES_3$ on the recovery side, $Li^+$ adsorbed on the front surface of the electrolyte membrane 24 due to the migration in the electrolyte membrane 24 desorbs and floats in the aqueous solution $ES_2$. On the other hand, as shown in FIG. 19A, when the switching elements 5s of the power supply units 5A1 and 5A3 are connected, no electric field is generated between the first electrode 31 in the chamber 12 on the supply side of the electrolyte membrane 23 and the aqueous solution $ES_2$ on the recovery side. Therefore, $Li^+$ adsorbed on the front surface of the electrolyte membrane 23 due to the previous migration in the electrolyte membrane 23 shown in FIG. 19B desorbs and floats in the aqueous solution $ES_1$. Similarly, since no electric field is generated between the first electrode 31 in the chamber 14 on the supply side of the electrolyte membrane 25 and the aqueous solution $ES_4$ on the recovery side, $Li^+$ adsorbed on the front surface of the electrolyte membrane 25 due to the migration in the electrolyte membrane 25 desorbs and floats in the aqueous solution $ES_3$.

In the multi-stage lithium isotope enrichment device 10A, the power supply units 5A1 and 5A3 and the power supply units 5A2 and 5A4 thus operate to alternately switch between connection and disconnection of the switching elements 5s. As a result, the voltage +V1 is intermittently applied to generate an electric field +E1 alternately in each of the chambers 12 and 14 and the chambers 13 and 15. This makes it possible to increase the isotope separation coefficient for each electrolyte membrane 2.

In this embodiment, as in the lithium isotope enrichment method using the multi-stage lithium isotope enrichment device 10, it is preferable to move $Li^+$ from the Li-containing aqueous solution FS in the supply chamber 11 to the aqueous solution $ES_1$, which is pure water, in the chamber 12, immediately after the start of operation, that is, to move $Li^+$ only in the electrolyte membrane 22 to increase the $Li^+$ concentration of the aqueous solution $ES_1$. For this purpose, only the power supply unit 5A1 is driven. Then, when the aqueous solution $ES_1$ reaches a predetermined $Li^+$ concentration, the power supply unit 5A2 is further driven to switch between connection and disconnection of the switching element 5s alternately with the power supply unit 5A1. When the aqueous solution $ES_2$ reaches a predetermined $Li^+$ concentration, the power supply unit 5A3 is further driven in synchronization with the power supply unit 5A1. Eventually, all the power supply units 5A of the power supply unit 50 are driven.

As with the multi-stage lithium isotope enrichment device 10, the multi-stage lithium isotope enrichment device 10A can recover Li with a high $^6$Li isotope ratio from the chamber at the end of the recovery side by connecting more lithium isotope enrichment devices 1F. In this case, the power supply unit 50 synchronizes a set of every other power supply unit 5A1, 5A3, 5A5, ... and a set of every other power supply unit 5A2, 5A4, 5A6, ..., and alternately switches between connection and disconnection of the two sets. The multi-stage lithium isotope enrichment device 10A may also be configured such that the power supply unit 50 drives three or more adjacent power supply units 5A as one group. For example, three adjacent power supply units 5A can be set as a group by setting the electrodialysis period $t_{ED}$ to less than 1/3 of the cycle $t_{CYC}$ ($t_{ED} < t_{CYC}/3$). In this case, the power supply units 5A1, 5A4, 5A7, ... are synchronized, the power supply units 5A2, 5A5, 5A8, ... are synchronized, and the power supply units 5A3, 5A6, 5A9, ... are synchronized.

In the multi-stage lithium isotope enrichment device 10A, as with the multi-stage lithium isotope enrichment device 10, adjacent electrolyte membranes 2 and 2 may be disposed perpendicularly to each other by coupling the lithium isotope enrichment devices 1F with one or two 90° bends. In a chamber at the bend partitioned by the electrolyte membranes 2 and 2 disposed perpendicularly to each other, the first electrode 31 does not also serve as the third electrode 33, that is, both the third electrode 33 and the first electrode 31 are disposed perpendicularly to each other and spaced apart so as not to short-circuit.

The lithium isotope enrichment device 1A (see FIG. 7) according to the modification of the first embodiment can also include a power supply unit 5 including a power supply 51 connected to a switching element 5si, as with the lithium isotope enrichment device 1F according to the third embodiment. In addition, two or more of such lithium isotope enrichment devices can be coupled such that the respective processing tanks 7 are integrated, thus forming a multi-stage lithium isotope enrichment device. Furthermore, as in the multi-stage lithium isotope enrichment device 10A, the first electrode 31A and the third electrode 33A disposed in the integrated recovery chamber 12 and supply chamber 11, respectively, can be integrated.

As with the lithium isotope enrichment device 1 and the multi-stage lithium isotope enrichment device 10 according to the first embodiment, the lithium isotope enrichment device 1F and the multi-stage lithium isotope enrichment device 10A according to this embodiment can also be configured by adding a configuration to replenish the Li-containing aqueous solution FS with $Li^+$, as in the lithium isotope enrichment devices 1C, 1D, and 1E (FIGs. 10 to 15) according to the second embodiment and its modification.

(First Modification)

In the lithium isotope enrichment device according to the third embodiment, the isotope separation coefficient can be further increased by intermittently applying a voltage. However, in a voltage non-applied state, it takes time for lithium ions adsorbed on the surface of the electrolyte membrane to fully desorb, making it difficult to achieve both highly enriched $^6$Li and improved productivity. Therefore, the following configuration is employed to allow the lithium ions to actively desorb from the electrolyte membrane. A lithium isotope enrichment device according to a modification of the third embodiment of the present invention will be described below.

As shown in FIG. 20, a lithium isotope enrichment device 1G according to a first modification of the third embodiment of the present invention includes: a processing tank 7; an electrolyte membrane (lithium ion-conducting electrolyte membrane) 2 that partitions the processing tank 7 into two chambers, a supply chamber (first chamber) 11 and a recovery chamber (second chamber) 12; a first electrode 31B; a second electrode 32; a third electrode 33; a sub-electrode 34; a power supply unit 5G including a power supply 51 and a sub-power supply 52; and a stirring device (circulator) 8. The first electrode 31B and the second electrode 32 have a porous structure. The first electrode 31B is applied to a surface of the electrolyte membrane 2 on the supply chamber 11 side. The second electrode 32 is applied to a surface of the electrolyte membrane 2 on the recovery chamber 12 side. The third electrode 33 is provided spaced apart from the electrolyte membrane 2 and the second electrode 32 in the recovery chamber 12. The sub-electrode 34 is provided spaced apart from the electrolyte membrane 2 and the first electrode 31B in the supply chamber 11. The power supply 51 has a positive electrode connected to the first electrode 31 and the second electrode 32, and a negative electrode connected to the third electrode 33. The sub-power supply 52 has a positive electrode connected to the first electrode 31B and a negative electrode connected to the sub-electrode 34. Therefore, the lithium isotope enrichment device 1G according to this modification has a configuration obtained by replacing the first electrode 31 with the first electrode 31B provided in contact with the surface of the electrolyte membrane 2 in the supply chamber 11, and further adding the sub-electrode 34 and the sub-power supply 52 connected to the first electrode 31B and the sub-electrode 34 in the lithium isotope enrichment device 1F according to the third embodiment shown in FIG. 16. The other configuration is the same as that of the lithium isotope enrichment device 1F. The lithium isotope enrichment device 1G may also include a cooling device, a liquid level sensor, exhaust means, and the like, as necessary.

As with the first electrode 31 of the first embodiment, the first electrode 31B is provided in contact with the surface of the electrolyte membrane 2 in the supply chamber 11. Such a first electrode 31B applies a voltage to a wide range of the electrolyte membrane 2. The first electrode 31B has a porous structure such as a net, as with the second electrode 32, so that the Li-containing aqueous solution FS comes into contact with a sufficient area of the surface of the electrolyte membrane 2. The first electrode 31B is preferably formed of a material that has catalytic activity for the reaction of Formula (1) below and the reaction of Formula (3) below, and that can be easily processed into the shape described above. The electrode material for the first electrode 31B is preferably platinum (Pt), for example.

[Chem. 24]

$$2OH^- \rightarrow H_2O + \frac{1}{2}O_2 \uparrow + 2e^- \quad \cdots \ (1)$$

$$Li^+ \rightarrow Li^+(electrolyte) \qquad \cdots \ (3)$$

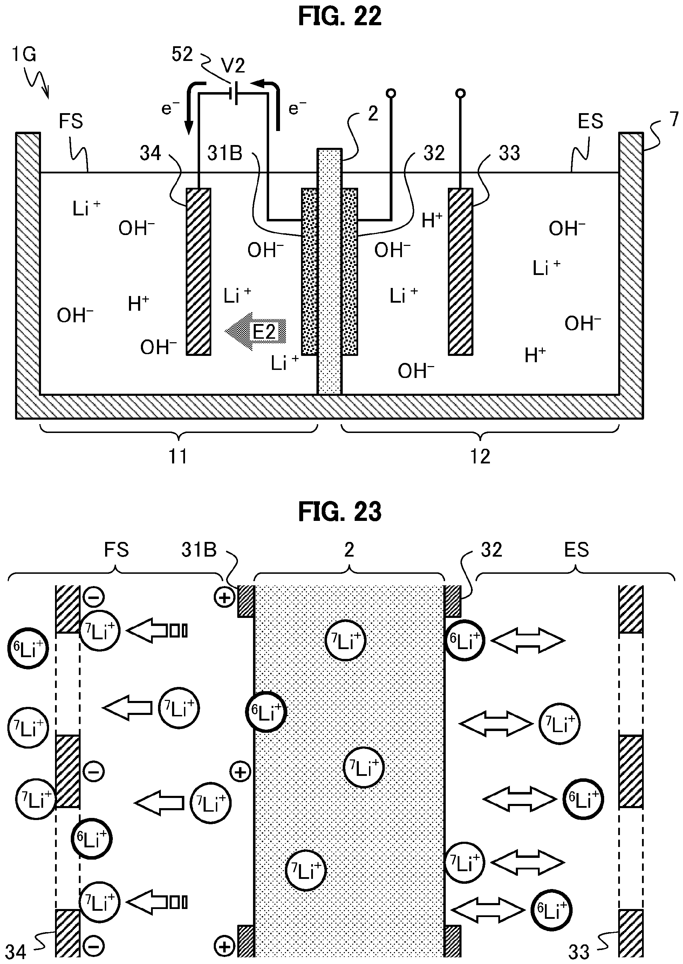

The sub-electrode 34 is an electrode for forming a potential lower than that of the surface of the electrolyte membrane 2 in the Li-containing aqueous solution FS. Therefore, it is preferable that the sub-electrode 34 is disposed in the supply chamber 11 so as not to contact the electrolyte membrane 2 and the first electrode 31B, and is disposed parallel to the first electrode 31B. The sub-electrode 34 is also preferably disposed close to the first electrode 31B to the extent that it does not short-circuit, to strengthen an electric field E2 (see FIG. 22) generated in the Li-containing aqueous solution FS with respect to the voltage V2 applied between the sub-electrode 34 and the first electrode 31B, as will be described later. It is also preferable that the sub-electrode 34 has a shape such as a mesh, through which the aqueous solution passes, so as to increase the contact area with the Li-containing aqueous solution FS and to continuously replace the Li-containing aqueous solution FS in contact with the surface (first electrode 31B) of the electrolyte membrane 21 in the supply chamber 11. The sub-electrode 34 is preferably formed of an electrode material that has electron conductivity and is stable even when a voltage is applied in the Li-containing aqueous solution FS, as with the first electrode 31B. The electrode material for the sub-electrode 34 is preferably platinum (Pt), for example. Alternatively, the sub-electrode 34 can be made of carbon (C).

The power supply unit 5G includes two DC power supplies 51 and 52, and further includes switching elements 5$s_1$ and 5$s_2$ and a drive circuit for driving the switching elements. The power supply unit 5G alternately applies DC voltages from the power supplies 51 and 52. In other words, the power supply unit 5G includes two DC pulse power supplies, which are synchronized such that one of them is ON while the other is OFF. The power supply 51 is a main power supply. As in the first embodiment, the power supply 51 intermittently applies a positive voltage V1 (voltage +V1), with respect to the third electrode 33, to the first electrode 31B and the second electrode 32 by the switching element 5si. The sub-power supply 52 has a positive electrode connected to the first electrode 31B and a negative electrode connected to the sub-electrode 34. The sub-power supply 52 applies a negative voltage V2 (voltage -V2), with respect to the sub-electrode 34, to the first electrode 31B when the power supply 51 is not applying the voltage +V1 as shown in FIG. 21. It is preferable that the power supplies 51 and 52 each ideally have a built-in capacitor or the like and have high time responsiveness so as to output a rectangular wave as shown in FIG. 21. As in the first embodiment, the magnitude of the voltage V1 is equal to or higher than the voltage at which water electrolysis occurs. The voltage V2 is preferably less than the voltage at which water electrolysis occurs in the Li-containing aqueous solution FS.

As in the first embodiment, the switching element 5si switches between connection and disconnection of the negative electrode of the power supply 51 and the third electrode 33 (ON and OFF of the power supply 51). The switching element $5s_2$ alternately switches the connection destination of the first electrode 31B between the second electrode 32 (and the positive electrode of the power supply 51) and the positive electrode of the sub-power supply 52. In this event, there may be a period during which the first electrode 31B is connected to neither of them. However, as in the first embodiment, it is preferable that the first electrode 31B is also connected to the power supply 51 when the power supply 51 is connected between the second electrode 32 and the third electrode 33. Therefore, it is preferable that the switching element $5s_2$, in conjunction with the switching element 5si, always connects the first electrode 31B to the second electrode 32 when the power supply 51 is connected between the second electrode 32 and the third electrode 33 (the power supply 51 is ON), as shown in FIG. 20. On the other hand, the switching element $5s_2$ connects the first electrode 31B to the sub-power supply 52 only when the power supply 51 is not connected between the second electrode 32 and the third electrode 33 (the power supply 51 is OFF), as shown in FIG. 22. The application timing of the voltages V1 and V2 will be described in detail later.

The power supply unit 5G only needs to be able to alternately apply the voltages V1 and V2 of a predetermined polarity and magnitude between the electrodes 31B and 32 and the third electrode 33 and between the sub-electrode 34 and the first electrode 31B. The circuit configuration shown in FIG. 20 is just an example. For example, the power supply unit may be provided with a variable power supply that can be switched between two levels of voltages V1 and V2, with its positive electrode connected to the first electrode 31B. The power supply unit can also include a switching element that switches the connection destination of the negative electrode of the variable power supply between the third electrode 33 and the sub-electrode 34, and a switching element that switches between connection and disconnection of the first electrode 31B (positive electrode of the variable power supply) and the second electrode 32. Alternatively, the power supply unit can have a configuration in which two DC power supplies are connected in series via switching elements, both of which apply the voltage V1 and one of which applies the voltage V2 (not shown). In the lithium isotope enrichment device 1G shown in FIG. 20, the sub-electrode 34 is in an open state when the power supply unit 5G applies the voltage +V1 between the electrodes 31B and 32 and the third electrode 33, and the second electrode 32 and the third electrode 33 are in an open state when the power supply unit 5G applies the voltage -V2 between the sub-electrode 34 and the first electrode 31B (see FIG. 22). Alternatively, the power supply unit 5G may be configured such that the sub-electrode 34 is connected to the same potential as the first electrode 31B when the voltage +V1 is applied between the electrodes 31B and 32 and the third electrode 33.

In a lithium isotope enrichment method according to the first modification of the third embodiment of the present invention, a first step of applying the positive voltage V1, with the electrodes 31B and 32 being positive, between the first electrode 31B provided on the front surface of the electrolyte membrane 2 and the second electrode 32 provided on the back surface thereof and the third electrode provided spaced apart from the electrolyte membrane 2 and the second electrode 32 in the recovery chamber 12, and a second step of applying the voltage V2, with the sub-electrode 34 being negative, between the first electrode 31B and the sub-electrode 34 provided spaced apart from the electrolyte membrane 2 and the first electrode 31B in the supply chamber 11 are alternately performed. The lithium isotope enrichment method using the lithium isotope enrichment device according to this modification will be described with reference to FIGs. 20, 22, 23, 2, and 4A to 4C. In the lithium isotope enrichment device 1G shown in FIG. 22, the power supply 51 is OFF and omitted, and the stirring device 8 is also omitted.

The behavior of lithium ions when the voltage V1 is applied (see FIG. 20), including immediately after the start of application, is as described in the first embodiment (see FIGs. 2 and 4A to 4C). Furthermore, as described in the third embodiment, when the application of the voltage +V1 is stopped after application, $Li^+$ adsorbed on the surface of the electrolyte membrane 2 starts to desorb. However, these $Li^+$ have been attracted to the deeper side (back surface side) of the electrolyte membrane 2 to compensate for the charge imbalance caused by the application of the voltage +V1, and thus do not immediately desorb from the surface of the electrolyte membrane 2 even if the application of the voltage +V1 is stopped. Therefore, in this modification, when the application of the voltage +V1 is stopped, the sub-power supply 52 starts applying a negative voltage V2 (voltage -V2), with respect to the first electrode 31B, to the sub-electrode 34 (see FIG. 22).

The application of the voltage -V2 generates a potential gradient in the Li-containing aqueous solution FS, with the vicinity of the surface of the electrolyte membrane 2 being positive and the vicinity of the sub-electrode 34 being negative. This causes the $Li^+$ adsorbed on the surface of the electrolyte membrane 2 to quickly desorb by electrostatic repulsion, as shown in FIG. 23.

The application of the voltage -V2 allows $Li^+$ to desorb from the surface of the electrolyte membrane 2 in a short time. Hence, when the application of the voltage -V2 is stopped and the application of the voltage +V1 is started again by the power supply 51, new $Li^+$ adsorbs on the surface of the electrolyte membrane 2, as shown in FIG. 4B. This $Li^+$ adsorbed on the surface of the electrolyte membrane 2 has a higher $^6Li$ isotope ratio than that of the $Li^+$ adsorbed on the surface of the electrolyte membrane 2 immediately before the previous application of the voltage +V1 is stopped (see FIG. 4C), as in the first embodiment. By thus applying the voltage -V2 during the application stop period of the voltage +V1, $Li^+$ desorbs more easily from the surface of the electrolyte membrane 2 compared to the non-application state as in the first embodiment. This makes it possible to sufficiently achieve the effect of intermittent application even if the application stop time of the voltage +V1 ($t_{CYC}$-$t_{ED}$) is short. Therefore, the operation time required to recover a certain amount of $^6Li$ can be shortened, resulting in improved productivity.

The larger the voltage V2, the stronger the electric field E2 (electric field -E2) directed toward the sub-electrode 34 from the first electrode 31B, that is, the surface of the electrolyte membrane 2 in the Li-containing aqueous solution FS, causing $Li^+$ to be rapidly attracted to the sub-electrode 34. This causes the $Li^+$ adsorbed on the surface of the electrolyte membrane 2 to desorb more quickly. Meanwhile, when the voltage V2, that is, the potential difference between the first electrode 31B and the sub-electrode 34 exceeds a certain value, an electrolytic reaction of $H_2O$ (reactions of Formulas (1) and (2)) occurs in the Li-containing aqueous solution FS, reducing the energy efficiency. Therefore, the voltage V2 is preferably set to a level that does not cause the electrolytic reaction of $H_2O$, and is smaller than the voltage V1 at most. Regarding such a voltage V2, the sub-electrode 34 is preferably disposed at a short distance from the first electrode 31B so as to strengthen the electric field E2.

The continuous application time (reset period) $t_{RST}$ for one continuous application of the voltage -V2 is not particularly specified, but is preferably set to achieve sufficiently high recovery efficiency of $^6Li$. The reset period $t_{RST}$ should be such that the $Li^+$ adsorbed on the surface of the electrolyte membrane 2 by the previous application of the voltage +V1 sufficiently desorbs, or preferably completely desorbs. Even if the reset period $t_{RST}$ is longer than that, the $^6Li$ recovery efficiency is not improved, and the ratio of the electrodialysis period $t_{ED}$ to a period $t_{CYC}$ ($\geq t_{ED}$+$t_{RST}$) decreases, resulting in reduced time efficiency (productivity). As for the reset period $t_{RST}$, the effect can be achieved more quickly as the electric field E2 is stronger, that is, the voltage V2 is larger and the interval between the sub-electrode 34 and the first electrode 31B is shorter.

Furthermore, it is preferable that the voltage +V1 and the voltage -V2 are not applied at the same time. The application of the voltage -V2 relatively reduces the concentration of $Li^+$ near the surface of the electrolyte membrane 2 in the Li-containing aqueous solution FS. Therefore, when the voltage -V2 is applied upon application of the voltage +V1, the $Li^+$ migration from the Li-containing aqueous solution FS to the $^6Li$ recovery aqueous solution ES is inhibited, resulting in reduced energy efficiency. Particularly, immediately after the start of the application of the voltage +V1 at which the $^6Li$ isotope ratio of migrating $Li^+$ is at its maximum, it is preferable that the voltage -V2 is not applied. On the other hand, there may be non-application periods $t_{int1}$ and $t_{int2}$ in which neither the voltage +V1 nor the voltage -V2 is applied. However, the longer the non-application periods $t_{int1}$ and $t_{int2}$, the lower the productivity. Therefore, it is preferable that the application of the voltage -V2 (reset period $t_{RST}$) is started after the application of the voltage +V1 (electrodialysis period $t_{ED}$) is stopped ($t_{int}$, $\geq 0$). It is more preferable that the application of the voltage -V2 is started as soon as the application of the voltage +V1 is stopped. It is even more preferable that the application of the voltage -V2 is started at the same time as when the application of the voltage +V1 is stopped ($t_{int1}$= 0). Furthermore, it is preferable that the application of the voltage +V1 (electrodialysis period $t_{ED}$) is started after the application of the voltage -V2 (reset period $t_{RST}$) is stopped ($t_{int2} \geq 0$). It is more preferable that the application of the voltage +V1 is started after the application of the voltage -V2 is stopped ($t_{int2} > 0$). The timing of starting and stopping the application of the voltage +V1 and the voltage -V2 is preferably set according to the timing accuracy of the power supply unit 5G and the like, so that the voltage +V1 and the voltage -V2 are not applied at the same time.

During the application period of the voltage -V2 (reset period $t_{RST}$), it is preferable to disconnect the first electrode 31B from the second electrode 32. For this purpose, for example, the first electrode 31B and the second electrode 32 are connected only during the application period of the voltage +V1 (electrodialysis period $t_{ED}$). If the second electrode 32 is connected to the first electrode 31B upon application of the voltage -V2, $Li^+$ in the $^6Li$ recovery aqueous solution ES flows back to the Li-containing aqueous solution FS depending on the magnitude of the voltage V2. Therefore, as with the lithium isotope enrichment device 1F according to the third embodiment (see FIG. 16), the first electrode 31B and the second electrode 32 can be configured to be constantly connected. However, in this case, it is preferable to set the voltage V2 to be less than the voltage at which water electrolysis occurs.

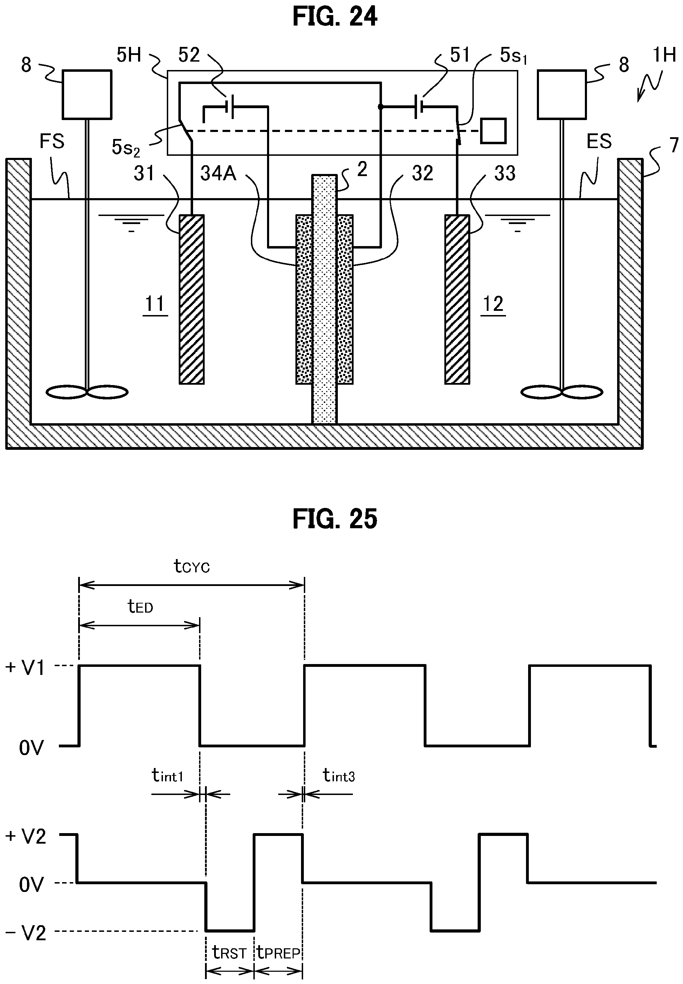

In the lithium isotope enrichment device 1F according to the third embodiment (see FIG. 16), the first electrode 31 is disposed spaced apart from the electrolyte membrane 2. Therefore, in this modification, the first electrode 31B and the sub-electrode 34 may be interchanged. Specifically, as shown in FIG. 24, a lithium isotope enrichment device 1H according to another configuration of the first modification of the third embodiment differs from the lithium isotope enrichment device 1G according to the modification (see FIG. 20) in including a first electrode 31 spaced apart from the electrolyte membrane 2, a sub-electrode 34A having a porous structure in contact with the surface of the electrolyte membrane 2, and a power supply unit 5H that connects the positive electrode of the sub-power supply 52 to the sub-electrode 34A and alternately switches the connection destination of the first electrode 31 between the second electrode 32 and the negative electrode of the sub-power supply 52 by the switching element $5s_2$. The first electrode 31 has the same configuration as in the first embodiment. The sub-electrode 34A has a porous structure such as a net, as with the first electrode 31B in the lithium isotope enrichment device 1G, so that the Li-containing aqueous solution FS comes into contact with a sufficient area of the surface of the electrolyte membrane 2. The sub-electrode 34A is preferably formed of a material that has catalytic activity for the reaction of Formula (3) below. Furthermore, upon application of the voltage +V1, both the first electrode 31 and the sub-electrode 34A (the first electrode 31B and the sub-electrode 34) may be connected to the second electrode 32 (the positive electrode of the power supply 51).

[Chem. 25]

$$Li^+ \rightarrow Li^+(electrolyte) \qquad (3)$$

(Second Modification)

In the lithium isotope enrichment devices 1G and 1H according to the first modification of the third embodiment, when the application of the voltage +V1 that causes $Li^+$ to migrate in the electrolyte membrane 2 is stopped, a potential gradient where the potential near the surface of the electrolyte membrane 2 is high is formed in the Li-containing aqueous solution FS by applying the voltage -V2 between the sub-electrode 34 and the first electrode 31B (the first electrode and the sub-electrode 34A) in the supply chamber 11. This causes the lithium ions adsorbed on the surface of the electrolyte membrane 2 to efficiently desorb. However, when the application of the voltage +V1 is resumed, the $Li^+$ concentration of the Li-containing aqueous solution FS is relatively low near the surface of the electrolyte membrane 2. Therefore, it takes time for $Li^+$ to be adsorbed to the surface of the electrolyte membrane 2. This prevents the $Li^+$ mobility in the electrolyte membrane 2 from increasing immediately after the application of the voltage +V1 is resumed, resulting in insufficient energy efficiency.

Therefore, after $Li^+$ is temporarily desorbed from the surface of the electrolyte membrane 2 by the application of the voltage -V2 (second step) (see FIGs. 22 and 23), the voltage +V2 having its polarity reversed may be applied between the sub-electrode 34 and the first electrode 31B (third step) to resolve the low concentration of $Li^+$ near the surface of the electrolyte membrane 2 before resuming the application of the voltage +V1. To this end, the sub-power supply 52 of the power supply units 5G and 5H of the lithium isotope enrichment devices 1G and 1H is configured to be able to apply a voltage with its polarity reversed. More specifically, as shown in FIG. 25, when the voltage +V1 is not applied by the power supply 51, the sub-power supply 52 first applies the voltage -V2 during one stop period of the voltage +V1, and then applies the voltage +V2 after reversing the polarity.

As described in the above modification, after the application of the voltage +V1, $Li^+$ adsorbed on the surface of the electrolyte membrane 2 is desorbed, as shown in FIG. 23, by applying the voltage -V2. Specifically, $Li^+$ is desorbed by electrostatic repulsion from the positively charged surface of the electrolyte membrane 2. Then, $Li^+$ in the Li-containing aqueous solution FS is unevenly distributed near the sub-electrode 34 due to electrostatic attraction, resulting in a relative reduction in $Li^+$ concentration near the surface of the electrolyte membrane 2. In the lithium isotope enrichment method according to this modification, after the sub-power supply 52 applies the voltage -V2, the polarity of the sub-power supply 52 is reversed, and a voltage +V2 is applied. The application of the voltage +V2 causes a potential gradient in the Li-containing aqueous solution FS, where the potential near the surface of the electrolyte membrane 2 is negative and the potential near the sub-electrode 34 is positive. Then, $Li^+$ unevenly distributed near the sub-electrode 34 by the previous application of the voltage -V2 quickly separates from the sub-electrode 34 due to electrostatic repulsion, and the electrostatic repulsion between $Li^+$ and the surface of the electrolyte membrane 2 is quickly released. As a result, the relatively low concentration of $Li^+$ near the surface of the electrolyte membrane 2 is eliminated. Furthermore, $Li^+$ unevenly distributed near the sub-electrode 34 and $Li^+$ floating in the Li-containing aqueous solution FS are attracted to the negatively charged surface of the electrolyte membrane 2 by electrostatic attraction, resulting in increased concentration in this vicinity and leaving some of $Li^+$ adsorbed on the surface. The $Li^+$ adsorbed on the surface of the electrolyte membrane 2 at this time has the same isotope ratio as the $Li^+$ in the Li-containing aqueous solution FS at this point.

When the application of the voltage +V2 is stopped and the application of the voltage +V1 is resumed by the power supply 51, the $Li^+$ adsorbed on the surface of the electrolyte membrane 2 migrates into the electrolyte membrane 2, as shown in FIGs. 4B and 4C. In this way, after applying the voltage -V2 between the sub-electrode 34 and the first electrode 31B, the polarity is reversed and the voltage +V2 is applied, and then the application of the voltage +V1 is resumed. This makes it possible to recover a large amount of Li having a high $^6$Li isotope ratio immediately after the start of application of the voltage +V1.

The magnitude of the voltage applied between the sub-electrode 34 and the first electrode 31B does not need to be the same between negative and positive. The larger the voltage V2, the stronger the electric field (referred to as the electric field +E2) directed towards the surface of the electrolyte membrane 2 from the sub-electrode 34 in the Li-containing aqueous solution FS, causing $Li^+$ to be quickly separated from the sub-electrode 34 and also attracted to the surface of the electrolyte membrane 2. Thus, the low concentration of $Li^+$ near the surface of the electrolyte membrane 2 can be resolved more quickly, and $Li^+$ can be adsorbed onto the surface of the electrolyte membrane 2. As described in the embodiment above, it is preferable that the magnitude of the voltage is set such that the electrolytic reaction of $H_2O$ does not occur in the Li-containing aqueous solution FS.

The continuous application time (preparation period) $t_{PREP}$ for one continuous application of the voltage +V2 is not particularly specified, and is preferably set to ensure sufficiently high $^6$Li recovery efficiency, as with the electrodialysis period $t_{ED}$ and the reset period $t_{RST}$. The preparation period $t_{PREP}$ may be set so as to resolve the low $Li^+$ concentration state near the surface of the electrolyte membrane 2 caused by the previous application of the voltage -V2. It is also preferable that the concentration of $Li^+$ near the surface of the electrolyte membrane 2 is increased and more $Li^+$ is adsorbed on the surface. However, even when a large amount of $Li^+$ is adsorbed on the surface of the electrolyte membrane 2, there is a limit to the improvement in the mobility of $Li^+$ immediately after the start of application of the voltage +V1. Moreover, the longer the preparation period $t_{PREP}$, the lower the ratio of the electrodialysis period $t_{ED}$ to the period $t_{CYC}$, resulting in reduced productivity. As for the preparation period $t_{PREP}$, as with the reset period $t_{RST}$, the effect can be achieved more quickly as the voltage V2 is larger and the interval between the sub-electrode 34 and the first electrode 31B is shorter.

When the non-application period in which neither the voltage -V2 nor the voltage +V2 is applied between the sub-electrode 34 and the first electrode 31B is long between the reset period $t_{RST}$ and the preparation period $t_{PREP}$, the productivity is reduced. Therefore, it is preferable that the application of the voltage +V2 is started more quickly after the application of the voltage -V2 is stopped. It is more preferable that the application of the voltage +V2 is started at the same time as when the application of the voltage -V2 is stopped, as shown in FIG. 25. In addition, when the non-application period $t_{int3}$ is long before the application of the voltage +V1 is started (electrodialysis period $t_{ED}$) after the application of the voltage +V2 is stopped (preparation period $t_{PREP}$), the productivity is reduced, and the effect of the voltage +V2 application is also reduced. Therefore, it is preferable that the application of the voltage +V1 is started more quickly after the application of the voltage +V2 is stopped. It is more preferable that the application of the voltage +V1 is started at the same time as when the application of the voltage +V2 is stopped ($t_{int3} = 0$). The voltage +V2 may be applied when the voltage +V1 is applied (electrodialysis period $t_{ED}$). Therefore, the application of the voltage +V2 may be stopped after the application of the voltage +V1 is started. In this case, the preparation period $t_{PREP}$ is set from the start of application of the voltage +V2 to the start of application of the voltage +V1.

As with the lithium isotope enrichment devices 1 and 1F according to the first and third embodiments, the lithium isotope enrichment devices 1G and 1H according to this modification can repeat its operation until the $^6$Li recovery aqueous solution ES with a desired $^6$Li isotope ratio is obtained by feeding the $^6$Li recovery aqueous solution ES after Li recovery in the recovery chamber 12 into the supply chamber 11 and replacing with a new $^6$Li recovery aqueous solution ES (pure water). In addition, as with the lithium isotope enrichment device 1B (see FIG. 8) according to the modification of the first embodiment, the lithium isotope enrichment devices 1G and 1H can also have a cascade structure in which the recovery chamber 12 is further partitioned into two or more chambers by one or more electrolyte membranes 2 between the second electrode 32 and the third electrode 33.

The lithium isotope enrichment device 1A (see FIG. 7) according to the modification of the first embodiment may be provided with a power supply unit, such as the power supply unit 5G of the lithium isotope enrichment device 1G, which switches the voltage between two levels, V1 and V2, and the polarity, and also switches between connection and disconnection of the first electrode 31A and the second electrode 32A. Such a lithium isotope enrichment device allows the third electrode 33A to function as the sub-electrode 34 in the lithium isotope enrichment device 1G, and can execute isotope enrichment as in the lithium isotope enrichment method according to the first modification of the third embodiment (see FIG. 21). Specifically, a first step of applying a positive voltage V1 (voltage +V1), with respect to the first electrode 31A and the second electrode 32A, to the third electrode 33A (see FIG. 7) and a second step of applying a negative voltage V2 (voltage -V2), with respect to the second electrode 32A, to the third electrode 33A are alternately performed. In the second step, it is preferable that the first electrode 31A is disconnected from the second electrode 32A and set in an open state or the like. Furthermore, as in the lithium isotope enrichment method according to the second modification of the third embodiment (see FIG. 25), a third step of applying a positive voltage V2 (voltage +V2), with respect to the second electrode 32A, to the third electrode 33A may be performed after the second step.

(Multi-Stage Lithium Isotope Enrichment Device)

The lithium isotope enrichment devices 1G and 1H according to the modification of the third embodiment can each be a multi-stage lithium isotope enrichment device configured to enrich $^6$Li stepwise by coupling the recovery chamber 12 to a supply chamber 11 of a different lithium isotope enrichment device 1G or 1H with a pipe or the like, as with the lithium isotope enrichment device 1 according to the first embodiment. In addition, a multi-stage lithium isotope enrichment device, such as the multi-stage lithium isotope enrichment device 10 (see FIG. 9) according to the first embodiment, can be obtained by employing a cascade structure in which the recovery chamber 12 of the lithium isotope enrichment device 1G or 1H is coupled to a supply chamber 11 of a different lithium isotope enrichment device 1G or 1H in an integrating manner.

In a multi-stage lithium isotope enrichment device (not shown) formed by coupling the lithium isotope enrichment devices 1G, the second electrode 32, the third electrode 33, the sub-electrode 34, and the first electrode 31B are disposed in this order from the supply side in one chamber partitioned by electrolyte membranes 2, 2 on both sides, except for the chambers at both ends. This chamber is designed to have a sufficient length in the partition direction (coupling direction) so that the third electrode 33 and the sub-electrode 34 are disposed with a sufficient distance from each other. Specifically, even if at least one of the third electrode 33 and the sub-electrode 34 is connected to the power supply 51 or the power supply 52, an electric field is substantially prevented from being generated between the third electrode 33 and the sub-electrode 34. Even if an electric field is generated, the multi-stage lithium isotope enrichment device is designed to sufficiently weaken the electric field, compared to the electric field E1 (see FIG. 2) and the electric field E2 (see FIG. 22) generated in the same chamber. In a multi-stage lithium isotope enrichment device formed by coupling the lithium isotope enrichment devices 1H, the second electrode 32, the third electrode 33, the first electrode 31, and the sub-electrode 34A are disposed in this order from the supply side in one chamber partitioned by electrolyte membranes 2, 2 on both sides, except for the chambers at both ends. The third electrode and the first electrode 31 are thus disposed with a sufficient distance from each other.

A lithium isotope enrichment method using the multi-stage lithium isotope enrichment device according to this modification is the same as the method using the lithium isotope enrichment devices 1G and 1H. As with the method using the multi-stage lithium isotope enrichment device 10 according to the first embodiment, it is preferable that Li$^+$ is first moved only between the first chamber (chamber 11) and the second chamber (chamber 12) from the supply side to allow the aqueous solution ES$_1$ in the chamber 12 to reach a predetermined Li$^+$ concentration.

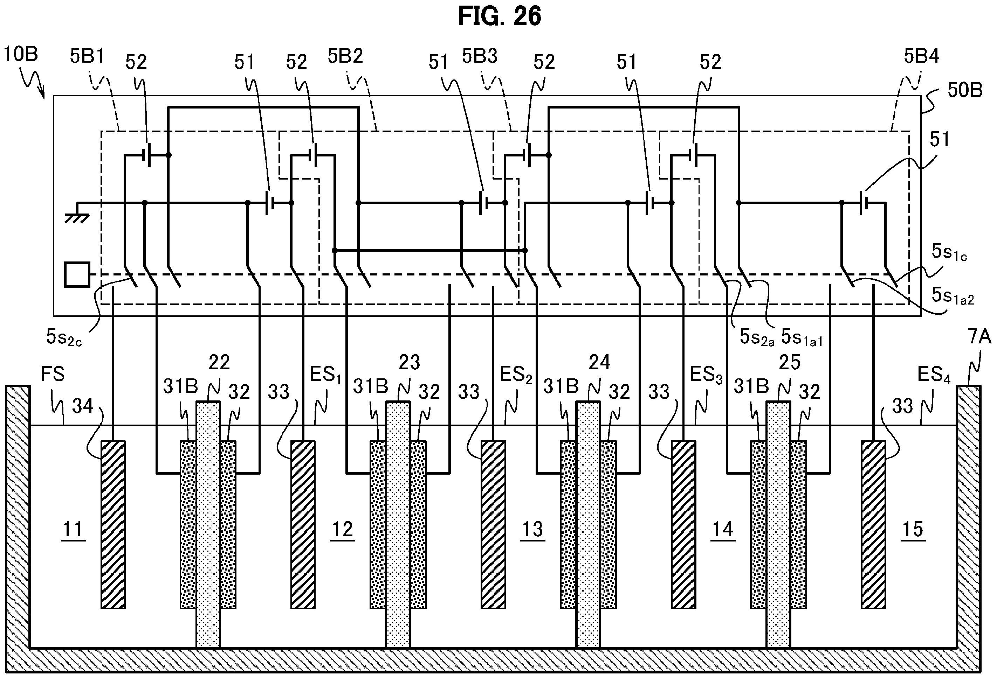

In the multi-stage lithium isotope enrichment device formed by coupling the lithium isotope enrichment devices 1G according to the modification of the third embodiment, the third electrode 33 and the sub-electrode 34 disposed in each of the integrated recovery chamber 12 and supply chamber 11 can be integrated by aligning the periods so that neighboring power supply units do not apply the positive voltage at the same time. Specifically, as shown in FIG. 26, the multi-stage lithium isotope enrichment device 10B according to the first modification of the third embodiment of the present invention includes: a processing tank 7A; four electrolyte membranes (lithium ion-conducting electrolyte membranes) 22, 23, 24, and 25 disposed parallel to each other at intervals so as to partition the processing tank 7A into five chambers 11, 12, 13, 14, and 15 in one direction; first electrodes 31B applied to front surfaces (left side surfaces in FIG. 26) of the electrolyte membranes 22, 23, 24, and 25; second electrodes 32 applied to back surfaces of the electrolyte membranes 22, 23, 24, and 25; third electrodes 33 disposed facing the second electrodes 32; a sub-electrode 34 disposed facing the first electrode 31B in the chamber 11 at the end on the supply side; and a power supply unit 50B including four power supplies 51 and four sub-power supplies 52.

The multi-stage lithium isotope enrichment device 10B has a structure in which four of the lithium isotope enrichment devices 1G (see FIG. 20) are coupled to each other such that the respective processing tanks 7 are integrated into the processing tank 7A. The recovery chamber 12 of one of neighboring two of the lithium isotope enrichment devices 1G, 1G also serves as the supply chamber 11 of the other. Furthermore, the third electrode 33 disposed in the recovery chamber 12 of one of the lithium isotope enrichment devices also serves as the sub-electrode 34 disposed in the supply chamber 11 of the other. Specifically, the third electrode 33 in each of the chambers 12, 13, and 14 also serves as the sub-electrode 34. Moreover, in each of the chambers 12, 13, and 14, it is preferable that the third electrode 33 is disposed close to the first electrode 31B facing the third electrode 33 on the supply side to the extent that they do not short-circuit, so that the resistance therebetween is sufficiently low. To this end, it is preferable that the chambers, except for the chambers 11 and 15 at both ends, are short in the partition direction of the processing tank 7A (the coupling direction of the lithium isotope enrichment devices 1G). With such a configuration, the multi-stage lithium isotope enrichment device 10B according to this modification can be reduced in size in the coupling direction while reducing the number of parts.

The power supply unit 50B includes four power supply units 5B1, 5B2, 5B3, and 5B4, each including the power supply 51 and the sub-power supply 52, from the supply side. The power supply units 5B1, 5B2, 5B3, and 5B4 each correspond to the power supply unit 5G in the lithium isotope enrichment device 1G, and are referred to as the power supply unit 5B as appropriate unless particularly distinguished from each other. The power supply unit 5B further includes switching elements 5s$_{1a1}$, 5s$_{1a2}$, and 5s$_{1c}$ (collectively referred to as the switching elements 5si as appropriate) constituting a three-pole switch to simultaneously switch between connection and disconnection of the power supply 51 and the sub-power supply 52 to alternately apply a DC voltage, as with the power supply unit 5G, and switching elements $5s_{2a}$ and $5s_{2c}$ (collectively referred to as the switching elements $5s_2$ as appropriate) constituting a two-pole switch. In each of the power supply units 5B, the switching elements 5si and $5s_2$ are configured not to be connected at the same time. The switching elements $5s_{1a1}$ and $5s_{1a2}$ connect the first electrode 31B and the second electrode 32, which face each other across one electrolyte membrane 2, to the positive electrode of the power supply 51. The switching element $5s_{1c}$ connects the negative electrode of the power supply 51 to the third electrode 33 disposed in the same chamber as the second electrode 32 connected to the positive electrode of the power supply 51. The switching elements $5s_{2a}$ and $5s_{2c}$ connect the positive electrode and the negative electrode of the sub-power supply 52 to the first electrode 31B and the third electrode 33 or the sub-electrode 34, which are disposed in the same chamber. In addition, since the third electrode 33 also serves as the sub-electrode 34, the switching element $5s_{1c}$ of the adjacent power supply unit 5B also serves as the switching element $5s_{2c}$.

The power supply unit 50B is also configured so that the power supply units 5B of neighboring lithium isotope enrichment devices 1G do not connect their power supplies 51 to the electrodes 31B, 32, and 33, that is, do not connect the switching elements 5si at the same time. In the power supply unit 50B, when one of the neighboring power supply units 5B connects the power supply 51, the other may connect the sub-power supply 52 to the first electrode 31B and the third electrode 33 or the sub-electrode 34. For this purpose, the power supply units 5B of neighboring two to three or more lithium isotope enrichment devices 1G are set as a group, and one power supply unit from each group alternately connects the switching element 5si. Here, the power supply units 5B of neighboring two lithium isotope enrichment devices 1G are set as a group, and the power supply units 5B1 and 5B3 are synchronized and driven, and the power supply units 5B2 and 5B4 are synchronized and driven. As for the power supply unit 50B, the time when the power supply units 5B1 and 5B3 connect the power supply 51 overlaps with the time when the power supply units 5B2 and 5B4 connect the sub-power supply 52. Similarly, the time when the power supply units 5B1 and 5B3 connect the sub-power supply 52 overlaps with the time when the power supply units 5B2 and 5B4 connect the power supply 51. Therefore, in the power supply unit 50B, the negative electrode of the power supply 51 on the supply side and the negative electrode of the sub-power supply 52 on the recovery side in two neighboring power supply units 5B can be connected to the same third electrode 33 at the same time, and are thus connected.

Furthermore, as shown in FIG. 26, the positive electrode of the sub-power supply 52 on the supply side and the positive electrode of the power supply 51 on the recovery side of the two neighboring power supply units 5B may or may not be connected. In addition, it is preferable that the power supply 51 and the sub-power supply 52 are not grounded, or the power supply 51 or the sub-power supply 52 of only one of the synchronized power supply units 5B (the power supply 51 of the power supply units 5B1 and 5B2 in FIG. 26) is grounded to a reference potential. In addition, the power supply unit 50B may be configured such that the synchronized power supply units 5B1 and 5B3 and the synchronized power supply units 5B2 and 5B4 each include one power supply 51 and one sub-power supply 52. The power supply unit 50B only needs to be able to connect the power supply 51 to neighboring two of the chambers 12, 13, 14, and 15 so as not to apply the voltage +V1 between the second electrode 32 and the third electrode 33 in one chamber at the same time, and to short-circuit the first electrode 31B facing the second electrode 32 across the electrolyte membrane 2 and prevent the sub-power supply 52 from being connected to this first electrode 31B when the power supply 51 is connected. The circuit configuration of the power supply unit 50B shown in FIG. 26 is just an example.

The multi-stage lithium isotope enrichment device 10B preferably further includes a stirring device (circulator) 8 for circulating the aqueous solutions FS, $ES_1$, $ES_2$, $ES_3$, and $ES_4$ in the chambers 11, 12, 13, 14, and 15, respectively, as with the multi-stage lithium isotope enrichment devices 10 and 10A (see FIGs. 9 and 18). The multi-stage lithium isotope enrichment device 10B may further include a cooling device (not shown) for cooling the electrolyte membranes 22, 23, 24, and 25, as necessary. Other components are as described in the configurations of the lithium isotope enrichment devices 1, 1F, and 1G and the multi-stage lithium isotope enrichment devices 10 and 10A.

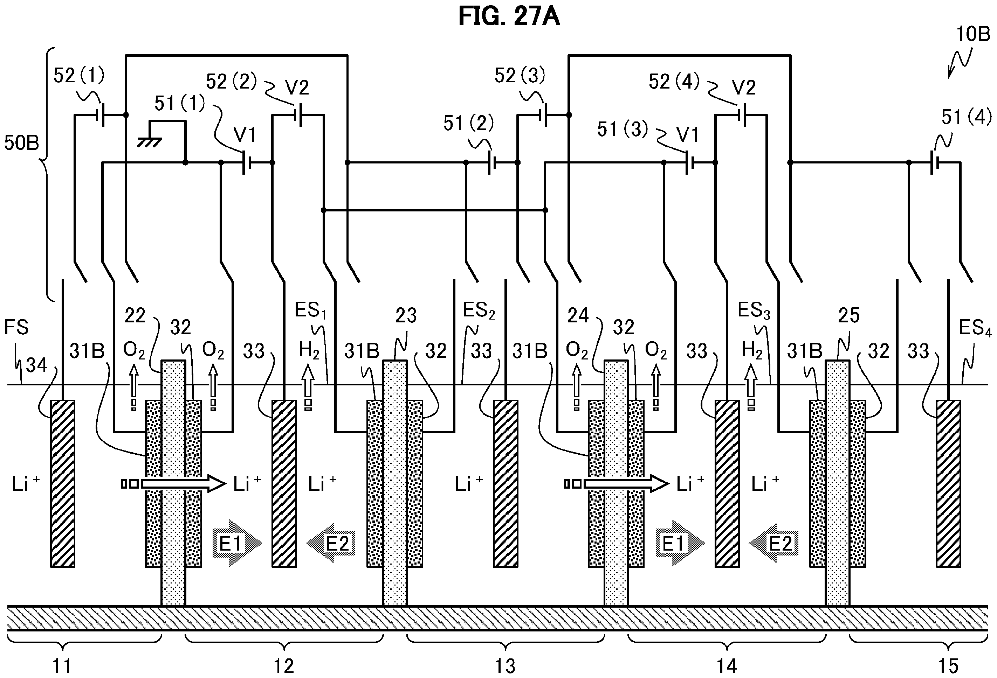

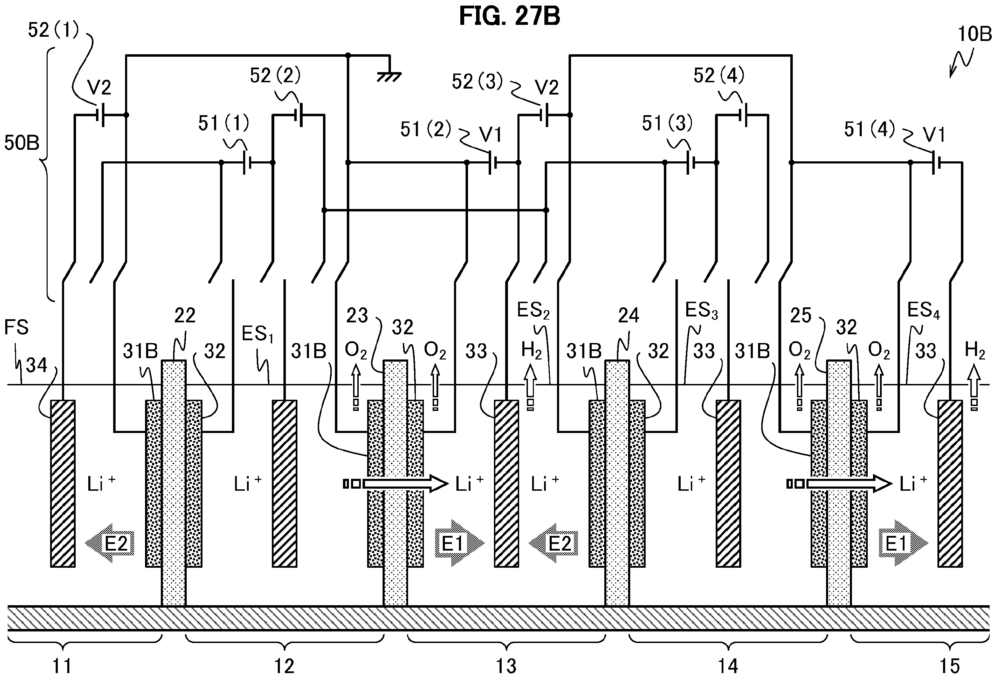

In the multi-stage lithium isotope enrichment device 10B, the power supply units are driven such that the power supply units 5B1 and 5B3 are synchronized and the power supply units 5B2 and 5B4 are synchronized, and such that the neighboring power supply units 5B do not apply the voltage +V1 at the same time. To this end, all the power supply units 5B are set to have the same cycle $t_{CYC}$, and the electrodialysis period $t_{ED}$ and the reset period $t_{RST}$ are set to less than half the cycle $t_{CYC}$ ($t_{ED} < t_{CYC}/2$). The power supply units 5B1 and 5B3 and the power supply units 5B2 and 5B4 are driven so that their electrodialysis periods $t_{ED}$ do not overlap. A lithium isotope enrichment method using the multi-stage lithium isotope enrichment device 10B will be described below with reference to FIGs. 27A and 27B. In FIGs. 27A and 27B, the power supplies 51 and the sub-power supplies 52 of the power supply units 5B1, 5B2, 5B3, and 5B4 are referred to as the power supplies 51(1), 51(2), 51(3), and 51(4) and the sub-power supplies 52(1), 52(2), 52(3), and 52(4), respectively.

As shown in FIG. 27A, when the power supply units 5B1 and 5B3 connect the power supplies 51(1) and 51(3) with the switching element 5si to apply the voltage +V1, the power supply units 5B2 and 5B4 may disconnect the switching element 5si and connect the sub-power supplies 52(2) and 52(4) with the switching element $5s_2$ to apply the voltage -V2. As a result, the first electrode 31B and the second electrode 32, which face each other across the electrolyte membranes 22 and 24, are short-circuited and connected to the positive electrode of the power supplies 51(1) and 51(3), and the third electrode 33 in the same chambers 12 and 14 as the second electrode 32 is connected to the negative electrode. Furthermore, the third electrode 33 is connected to the negative electrode of the sub-power supplies 52(2) and 52(4), and the first electrode 31B in the same chambers 12 and 14 is connected to the positive electrode. On the other hand, the second electrode 32 and the third electrode 33 in the chambers 13 and 15 as well as the sub-electrode 34 in the chamber 11 are in an open state. In this event, in the aqueous solutions $ES_1$ and $ES_3$ in the chambers 12 and 14, an electric field $+E1$ is generated between the second electrode 32 and the third electrode 33, and an electric field $-E2$ is generated between the third electrode 33 and the first electrode 31B at the same time. Then, $Li^+$ migrates from the Li-containing aqueous solution FS in the supply chamber 11 through the electrolyte membrane 22 to the aqueous solution $ES_1$ in the chamber 12, and from the aqueous solution $ES_2$ in the chamber 13 through the electrolyte membrane 24 to the aqueous solution $ES_3$ in the chamber 14. $Li^+$ in the aqueous solutions $ES_1$ and $ES_3$ adsorbed on the surfaces of the electrolyte membranes 23 and 25 is quickly desorbed by the electric field $-E2$.

Next, as shown in FIG. 27B, when the power supply units 5B2 and 5B4 connect the power supplies 51(2) and 51(4) with the switching element 5si to apply the voltage $+V1$, the power supply units 5B1 and 5B3 may disconnect the switching element 5si and connect the sub-power supplies 52(1) and 52(3) with the switching element $5s_2$ to apply the voltage $-V2$. As a result, the first electrode 31B and the second electrode 32, which face each other across the electrolyte membranes 23 and 25, are short-circuited and connected to the positive electrodes of the power supplies 51(2) and 51(4), and the third electrode 33 in the same chambers 13 and 15 as the second electrode 32 is connected to the negative electrode. Furthermore, the sub-electrode 34 in the chamber 11 and the third electrode 33 in the chamber 13 are connected to the negative electrodes of the sub-power supplies 52(1) and 52(3), and the first electrode 31B in the same chambers 11 and 13 is connected to the positive electrode. On the other hand, the second electrode 32 and the third electrode 33 in the chambers 12 and 14 are in an open state. In this event, an electric field $+E1$ is generated in the aqueous solutions FS in the chamber 11. An electric field $+E1$ is generated in the aqueous solution $ES_4$ in the chamber 15. In the aqueous solution $ES_2$ in the chamber 13, an electric field $+E1$ is generated between the second electrode 32 and the third electrode 33 and an electric field $-E2$ is generated between the third electrode 33 and the first electrode 31B at the same time. Then, $Li^+$ migrates from the aqueous solution $ES_1$ in the chamber 12 through the electrolyte membrane 23 to the aqueous solution $ES_2$ in the chamber 13, and from the aqueous solution $ES_3$ in the chamber 14 through the electrolyte membrane 25 to the aqueous solution $ES_4$ in the chamber 15. $Li^+$ in the aqueous solutions FS and $ES_2$ adsorbed on the surfaces of the electrolyte membranes 22 and 24 is quickly desorbed by the electric field $-E2$.

In the multi-stage lithium isotope enrichment device 10B, the power supply units 5A1 and 5A3 and the power supply units 5A2 and 5A4 thus operate to alternately switch between connection and disconnection of the switching elements $5s_1$ and $5s_2$. As a result, the voltage $+V1$ is intermittently applied to alternately generate an electric field $+E1$ between the back surface of the electrolyte membrane 2 and the third electrode 33 in each of the chambers 12 and 14 and the chambers 13 and 15. This makes it possible to increase the isotope separation coefficient for each electrolyte membrane 2. Furthermore, in the neighboring chamber on the supply side, an electric field $-E2$ is generated between the sub-electrode 34 or the third electrode 33 and the front surface of the electrolyte membrane 2 by the application of the voltage $-V2$. This makes it possible to further increase the isotope separation coefficient even if the application stop period of the voltage $+V1$ is short.

In the multi-stage lithium isotope enrichment device 10B, the lithium isotope enrichment devices 1H (see FIG. 24) may be coupled, and the recovery chamber 12 of one of neighboring two of the lithium isotope enrichment devices 1H, 1H also serves as the supply chamber 11 of the other. In this case, the first electrode 31 disposed in the other supply chamber 11 also serves as the third electrode 33 in this recovery chamber 12.

In the multi-stage lithium isotope enrichment device 10B according to this modification, as with the lithium isotope enrichment devices 1G and 1H, after the sub-power supply 52 applies the voltage $-V2$, the polarity of the sub-power supply 52 is reversed, and a voltage $+V2$ is applied (see FIG. 25). As described above, since neighboring two power supply units 5B are set as a group, the sum ($t_{RST}+t_{PREP}$) of the application time (reset period) $t_{RST}$ of the voltage $-V2$ and the application time (preparation period) $t_{PREP}$ of the voltage $+V2$ is set to less than half the cycle $t_{CYC}$ ($t_{ED} < t_{CYC}/2$).

As with the multi-stage lithium isotope enrichment device 10A according to the third embodiment, the multi-stage lithium isotope enrichment device 10B according to this modification may also be configured such that the power supply unit 50 drives three or more neighboring power supply units 5B as one group. For example, three neighboring power supply units 5B can be set as a group by setting the electrodialysis period $t_{ED}$ to less than 1/3 of the cycle $t_{CYC}$ ($t_{ED} < t_{CYC}/3$). Furthermore, by setting the reset period $t_{RST}$ and the preparation period $t_{PREP}$ to less than 1/3 of the cycle $t_{CYC}$ ($t_{RST} < t_{CYC}/3$, $t_{PREP} < t_{CYC}/3$), the voltage $+V1$ application (electrodialysis period $t_{ED}$), voltage $-V2$ application (reset period $t_{RST}$), and voltage $+V2$ application (preparation period $t_{PREP}$) can be assigned to each of the coupled three neighboring lithium isotope enrichment devices 1G for operation. In such a multi-stage lithium isotope enrichment device, the third electrode 33 and the first electrode 31B disposed in each of the integrated recovery chamber 12 and supply chamber 11 can be integrated, and the second electrode 32 and the sub-electrode 34 disposed in each of the recovery chamber 12 and supply chamber 11 can be integrated.

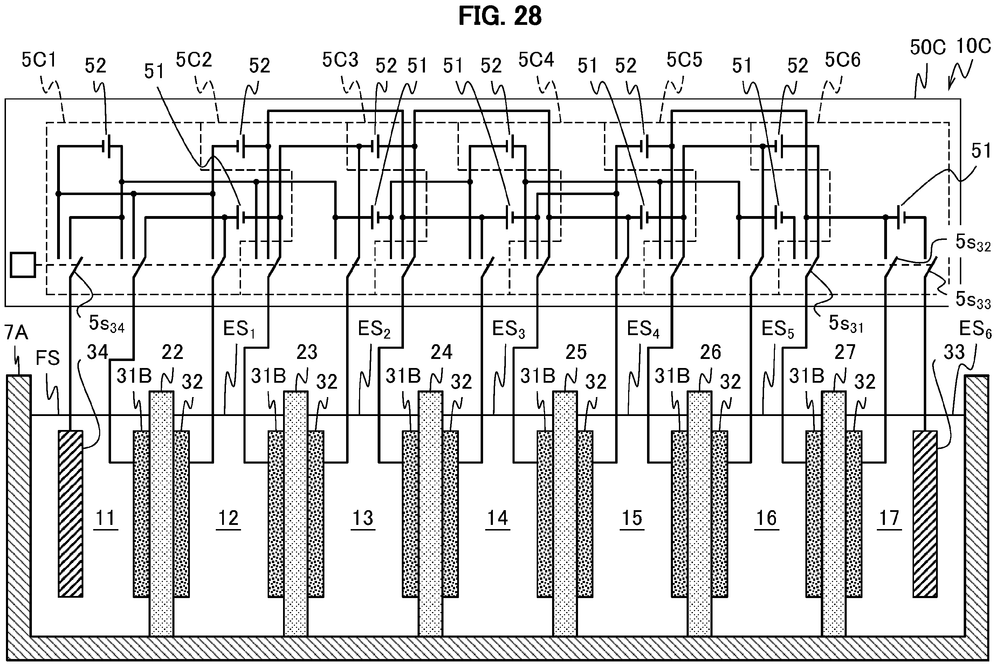

Specifically, as shown in FIG. 28, a multi-stage lithium isotope enrichment device 10C according to the second modification of the third embodiment of the present invention includes: a processing tank 7A; six electrolyte membranes (lithium ion-conducting electrolyte membranes) 22, 23, 24, 25, 26, and 27 disposed parallel to each other at intervals so as to partition the processing tank 7A into seven chambers 11, 12, 13, 14, 15, 16, and 17 in one direction; first electrodes 31 applied to front surfaces (left side surfaces in FIG. 28) of the electrolyte membranes 22, 23, 24, 25, 26, and 27; second electrodes 32 applied to back surfaces of the electrolyte membranes 22, 23, 24, 25, 26, and 27; a sub-electrode 34 disposed facing the first electrode 31B in the chamber 11 at the end on the supply side; a third electrode 33 disposed facing the second electrode 32 in the chamber 15 at the end on the recovery side; and a power supply unit 50C including six power supplies 51 and six sub-power supplies 52.

The multi-stage lithium isotope enrichment device 10C has a structure in which six of the lithium isotope enrichment devices 1G (see FIG. 20) are coupled to each other such that the respective processing tanks 7 are integrated into the processing tank 7A. The recovery chamber 12 of one of neighboring two of the lithium isotope enrichment devices 1G, 1G also serves as the supply chamber 11 of the other. Furthermore, the first electrode 31 disposed in the supply chamber 11 of the other also serves as the third electrode 33 in this recovery chamber 12. The second electrode disposed in the recovery chamber 12 of one of the two devices also serves as the sub-electrode 34 disposed in the supply chamber 11 of the other. Specifically, in each of the chambers 12, 13, 14, 15, and 16, the first electrode 31 also serves as the third electrode 33 and the second electrode 32 also serves as the sub-electrode 34. Moreover, in each of the chambers 12, 13, 14, 15, and 16, it is preferable that the second electrode 32 and the first electrode 31B are disposed close to each other to the extent that they do not short-circuit, so that the resistance therebetween is sufficiently low. To this end, it is preferable that the chambers, except for the chambers 11 and 17 at both ends, are short in the partition direction of the processing tank 7A (the coupling direction of the lithium isotope enrichment devices 1G). With such a configuration, the multi-stage lithium isotope enrichment device 10C according to this modification can be reduced in size in the coupling direction while reducing the number of parts.

The power supply unit 50C includes six power supply units 5C1, 5C2, 5C3, 5C4, 5C5, and 5C6 arranged in this order from the supply side, each of which includes a power supply 51 and a sub-power supply 52. The power supply units 5C1, 5C2, 5C3, 5C4, 5C5, and 5C6 each correspond to the power supply unit 5G of the lithium isotope enrichment device 1G,
and are referred to as the power supply unit 5C as appropriate unless particularly distinguished from each other. In the power supply unit 5C, the power supply 51 and the sub-power supply 52 alternately apply DC voltages, as in the power supply unit 5G. The first electrode 31B and the second electrode 32 in the chambers 12 to 16 function as the third electrode 33 and the sub-electrode 34. The power supply unit 50C is configured such that neighboring three power supply units 5C are set as a group. The power supply units 5C1 and 5C4, the power supply units 5C2 and 5C5, and the power supply units 5C3 and 5C6 are synchronized and driven. To this end, the power supply unit 5C further includes three-position switching elements $5s_{31}$, $5s_{32}$, $5s_{33}$, and $5s_{34}$ (collectively referred to as the switching elements 5s as appropriate) constituting a four-pole switch to simultaneously switch connection destinations of the electrodes 31B, 32, 33, and 34 and switch between connection and disconnection thereof.

The switching element $5s_{31}$ is a three-throw switch that switches the connection destination of the first electrode 31B between the positive electrode of the power supply 51, the positive electrode of the sub-power supply 52, and the negative electrode of the sub-power supply 52 or the power supply 51. The switching element $5s_{32}$ switches the connection destination of the second electrode 32 between the positive electrode of the power supply 51, the negative electrode of the sub-power supply 52, and disconnection. The switching element $5s_{33}$ switches the connection destination of the third electrode 33 between the negative electrode of the power supply 51 and disconnection. The switching element $5s_{34}$ switches the connection destination of the sub-electrode 34 between the negative electrode of the sub-power supply 52, the positive electrode of the sub-power supply 52, and disconnection. In addition, the first electrode 31B and the second electrode 32 disposed in the chambers 12 to 16 also serve as the third electrode 33 and the sub-electrode 34, respectively. Hence, only the power supply unit 5C6 at the end on the recovery side includes the switching element $5s_{33}$, and only the power supply unit 5C1 at the end on the supply side includes the switching element $5s_{34}$.

In the power supply unit 50C, the negative electrode of the power supply 51 on the supply side and the negative electrode of the sub-power supply 52 on the recovery side in neighboring two power supply units 5C can be connected to the same first electrode 31B at the same time, and are thus connected. Furthermore, as shown in FIG. 28, the positive electrode of the sub-power supply 52 on the supply side and the positive electrode of the power supply 51 on the recovery side in the neighboring two power supply units 5C may or may not be connected to each other. In addition, it is preferable that the power supply 51 and the sub-power supply 52 are not grounded. Alternatively, it is preferable that the power supply 51 or the sub-power supply 52 in only one of the synchronized power supply units 5C is grounded to a reference potential. The power supply unit 50C may also be configured such that the synchronized power supply units 5C1 and 5C4, the synchronized power supply units 5C2 and 5C5, and the synchronized power supply units 5C3 and 5C6 each include one power supply 51 and one sub-power supply 52. The power supply unit 50C connects the power supply 51 to neighboring two of the chambers 12, 13, 14, 15, 16, and 17 so that the voltage +V1 is not applied between two electrodes in one chamber at the same time. When the power supply 51 is connected, the first electrode 31B facing the second electrode 32 across the electrolyte membrane 2 is short-circuited, and the sub-power supply 52 is not connected to this first electrode 31B at this point. The sub-power supply 52 only needs to be connected after the power supply 51 is disconnected. The circuit configuration of the power supply unit 50C shown in FIG. 28 is just an example.

The multi-stage lithium isotope enrichment device 10C preferably further includes a stirring device (circulator) 8 for circulating the aqueous solutions FS, $ES_1$, $ES_2$, $ES_3$, $ES_4$, $ES_5$, and $ES_6$ in the chambers 11, 12, 13, 14, 15, 16, and 17, respectively, as with the multi-stage lithium isotope enrichment devices 10 and 10A (see FIGs. 9 and 18). The multi-stage lithium isotope enrichment device 10C may further include a cooling device (not shown) for cooling the electrolyte membranes 22, 23, 24, 25, 26, and 27, as necessary. Other components are as described in the configurations of the lithium isotope enrichment devices 1, 1F, and 1G and the multi-stage lithium isotope enrichment devices 10, 10A, and 10B.

In the multi-stage lithium isotope enrichment device 10C, the power supply units 5C1 and 5C4, the power supply units 5C2 and 5C5, and the power supply units 5C3 and 5C6 are synchronized and driven such that neighboring power supply units 5C do not apply the voltage +V1 at the same time. Furthermore, in each of the chambers 12 to 16, except for the chambers 11 and 17 at both ends, the voltage +V1 applied between the second electrode 32 and the first electrode 31B that functions as the third electrode 33 also serves as the voltage +V2 applied between the second electrode 32 that functions as the sub-electrode 34 and the first electrode 31B. To this end, all the power supply units 5C are set to have the same cycle $t_{CYC}$, and the electrodialysis period $t_{ED}$, reset period $t_{RST}$, and preparation period $t_{PREP}$ are each set to less than 1/3 of the cycle $t_{CYC}$ ($t_{ED} < t_{CYC}/3$, $t_{RST} < t_{CYC}/3$, $t_{PREP} < t_{CYC}/3$). The power supply units 5C1 and 5C4, the power supply units 5C2 and 5C5, and the power supply units 5C3 and 5C6 are driven so that the electrodialysis periods $t_{ED}$ do not overlap.

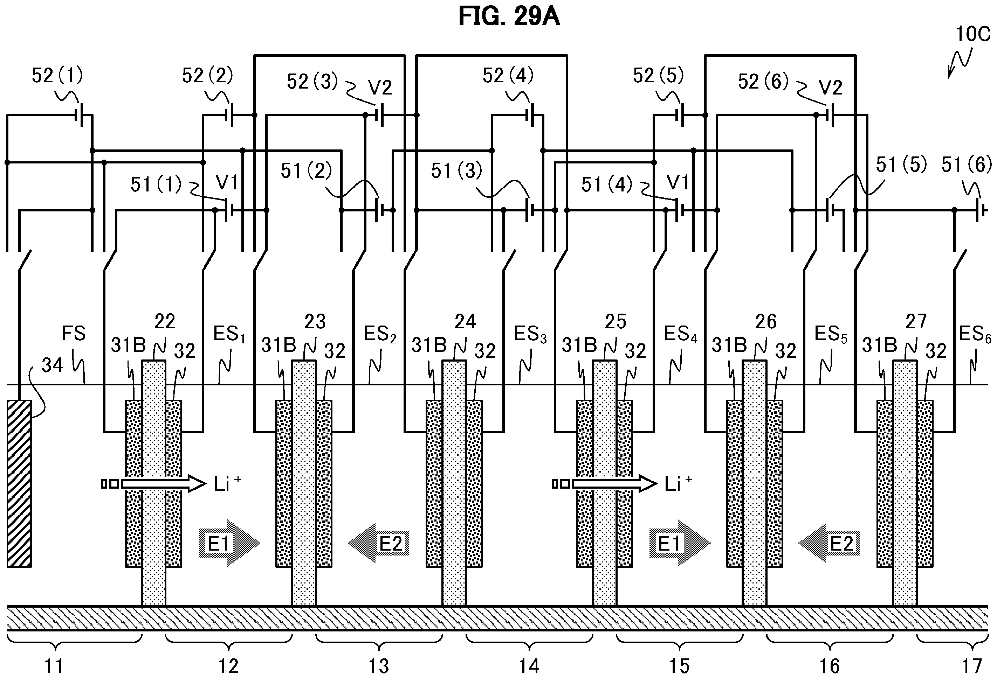

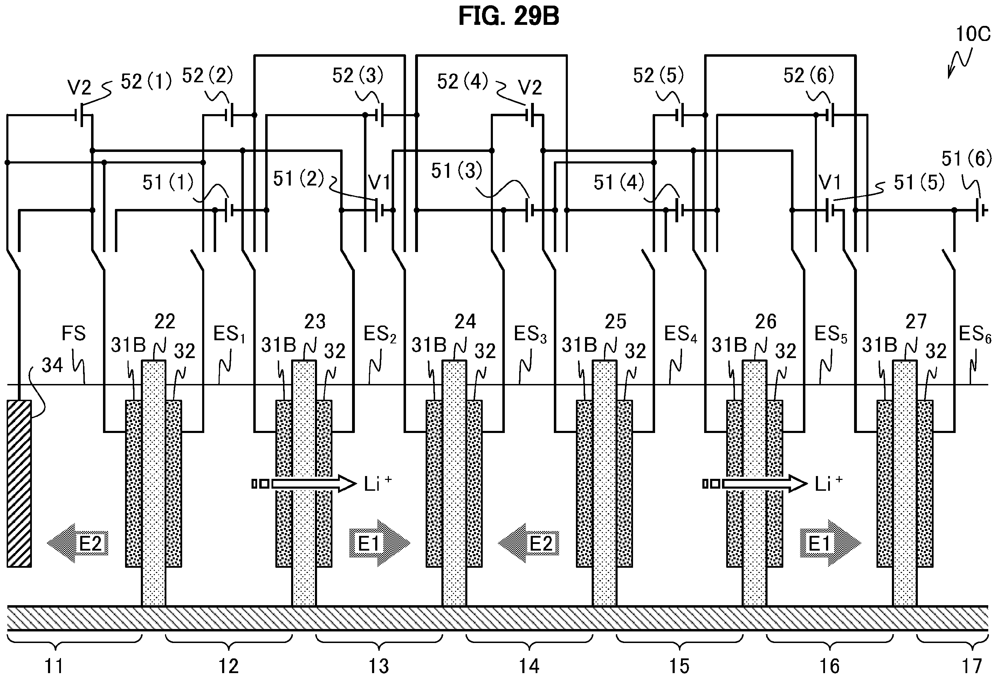

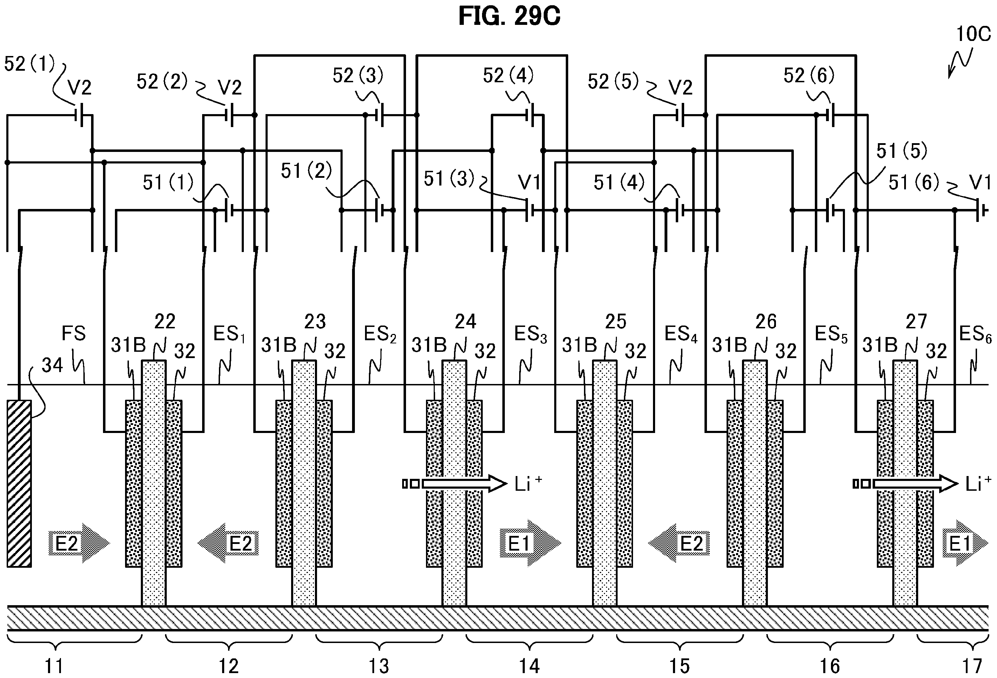

A lithium isotope enrichment method using the multi-stage lithium isotope enrichment device 10C will be described below with reference to FIGs. 29A, 29B, and 29C. In FIGs. 29A, 29B, and 29C, the power supply 51 and the sub-power supply 52 of each of the power supply units 5C1, 5C2, 5C3, 5C4, 5C5, and 5C6 are referred to as the power supplies 51(1), 51(2), 51(3), 51(4), 51(5), and 51(6) and the sub-power supplies 52(1), 52(2), 52(3), 52(4), 52(5), and 52(6). FIGs. 29A, 29B, and 29C also omit the third electrode 33 in the chamber 17 and the switching element $5s_{33}$ connected thereto.

As shown in FIG. 29A, when the voltage +V1 is applied by the power supply units 5C1 and 5C4 connecting the power supplies 51(1) and 51(4), the other power supply units 5C2, 5C3, 5C5, and 5C6 disconnect the power supply 51. Meanwhile, the power supply units 5C3 and 5C6 connect the sub-power supplies 52(3) and 52(6) to apply the voltage -V2. As a result, the first electrode 31B and the second electrode 32, which face each other across the electrolyte membranes 22 and 25, are short-circuited and connected to the positive electrodes of the power supplies 51(1) and 51(4), and the first electrode 31B in the same chambers 12 and 15 as the second electrode 32 is connected to the negative electrode. The second electrode 32 and the first electrode 31B, which face each other in the chambers 13 and 16, are connected to the negative and positive electrodes of the sub-power supplies 52(3) and 52(6), respectively. On the other hand, the sub-electrode 34 in the chamber 11, the second electrode 32 in the chamber 14, and the second electrode 32 and the third electrode 33 in the chamber 17 (see FIG. 28) are in an open state. In this event, an electric field +E1 is generated in each of the aqueous solutions $ES_1$ and $ES_4$ in the chambers 12 and 15. Then, $Li^+$ in the aqueous solutions $ES_1$ and $ES_4$ is attracted to the surfaces of the electrolyte membranes 23 and 26. $Li^+$ in the Li-containing aqueous solution FS in the supply chamber 11 passes through the electrolyte membrane 22 and migrates to the aqueous solution $ES_1$. Similarly, $Li^+$ in the aqueous solution $ES_3$ in the chamber 14 passes through the electrolyte membrane 25 and migrates to the aqueous solution $ES_4$. In this event, $O_2$ is generated from the vicinity of the electrodes 31B and 32 applied to both surfaces of the electrolyte membranes 22 and 25, and $H_2$ is generated from the vicinity of the first electrode 31B applied to the surfaces of the electrolyte membranes 23 and 26 (not shown). An electric field -E2 is also generated in each of the aqueous solutions $ES_2$ and $ES_5$ in the chambers 13 and 16, causing $Li^+$ in the aqueous solutions $ES_2$ and $ES_5$ adsorbed on the surfaces of the electrolyte membranes 24 and 27 to quickly desorb.

Next, as shown in FIG. 29B, the power supply units 5C1 and 5C4 connect the sub-power supplies 52(1) and 52(4) to apply the voltage -V2, and the power supply units 5C2 and 5C5 connect the power supplies 51(2) and 51(5) to apply the voltage +V1. As a result, the first electrode 31B and the second electrode 32, which face each other across the electrolyte membranes 23 and 26, are short-circuited and connected to the positive electrodes of the power supplies 51(2) and 51(5), and the first electrode 31B in the same chambers 13 and 16 as the second electrode 32 is connected to the negative electrode. In addition, the sub-electrode 34 or the second electrode 32 and the first electrode 31B facing each other in the chambers 11 and 14 are connected to the negative and positive electrodes of the sub-power supplies 52(1) and 52(4), respectively. Meanwhile, the second electrode 32 in the chambers 12 and 15 as well as the second electrode 32 and the third electrode 33 in the chamber 17 (see FIG. 28) are in an open state. In this event, an electric field -E2 is generated in the aqueous solutions FS and $ES_3$ in the chambers 11 and 14, respectively, causing $Li^+$ adsorbed on the surfaces to pass through the electrolyte membranes 22 and 25 to quickly desorb. An electric field +E1 is also generated in the aqueous solutions $ES_2$ and $ES_5$ in the chambers 13 and 16, respectively. Then, the $Li^+$ in the aqueous solutions $ES_2$ and $ES_5$ is attracted to the surfaces of the electrolyte membranes 24 and 27. $Li^+$ in the aqueous solution $ES_1$ in the chamber 12 passes through the electrolyte membrane 23 and migrates to the aqueous solution $ES_2$. Similarly, $Li^+$ in the aqueous solution $ES_4$ in the chamber 15 passes through the electrolyte membrane 26 and migrates to the aqueous solution $ES_5$. In this event, $O_2$ is generated from the vicinity of the electrodes 31B and 32 applied to both surfaces of the electrolyte membranes 23 and 26, and $H_2$ is generated from the vicinity of the first electrodes 31B applied to the surfaces of the electrolyte membranes 24 and 27 (not shown).

Then, as shown in FIG. 29C, the power supply units 5C2 and 5C5 connect the sub-power supplies 52(2) and 52(5) to apply the voltage -V2. The power supply units 5C3 and 5C6 connect the power supplies 51(3) and 51(6) to apply the voltage +V1. The power supply unit 5C1 also connects the power supply 52(1) by reversing the polarity to apply the voltage +V2. As a result, the first electrode 31B and the second electrode 32, which face each other across the electrolyte membranes 24 and 27, are short-circuited and connected to the positive electrodes of the power supplies 51(3) and 51(6). The first electrode 31B or the third electrode 33 (see FIG. 28) in the same chambers 14 and 17 as the second electrode 32 is connected to the negative electrode. In addition, the second electrode 32 and the first electrode 31B, which face each other in the chambers 12 and 15, are connected to the negative electrode and the positive electrode of the sub-power supplies 52(2) and 52(5), respectively. The sub-electrode 34 and the first electrode 31B, which face each other in the chamber 11, are connected to the positive electrode and the negative electrode of the sub-power supply 52(1). Meanwhile, the second electrodes 32 in the chambers 13 and 16 are in an open state. In this event, an electric field -E2 is generated in the aqueous solutions $ES_1$ and $ES_4$ in the chambers 12 and 15, respectively, causing $Li^+$ adsorbed on the surfaces thereof to pass through the electrolyte membranes to quickly desorb. An electric field +E2 is also generated in the Li-containing aqueous solution FS in the supply chamber 11. An electric field +E1 is generated in each of the aqueous solutions $ES_3$ and $ES_6$ in the chambers 14 and 17. Then, $Li^+$ in the aqueous solutions FS and $ES_3$ is attracted to the surfaces of the electrolyte membranes 22 and 25. $Li^+$ in the aqueous solution $ES_2$ in the chamber 13 passes through the electrolyte membrane 24 and migrates to the aqueous solution $ES_3$. Similarly, $Li^+$ in the aqueous solution $ES_5$ in the chamber 16 passes through the electrolyte membrane 27 and migrates to the aqueous solution ESe. In this event, $O_2$ is generated from the vicinity of the electrodes 31B and 32 applies to both surfaces of the electrolyte membranes 24 and 27. $H_2$ is also generated from the vicinity of the first electrode 31B applied to the surface of the electrolyte membrane 25 and from the vicinity of the third electrode 33 in the chamber 17 (not shown).

Then, as shown in FIG. 29A again, the power supply units 5C3 and 5C6 connect the sub-power supplies 52(3) and 52(6) to apply the voltage -V2. The power supply units 5C1 and 5C4 connect the power supplies 51(1) and 51(4) to apply the voltage +V1. In this way, in the multi-stage lithium isotope enrichment device 10C, the power supply units 5C1 and 5C4, the power supply units 5C2 and 5C5, and the power supply units 5C3 and 5C6 alternately switch between connection and disconnection of the power supplies 51 and 52. As a result, the voltage +V1 is intermittently applied to alternately generate the electric field +E1 in each of the chambers 12 and 15, chambers 13 and 16, and chambers 14 and 17. This makes it possible to increase the isotope separation coefficient for each electrolyte membrane 2. Furthermore, in the neighboring chamber on the supply side, the voltage -V2 and the voltage +V2 or the voltage +V1 are then sequentially applied to generate the electric field -E2 and the electric field +E2 or the electric field +E1. This makes it possible to further increase the isotope separation coefficient even if the application stop period of the voltage +V1 is short.

In the multi-stage lithium isotope enrichment devices 10B and 10C according to this modification, as with the multi-stage lithium isotope enrichment device 10A, adjacent electrolyte membranes 2, 2 may be disposed perpendicularly to each other by coupling the lithium isotope enrichment devices 1G with one or two 90° bends. In a chamber at the bend partitioned by the electrolyte membranes 2, 2 disposed perpendicularly to each other, other electrodes do not serve as the third electrode 33 or the sub-electrode 34, that is, all of the second electrode 32, the third electrode 33, the sub-electrode 34, and the first electrode 31 are disposed, and the third electrode 33 and the sub-electrode 34 are disposed perpendicularly to each other and spaced apart so as not to short-circuit.

As with the lithium isotope enrichment device 1 and the multi-stage lithium isotope enrichment device 10 according to the first embodiment, the lithium isotope enrichment devices 1G and 1H and the multi-stage lithium isotope enrichment devices 10B and 10C according to the modification of the third embodiment can be configured by adding a configuration for replenishing the Li-containing aqueous solution FS with $Li^+$ as in the lithium isotope enrichment devices 1C, 1D, and 1E (FIGs. 10 to 15) according to the second embodiment and its modifications.

**EXAMPLE**

The lithium isotope enrichment device and the lithium isotope enrichment method according to the present invention have been described above based on the embodiments of the present invention. Hereinafter, examples in which the effects of the present invention have been confirmed will be described. It should be noted that the present invention is not limited to these examples and the above embodiments. It goes without saying that various changes and modifications based on these descriptions are also included in the spirit of the present invention.

With the lithium isotope enrichment device according to the first embodiment of the present invention shown in FIG. 1 and the lithium isotope enrichment device shown in FIG. 31 as a comparative example, the amount of change in lithium isotope ratio is measured.

(Preparation of Lithium Isotope Enrichment Device)

The lithium isotope enrichment device uses a 50 mm×50 mm, 0.5 mm thick plate-like $La_{0.57}Li_{0.29}TiO_3$ (lithium-ion conducting ceramic LLTO, produced by TOHO TITANIUM CO., LTD.) as an electrolyte membrane. In regions of 19.5 mm×20.5 mm in center portions of both surfaces of this electrolyte membrane, lattice-shaped electrodes each having a thickness of 10 $\mu$m, a width of 0.5 mm, and an interval of 0.5 mm are formed as a first electrode and a second electrode. Moreover, leads for connecting the electrodes and the power supply are formed. The first electrode, the second electrode, and the leads are formed by screen-printing a Pt paste on the surfaces of the electrolyte membrane, followed by baking at 900 °C for 1 h in the atmosphere. A 30 mm×40 mm Ni mesh electrode is used as a third electrode. The electrolyte membrane on which the electrodes and the like are formed is set in a processing tank formed of acrylic plates to partition the processing tank into a supply chamber and a recovery chamber, and the third electrode is disposed in the recovery chamber so as to face the second electrode on the surface of the electrolyte membrane (distance between the third electrode and the electrolyte membrane: 50 mm). The processing tank is accommodated in a constant-temperature tank having a temperature adjustment function. Then, the first electrode and the second electrode are connected by the lead, and a power supply is connected between the first and second electrodes and the third electrode with the first electrode as the positive electrode, thus obtaining a lithium isotope enrichment device of Example 1.

As a lithium isotope enrichment device of Comparative Example, without using a third electrode, a power supply is connected between a first electrode and a second electrode with the first electrode as the positive electrode (see FIG. 31). An electrode is formed of a Pt paste, as in Example 1, on one surface of the electrolyte membrane, and the electrolyte membrane is set in a processing tank with this electrode as the second electrode. Moreover, a 30 mm×40 mm Pt mesh electrode is disposed as the first electrode so as to face the electrolyte membrane in the supply chamber (distance between the first electrode and the electrolyte membrane: 50 mm), thus obtaining a lithium isotope enrichment device of Example 2.

150 ml of 1 mol/L lithium hydroxide aqueous solution containing 92.23 mol% of $^7$Li and 7.77 mol% of $^6$Li is fed as a Li-containing aqueous solution into the supply chamber of the lithium isotope enrichment device, such that the first electrode is completely immersed. The lithium hydroxide aqueous solution is also stored for replacement in a tank installed outside the processing tank of the lithium isotope enrichment device in a constant-temperature tank. On the other hand, 150 ml of pure water is fed as a $^6$Li recovery aqueous solution into the recovery chamber thereof, such that the second electrode and the third electrode are completely immersed. Then, the solution temperatures of the lithium hydroxide aqueous solution and pure water in the constant-temperature tank are adjusted to 20 °C.

(Lithium Isotope Enrichment Experiment)

For Example 1 and Example 2, a DC voltage of 2.0 V is applied between the first electrode and the second and third electrodes for 12 h. For Comparative Example, a DC voltage of 2.0 V is applied between the first electrode and the second electrode for 12 h. 2.0 V is the voltage at which LLTO (electrolyte membrane) exhibits $Li^+$ conductivity and exhibits no or sufficiently small electron conductivity. To suppress changes in the concentration of the lithium hydroxide aqueous solution in the supply chamber due to $Li^+$ migration, the lithium hydroxide aqueous solution is replenished from the external tank into the supply chamber at a constant rate by a liquid feeding pump while applying a voltage, and is also pumped out at the same rate.

After the experiment, the aqueous solution in the recovery chamber is recovered, and the amounts of $^7$Li and $^6$Li in the aqueous solution are measured using an inductively coupled plasma mass spectrometry (ICP-MS) device (Elan drc-e, manufactured by PerkinElmer, Inc.). From the amounts of $^7$Li and $^6$Li, the $Li^+$ migration amount per hour of voltage application time and the $^6$Li isotope separation coefficient are calculated. The $^6$Li isotope separation coefficient is (($^6$Li/$^7$Li) molar ratio of the aqueous solution in the recovery chamber after voltage application)/(($^6$Li/$^7$Li) molar ratio of the lithium hydroxide aqueous solution in the supply chamber before voltage application). Table 1 and FIG. 30 show the $Li^+$ migration amount ($Li^+$ migration amount per voltage +V1 application time, $Li^+$ mobility) and $^6$Li isotope separation coefficient obtained as a result of 12 h of voltage application.

[Table 1]

|  | Applied voltage | Li+ migration amount (mg) | Li+ mobility (mg/h) | 6Li isotope separation coefficient | Remarks |
|---|---|---|---|---|---|
| Example 1 | Between first and second electrodes and third electrode: 2.0 V | 8.24 | 0.687 | 1.069 | Between first electrode and LLTO membrane: 0 mm |
| Example 2 | Between first and second electrodes and third electrode: 2.0 V | 20.19 | 1.683 | 1.067 | Between first electrode and LLTO membrane: 50 mm |
| Comparative Example 1 | Between first electrode and second electrode: 2.0 V | 8.80 | 0.733 | 1.030 | Between first electrode and LLTO membrane: 0 mm |

As shown in Table 1 and FIG. 30, compared to Comparative Example with voltage application between both surfaces of the electrolyte membrane, Example 1 and Example 2 where a potential difference of 0 V between both surfaces of the electrolyte membrane is provided in the recovery chamber show high $^6$Li isotope separation coefficient. From this result, it has been confirmed that

the $^6$Li enrichment effect can be obtained by moving Li+ only by the chemical potential difference. In addition, the $^6$Li isotope separation coefficient is the same whether the first electrode is in contact with or away from the electrolyte membrane. Example 1 with the electrodes in contact with both surfaces of the electrolyte membrane shows the same Li+ mobility as Comparative Example.

**Reference Signs List**

1, 1A, 1C to 1H lithium isotope enrichment device
1B lithium isotope enrichment device (multi-stage lithium isotope enrichment device)
10, 10A, 10B, 10C multi-stage lithium isotope enrichment device
11 supply chamber (first chamber)
12 recovery chamber (second chamber)
1z replenishment chamber (lithium replenishment chamber)
1y raw material chamber
2 electrolyte membrane (lithium ion-conducting electrolyte membrane)
21 electrolyte membrane (lithium ion-conducting electrolyte membrane for lithium replenishment)
22, 23, 24, 25, 26, 27 electrolyte membrane (lithium ion-conducting electrolyte membrane)
31, 31A, 31B first electrode
32, 32A second electrode
33, 33A third electrode
34, 34A sub-electrode
41 fourth electrode
42, 42A fifth electrode
50, 50B, 50C power supply unit
5, 5G, 5H power supply unit
5A1 to 5A4, 5B1 to 5B4, 5C1 to 5C6 power supply unit
51, 51A power supply
52 sub-power supply
6 ion exchange membrane
7, 7A, 7B processing tank
8 stirring device (circulator)
FS Li-containing aqueous solution
ES $^6$Li recovery aqueous solution

## Claims

1. A lithium isotope enrichment device comprising:

a lithium ion-conducting electrolyte membrane;
a processing tank partitioned by the lithium ion-conducting electrolyte membrane into a first chamber and a second chamber;
a first electrode provided in one of the first chamber and the second chamber, and a second electrode with a porous structure provided in contact with a surface of the lithium ion-conducting electrolyte membrane on the other chamber side;
a third electrode provided in the other chamber so as to be spaced apart from the second electrode on the opposite side of the lithium ion-conducting electrolyte membrane; and
a power supply that applies the same voltage, with respect to the third electrode, to the first electrode and the second electrode, with the first chamber side being positive, wherein
an aqueous solution containing lithium ions having a higher $^6$Li isotope ratio than an aqueous solution containing $^6$Li and $^7$Li in the form of lithium ions is recovered in the second chamber from the aqueous solution, which is stored in the first chamber.

2. The lithium isotope enrichment device, according to claim 1, wherein

the first electrode is provided in the first chamber,
the second electrode is provided in contact with the surface of the lithium ion-conducting electrolyte membrane on the second chamber side,
the third electrode is provided in the second chamber, and
the power supply applies a positive voltage, with respect to the third electrode, to the first electrode and the second electrode.

3. The lithium isotope enrichment device, according to claim 2, further comprising:

a sub-electrode provided spaced apart from the first electrode in the first chamber, wherein
one of the first electrode and the sub-electrode is spaced apart from the surface of the lithium ion-conducting electrolyte membrane on the first chamber side, and the other has a porous structure and in contact with the surface, and
the power supply alternately applies a positive voltage, with respect to the third electrode, to the first electrode and the second electrode, and applies a voltage between the first electrode and the sub-electrode with one of the electrodes being negative.

4. The lithium isotope enrichment device, according to claim 3, wherein
the power supply applies a voltage between the first electrode and the sub-electrode with one of the electrodes being positive after applying the voltage between the first electrode and the sub-electrode with one of the electrodes being negative and before applying the positive voltage, with respect to the third electrode, to the first electrode and the second electrode.

5. The lithium isotope enrichment device, according to claim 1 or 2, wherein
the power supply intermittently applies the voltage.

6. The lithium isotope enrichment device, according to any one of claims 1 to 5, further comprising:
a circulator for circulating the aqueous solution stored in the second chamber.

7. The lithium isotope enrichment device, according to any one of claims 1 to 6, further comprising:
a circulator for circulating the aqueous solution stored in the first chamber.

8. The lithium isotope enrichment device, according to any one of claims 1 to 6, further comprising:
a circulator for circulating the aqueous solution stored in the first chamber with an aqueous solution containing $^6$Li and $^7$Li in the form of lithium ions outside the lithium isotope enrichment device.

9. The lithium isotope enrichment device, according to any one of claims 1 to 7, wherein

the processing tank is partitioned into a lithium replenishment chamber, the first chamber, and the second chamber in this order,
the lithium isotope enrichment device further comprising:

a lithium ion-conducting electrolyte membrane for lithium replenishment that separates the lithium replenishment chamber from the first chamber;
a fourth electrode provided in the lithium replenishment chamber;
a fifth electrode provided in the first chamber in contact with or facing the lithium ion-conducting electrolyte membrane for lithium replenishment; and
a lithium replenishment power supply connected between the fourth electrode and the fifth electrode, with the fourth electrode as a positive electrode, wherein
lithium ions are moved from the aqueous solution containing $^6$Li and $^7$Li in the form of lithium ions stored in the lithium replenishment chamber to the aqueous solution stored in the first chamber.

10. The lithium isotope enrichment device, according to any one of claims 1 to 9, further comprising:
a cooling device for cooling the lithium ion-conducting electrolyte membrane.

11. A multi-stage lithium isotope enrichment device comprising more than or equal to two of the lithium isotope enrichment devices according to any one of claims 1 to 7 coupled, wherein
two adjacent lithium isotope enrichment devices are coupled via an aqueous solution transfer means that allows the aqueous solution stored in the second chamber of one of the lithium isotope enrichment devices to flow into the first chamber of the other.

12. A multi-stage lithium isotope enrichment device comprising more than or equal to two of the lithium isotope enrichment devices according to any one of claims 1 to 5 coupled so that the processing tanks are integrated, wherein

the lithium ion-conducting electrolyte membranes of the lithium isotope enrichment devices are disposed spaced apart from each other so as to partition the integrated processing tank into more than or equal to three chambers, and
the second chamber of one of the two adjacent lithium isotope enrichment devices also serves as the first chamber of the other.

13. A multi-stage lithium isotope enrichment device comprising more than or equal to two of the lithium isotope enrichment devices according to claim 5, coupled so that the processing tanks are integrated, wherein

the lithium ion-conducting electrolyte membranes of the lithium isotope enrichment devices are disposed spaced apart from each other so as to partition the integrated processing tank into more than or equal to three chambers, the second chamber of one of the two adjacent lithium isotope enrichment devices also serves as the first chamber of the other, and the third electrode of one of the adjacent lithium isotope enrichment devices also serves as the first electrode of the other.

14. A multi-stage lithium isotope enrichment device comprising more than or equal to two of the lithium isotope enrichment devices according to claim 3 or claim 4, coupled so that the processing tanks are integrated, wherein

the lithium ion-conducting electrolyte membranes of the lithium isotope enrichment devices are disposed spaced apart from each other so as to partition the integrated processing tank into more than or equal to three chambers, the second chamber of one of the two adjacent lithium isotope enrichment devices also serves as the first chamber of the other, and the third electrode of the one of the two adjacent lithium isotope enrichment devices also serves as the first electrode or the sub-electrode of the other.

15. A multi-stage lithium isotope enrichment device comprising more than or equal to two of the lithium isotope enrichment devices according to claim 3 or 4, coupled so that the processing tanks are integrated, wherein

the lithium ion-conducting electrolyte membranes of the lithium isotope enrichment devices are disposed spaced apart from each other so as to partition the integrated processing tank into more than or equal to three chambers, the second chamber of one of the two adjacent lithium isotope enrichment devices also serves as the first chamber of the other, the second electrode of the one of the two adjacent lithium isotope enrichment devices also serves as the sub-electrode of the other, and the third electrode of the one of the two adjacent lithium isotope enrichment devices also serves as the first electrode of the other.

16. A multi-stage lithium isotope enrichment device comprising the lithium isotope enrichment device according to any one of claims 2 to 4, wherein

more than or equal to two of the lithium ion-conducting electrolyte membranes are provided, and the processing tank is partitioned into more than or equal to three chambers, the first chamber, more than or equal to one intermediate chamber, and the second chamber in this order, and
the second electrode is provided in contact with the lithium ion-conducting electrolyte membrane that separates the first chamber from the adjacent intermediate chamber.

17. The multi-stage lithium isotope enrichment device according to any one of claims 12 to 16, further comprising:
a circulator for circulating an aqueous solution stored in at least one of the partitioned processing tanks.

18. The multi-stage lithium isotope enrichment device according to any one of claims 12 to 17, further comprising:
a cooling device for cooling an aqueous solution stored in at least one of the partitioned processing tanks.

19. The multi-stage lithium isotope enrichment device according to any one of claims 12 to 18, further comprising:
a circulator for circulating the aqueous solution stored in the first chamber at the end of the partitioned processing tank on the first chamber side with an aqueous solution containing $^6$Li and $^7$Li in the form of lithium ions outside the multi-stage lithium isotope enrichment device.

20. The multi-stage lithium isotope enrichment device according to any one of claims 12 to 18, further comprising:

a lithium ion-conducting electrolyte membrane for lithium replenishment, which further partitions the partitioned processing tank so that a lithium replenishment chamber is provided at the end on the first chamber side;
a fourth electrode provided in the lithium replenishment chamber;
a fifth electrode provided in the first chamber adjacent to the lithium replenishment chamber in contact with or facing the lithium ion-conducting electrolyte membrane for lithium replenishment; and
a lithium replenishment power supply connected between the fourth electrode and the fifth electrode, with the fourth electrode as a positive electrode, wherein
lithium ions are moved from an aqueous solution containing $^6$Li and $^7$Li in the form of lithium ions stored in the lithium replenishment chamber to an aqueous solution stored in the first chamber adjacent to the lithium replenishment chamber.

21. A lithium isotope enrichment method for recovering, in a processing tank partitioned into a first chamber and a second chamber by a lithium ion-conducting electrolyte membrane, an aqueous solution containing lithium ions having a higher $^6$Li isotope ratio than an aqueous solution containing $^6$Li and $^7$Li in the form of lithium ions in the second chamber from the aqueous solution stored in the first chamber, comprising:
applying the same voltage, with respect to a third electrode provided in the other chamber so as to be spaced apart from the second electrode on the opposite side of the lithium ion-conducting electrolyte membrane to a first electrode provided in one of the first and second chambers and a second electrode having a porous structure provided in contact with the surface of the lithium ion-conducting electrolyte membrane on the other chamber side.

22. The lithium isotope enrichment method according to claim 21, wherein

the first electrode is provided in the first chamber, the second electrode is provided in contact with the surface of the lithium ion-conducting electrolyte membrane on the second chamber side, and the third electrode is provided in the second chamber, and
a positive voltage, with respect to the third electrode, is applied to the first electrode and the second electrode.

23. The lithium isotope enrichment method according to claim 21 or 22, wherein
the voltage is intermittently applied.

24. The lithium isotope enrichment method according to claim 22, wherein
a first step of applying the positive voltage between the first and second electrodes and the third electrode, and a second step of applying a voltage between the first electrode and a sub-electrode provided spaced apart from the first electrode in the first chamber, with one of the first electrode and the sub-electrode having a porous structure and in contact with the surface of the lithium ion-conducting electrolyte membrane on the first chamber side being positive and the other spaced apart from the surface being negative are alternately performed.

25. The lithium isotope enrichment method according to claim 24, wherein

a third step is performed to apply a voltage between the sub-electrode and the first electrode in a direction opposite to that of the second step, and
the first step, the second step, and the third step are repeated in this order.

# FIG. 1

# FIG. 2

# FIG. 3

# FIG. 4A

# FIG. 4B

# FIG. 4C

# FIG. 5

# FIG. 6

# FIG. 7

**FIG. 8**

EP 4 501 439 A1

**FIG. 9**

EP 4 501 439 A1

# FIG. 10

# FIG. 11

**FIG. 12**

**FIG. 13**

EP 4 501 439 A1

**FIG. 14**

EP 4 501 439 A1

# FIG. 15

EP 4 501 439 A1

## FIG. 16

## FIG. 17

**FIG. 18**

EP 4 501 439 A1

**FIG. 19A**

**FIG. 19B**

EP 4 501 439 A1

## FIG. 20

## FIG. 21

# FIG. 22

# FIG. 23

# FIG. 24

# FIG. 25

**FIG. 26**

EP 4 501 439 A1

# FIG. 27A

EP 4 501 439 A1

# FIG. 27B

EP 4 501 439 A1

FIG. 28

# FIG. 29A

10C

52(1)  52(2)  52(3) ∿ V2  52(4)  52(5)  52(6) ∿ V2

51(1) ∿ V1  51(2)  51(3)  51(4) ∿ V1  51(5)  51(6)

FS  22  ES₁  23  ES₂  24  ES₃  25  ES₄  26  ES₅  27  ES₆
34  31B  32  31B  32  31B  32  31B  32  31B  32  31B  32

Li⁺  E1  E2  E1  Li⁺  E1  E2

11  12  13  14  15  16  17

EP 4 501 439 A1

FIG. 29B

# FIG. 29C

EP 4 501 439 A1

# FIG. 30

# FIG. 31

<div align="center">

**INTERNATIONAL SEARCH REPORT**

</div>

| | International application No. |
|---|---|
| | **PCT/JP2023/012998** |

**A. CLASSIFICATION OF SUBJECT MATTER**

***B01D 59/42***(2006.01)i; ***C02F 1/48***(2023.01)i
FI: B01D59/42; C02F1/48 B

According to International Patent Classification (IPC) or to both national classification and IPC

**B. FIELDS SEARCHED**

Minimum documentation searched (classification system followed by classification symbols)

B01D59/42; C02F1/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2019-141807 A (HIROSAKI UNIV.) 29 August 2019 (2019-08-29) | 1-25 |
| A | JP 2019-141808 A (HIROSAKI UNIV.) 29 August 2019 (2019-08-29) | 1-25 |
| A | CN 103736395 A (CHINA INST. ATOMIC ENERGY) 23 April 2014 (2014-04-23) | 1-25 |
| A | CN 112473370 A (TIANQI LITHIUM CORP.) 12 March 2021 (2021-03-12) | 1-25 |
| A | JP 2002-079059 A (JAPAN ATOM. ENERGY RES. INST.) 19 March 2002 (2002-03-19) | 1-25 |
| A | JP 2012-055881 A (JAPAN ATOMIC ENERGY AGCY.) 22 March 2012 (2012-03-22) | 1-25 |
| A | JP 2019-081953 A (IDEMITSU KOSAN CO., LTD.) 30 May 2019 (2019-05-30) | 1-25 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 June 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/012998**

| Patent document cited in search report | | | Publication date (day/month/year) | Patent family member(s) | | | Publication date (day/month/year) |
|---|---|---|---|---|---|---|---|
| JP | 2019-141807 | A | 29 August 2019 | (Family: none) | | | |
| JP | 2019-141808 | A | 29 August 2019 | (Family: none) | | | |
| CN | 103736395 | A | 23 April 2014 | (Family: none) | | | |
| CN | 112473370 | A | 12 March 2021 | (Family: none) | | | |
| JP | 2002-079059 | A | 19 March 2002 | EP | 1186337 | A2 | |
| JP | 2012-055881 | A | 22 March 2012 | CN | 102373341 | A | |
| | | | | KR | 10-2012-0024423 | A | |
| JP | 2019-081953 | A | 30 May 2019 | (Family: none) | | | |

Form PCT/ISA/210 (patent family annex) (January 2015)

# EP 4 501 439 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5429658 B
- JP 6233877 B
- JP 2019141807 A
- JP 2019141808 A
- WO 2023027190 A

### Non-patent literature cited in the description

- **SHUNSUKE HONDA** ; **KIYOTO SHIN-MURA** ; **KAZUYA SASAKI**. Lithium isotope enrichment by electrochemical pumping using solid lithium electrolytes. *Journal of the Ceramic Society of Japan*, May 2018, vol. 126 (5), 331-335